# EUROPÄISCHE PATENTSCHRIFT

(11) **EP 0 817 738 B1**
(45) Veröffentlichungstag und Bekanntmachung des Hinweises auf die Patenterteilung: **28.02.2001**
(21) Anmeldenummer: 96931753.6
(22) Anmeldetag: 16.08.1996
(51) Int. Cl.: B60T 8/48, B60T 8/24

(54) **HYDRAULISCHE FAHRZEUGBREMSANLAGE**
HYDRAULIC VEHICLE BRAKE SYSTEM
SYSTEME DE FREINAGE HYDRAULIQUE POUR VEHICULE

(30) Priorität: 25.11.1995 DE 19543961; 17.05.1996 DE 19619985
(43) Veröffentlichungstag der Anmeldung: 14.01.1998
(73) Patentinhaber: ROBERT BOSCH GMBH, 70442 Stuttgart (DE)
(72) Erfinder: PAHL, Arnold, D-71706 Markgröningen (DE); JONNER, Wolf-Dieter, D-71717 Beilstein (DE); ALAZE, Norbert, D-71706 Markgröningen (DE); PÜSCHEL, Helmut, D-71672 Marbach (DE); ISELLA, Thomas, D-71706 Markgröningen (DE); SCHMIDT, Günther, D-97941 Tauberbischofsheim (DE); WILLMANN, Karl-Heinz, D-71691 Freiberg (DE); HUMMEL, Rolf, D-71144 Steinenbronn (DE); MÜLLER, Elmar, D-71706 Markgröningen (DE); HERR, Johann, D-71665 Vaihingen (DE); HOLZMANN, Roland, D-71696 Möglingen (DE); DZIERZAWA, Günter, D-71334 Waiblingen (DE); MÖHLE, Martin, D-71711 Steinheim (DE); KRENZ, Günter, D-71711 Steinheim (DE); MANK, Erika, D-71634 Ludwigsburg (DE); HERDERICH, Hans-Jürgen, D-71394 Kernen (DE)
(86) Internationale Anmeldenummer: DE9601524
(87) Internationale Veröffentlichungsnummer: WO9721570

(56) Entgegenhaltungen:
- EP-A- 0 482 367
- EP-A- 0 566 344
- WO-A-97/15481
- DE-A- 1 553 082
- DE-A- 3 337 545
- DE-A- 3 831 426
- DE-A- 4 035 462
- DE-A- 4 125 843
- DE-A- 4 213 710
- DE-A- 4 213 740
- DE-A- 4 226 646
- DE-A- 4 445 401
- DE-C- 4 232 311
- PATENT ABSTRACTS OF JAPAN vol. 95, no. 003 & JP 07 061261 A (MAZDA MOTOR CORP), 7.März 1995,

## Beschreibung

### Stand der Technik

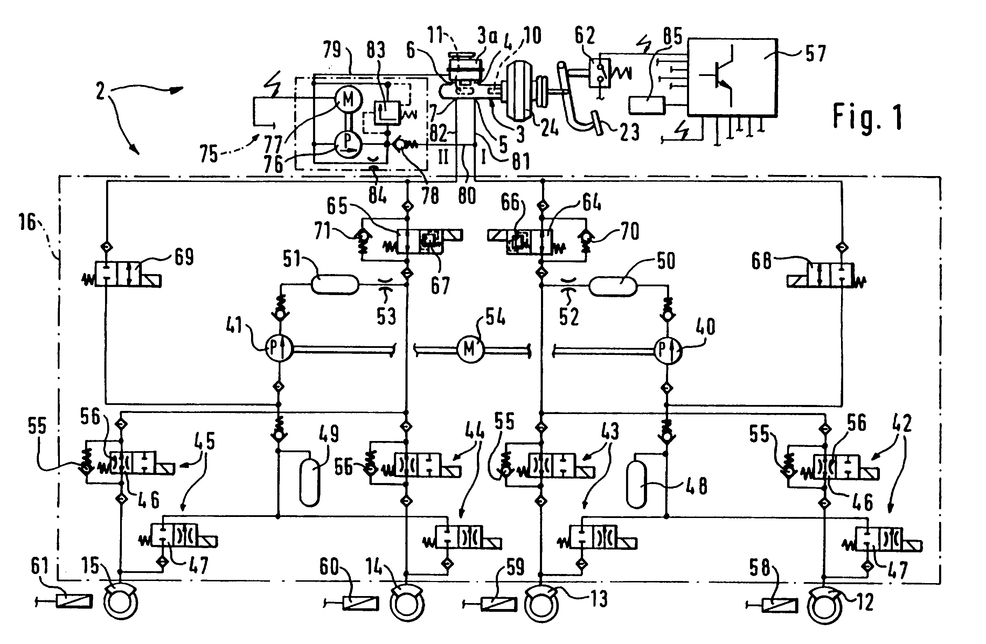

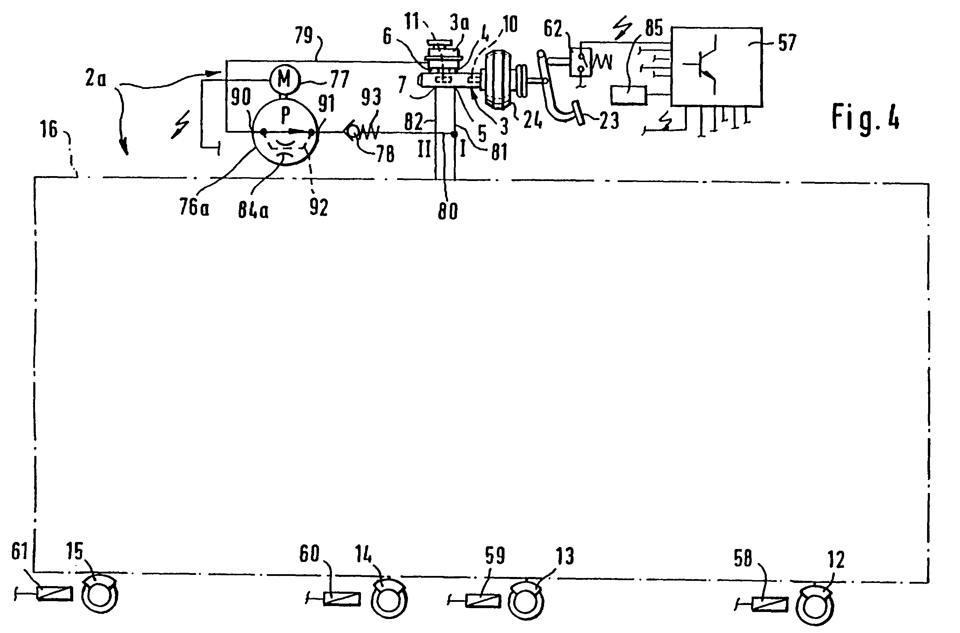

Durch die Figuren 1 und 4 der Druckschrift DE 44 45 401 A1 ist eine hydraulische Fahrzeugbremsanlage bekannt mit einem Hauptbremszylinder, der ein Gehäuse und in diesem eine Bohrung hat, in der ein erster Kolben verschiebbar ist in Abhängigkeit vom Niedertreten eines Bremspedals und in der ein zweiter Kolben verschiebbar auf der zum Bremspedal entgegengesetzten Seite des ersten Kolbens angeordnet ist, wobei der erste Kolben und der zweite Kolben zwischen sich eine erste Druckkammer abgrenzen, die mit einem an dem Gehäuse ausgebildeten ersten Anschluß sowie einem zweiten Anschluß in Verbindung ist, wobei der zweite Kolben an seiner zur ersten Druckkammer entgegengesetzten Seite eine zweite Druckkammer abgrenzt, die mit einem dritten an dem Gehäuse ausgebildeten Anschluß sowie einem vierten Anschluß in Verbindung ist, und der erste Kolben die Verbindung zwischen dem ersten Anschluß sowie der ersten Druckkammer und der zweite Kolben die Verbindung zwischen dem dritten Anschluß sowie der zweiten Druckkammer - jeweils bei niedergetretenem Bremspedal - absperren, mit einem Vorratsbehälter zur Speicherung von Druckmittel, wobei der Vorratsbehälter mit dem dritten Anschluß des Hauptbremszylinders in Verbindung steht, mit einer Ventilanordnung zum Öffnen oder Verschließen der Verbindung zwischen dem ersten Anschluß des Hauptbremszylinders und dem Vorratsbehälter, mit einer Pumpeinrichtung, die einen mit dem Vorratsbehälter verbundenen Sauganschluß und einen mit dem zweiten Anschluß des Hauptbremszylinders verbundenen Druckanschluß besitzt sowie das Druckmittel aus dem Vorratsbehälter ansaugt und dieses zum zweiten Anschluß fördert, mit einer Mehrzahl von Radbremszylindern für zugeordnete Räder, um diese Räder zu bremsen, und die in eine erste Gruppe von Radbremszylindern sowie eine zweite Gruppe von Radbremszylindern unterteilt sind, mit ersten Bremsdruckmodulationsvorrichtungen, die zwischen dem zweiten Anschluß des Hauptbremszylinders sowie der ersten Gruppe von Radbremszylindern angeordnet sind, mit zweiten Bremsdruckmodulationsvorrichtungen, die zwischen dem vierten Anschluß des Hauptbremszylinders sowie der zweiten Gruppe von Radbremszylindern angeordnet sind, und mit einem Steuergerät, um die Ventilanordnung zum Öffnen oder Schließen der Verbindung zwischen dem ersten Anschluß des Hauptbremszylinders und dem Vorratsbehälter in Übereinstimmung mit einer aus einer Öffnungsbetriebsart und einer Schließbetriebsart gewählten Betriebsart zu betätigen. Die Pumpeinrichtung ist dabei ausgebildet als eine Hochdruckpumpe, deren Förderdruck mittels eines Druckbegrenzungsventils begrenzt wird auf einen Druck, der wenigstens so hoch ist wie ein höchster wenigstens einem Radbremszylinder zuzuführender Bremsdruck. Dadurch ist diese hydraulische Fahrzeugbremsanlage dazu geeignet, ohne Betätigung des Bremspedals Bremsdrücke zu erzeugen zur Traktionskontrolle, die auch bekannt ist unter dem Namen Antriebsschlupfregelung, durch bedingtes Bremsen von wenigstens einem antreibbaren Rad. Die hydraulische Fahrzeugbremsanlage gemäß den Figuren 1 und 4 hat den Nachteil, daß sie außer für normales Bremsen per Bremspedalbetätigung nur noch für den Antriebschlupfregelbetrieb eingerichtet ist und daß der von dieser Pumpeinrichtung lieferbare hohe Druck am Hauptbremszylinder einen ersten Anschluß benötigt, der diesen hohen Druck aushält. Demgemäß kann kein normaler Hauptbremszylinder verwendet werden mit den bekannten Anschlüssen, in die als Verbindungselemente zu dem jeweiligen Vorratsbehälter lediglich elastische Gummiringe eingelegt sind. Anstelle der Verbindung über einen solchen elastischen Gummiring müßte beispielsweise eine Schraubverbindung vorgesehen werden, die beispielsweise identisch ist mit Schraubverbindungen für den zweiten Anschluß und den vierten Anschluß. Vorteilhaft ist aber, daß die Pumpeinrichtung durch den zweiten Anschluß in der ersten Druckkammer einen Druck aufbaut, der mittels des zweiten Kolbens auch in der zweiten Druckkammer zu einem Druckanstieg führt, der durch den vierten Anschluß hindurch den zweiten Bremsdruckmodulationsvorrichtungen zur Verfügung steht. Es wird also lediglich - ausgehend von einem Ausgang der Pumpeinrichtung - eine hydraulische Verbindung zum Hauptbremszylinder benötigt.

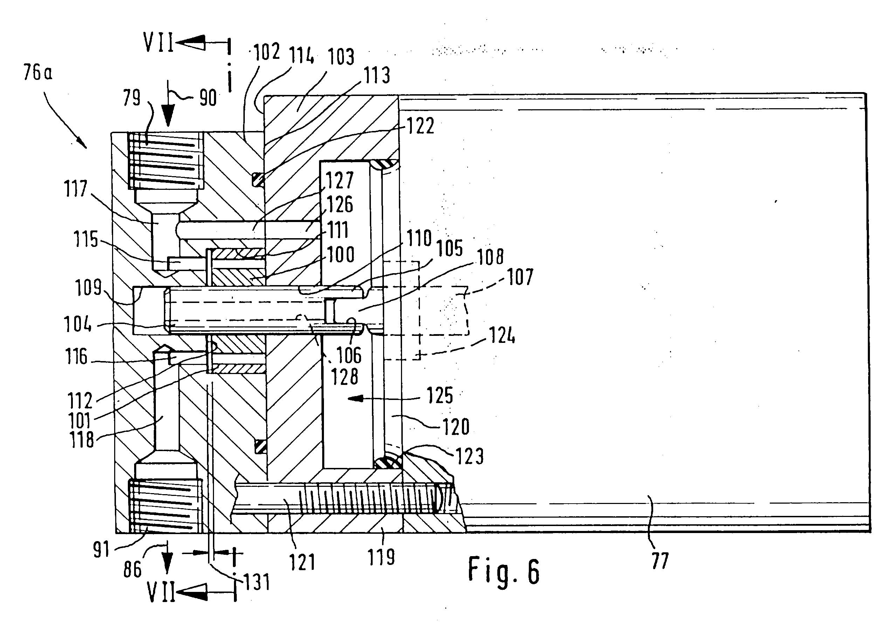

Eine durch die Figur 5 der DE 4445401 A1 bekannte weitere hydraulische Fahrzeugbremsanlage verzichtet auf die in der voranstehend beschriebenen Fahrzeugbremsanlage vorhandene Pumpeinrichtung durch Verwendung von sogenannten Rückförderpumpen einer Blockierschutzeinrichtung, wobei die dem zweiten Anschluß des Hauptbremszylinders zugeordnete Rückförderpumpe sich durch eine Saugleitung, in die ein normal sperrendes, elektrisch steuerbares 2/2-Wegeventil eingebaut ist, selbst aus dem Vorratsbehälter mit Druckmittel versorgt. Dies hat jedoch den Nachteil, daß eine Fehlsteuerung oder ein Defekt dieses 2/2-Wegeventils zu einer Öffnung des vom zweiten Anschluß des Hauptbremszylinders ausgehenden Bremskreises führt mit der Folge, daß während der Durchführung von Blockierschutzbetrieb Druckmittel zum Vorratsbehälter entweichen und das Bremspedal tiefer gehen kann. Erkennbar kann dies dazu führen, daß eine an sich vorhandene Hubreserve des ersten Kolbens aufgezehrt wird mit dem Verlust von Bremsleistung. Nachteilig ist des weiteren, daß sich diese Rückförderpumpe durch die genannte Saugleitung und das genannte 2/2-Wegeventil nur unvollkommen mit Druckmittel selbst versorgt, wenn dieses Druckmittel beispielsweise bei winterlichen Temperaturen zähflüssig ist oder bei sommerlichen Temperaturen eine Dampfblasenbildung in Folge von Sogwirkung nicht ausschließbar ist. Mangelhafte Füllung dieser sich selbst versorgenden Rückförderpumpe führt natürlich zu mangelhafter Pumpleistung und demzufolge zu nachteilig langsamem Bremsdruckanstieg oder ungenügendem Bremsdruckanstieg. Langsamer Bremsdruckanstieg im Antriebsregelschlupfbetrieb ist insbesondere über Glatteis oder Schnee nachteilig.

Eine durch die Druckschrift DE 4226646 A1 bekannte Fahrzeugbremsanlage ist eingerichtet zur Vermeidung von Radblockiergefahr beim Bremsen und auch zum automatischen Bremsen, beispielsweise zur Antriebsschlupfregelung, zur Bremskraftverteilung zwischen Vorderradbremsen und Hinterradbremsen oder/und zum individuellen Bremsen wenigstens eines der Fahrzeugräder zum Zwecke des Stabilisierens des Fahrzeugs bei Übersteuerungstendenz, zum Zwecke der Erhaltung der Lenkbarkeit des Fahrzeugs bei Untersteuertendenz, zum Zwecke der fahrdynamisch bestmöglichen Einhaltung der durch den Lenkwinkel vorgegebenen Bahnkurve der Fahrzeugbewegung dadurch, daß bei auftretender Über- und Untersteuertendenz bzw. Abweichung von der vorgegebenen Bahnkurve diese korrigiert wird durch Bremsen oder verstärktes Bremsen wenigstens eines Rades. Diese Fahrzeugbremsanlage besitzt ebenfalls einen Hauptbremszylinder mit vier Anschlüssen, einen Vorratsbehälter, zwei an den Hauptbremszylinder angeschlossene Bremskreise für mehrere Radbremszylinder von mehreren Rädern und dazwischen Bremsdruckmodulationseinrichtungen mit Wegeventilen und je Bremskreis eine Pumpe, die im Betrieb zur Radblockiergefahrverminderung arbeitet oder im automatischen Bremsbetrieb Drücke liefert wenigstens in einer zum Bremsen ausreichenden Höhe, wobei für automatisches Bremsen zwischen Druckausgängen dieser Pumpen und den jeweiligen Anschlüssen des Hauptbremszylinders Ventilanordnungen vorgesehen sind, die zum automatischen Bremsen aus ihren Grundstellungen in Steuerstellungen gesteuert werden, damit Druckmittelmengen aus diesen Pumpen nur dann zum Hauptbremszylinder abströmen, wenn projektierte Drücke erreicht sind. Die genannten Ventilanordnungen besitzen also einerseits die Funktion eines für das normale Bremsen durchgängigen Wegeventils und andererseits die Funktion eines die jeweilge Pumpe vor Überlastung schützenden Sicherheitsventils. Eingänge der beiden Pumpen werden durch elektrisch steuerbare Wegeventile hindurch von einer gemeinsamen Ladepumpeneinheit mit Druckmittel aus dem Vorratsbehälter des Hauptbremszylinders versorgt. Hierfür liefert die Ladepumpeneinheit beispielsweise einen Druck in der Größenordnung von 5 bar. Zu der Ladepurnpeneinheit gehören eine Ladepumpe, ein an deren Ausgang angeschlossenes Druckbegrenzungsventil und noch eine an diesen Ausgang angeschlossene Drossel, die mit dem Vorratsbehälter und also auch einem Eingang der Ladepumpe kommuniziert. Vorteilhaft ist, daß die Ladepumpe lediglich einen Druck in der genannten Größenordnung von 5 bar zu erzeugen braucht, deshalb wenig Geräusch erzeugt, wenig Antriebsleistung aufnimmt und dementsprechend preisgünstig ist. Als nachteilig kann angesehen werden, daß bei mangelhaft gefülltem Vorratsbehälter und unter Beschleunigungseinwirkung oder aber bei verschäumtem Druckmittel die Ladepumpe Luft ansaugt und gegebenenfalls Teilmengen dieser angesaugten Luft in beide Pumpen und somit beide Bremskreise drückt, was dort Volumenelastizitäten zur Folge haben würde. Solche Volumenelastizitäten können bekanntermaßen mangelnde Bremswirkung verursachen.

Durch das Dokument DE 42 13 710 A ist eine die Gattung bildende hydraulische Fahrzeugbremsanlage bekannt zum Bremsen per Bremspedalbetätigung und zum automatischen Bremsen, mit einem Hauptbremszylinder, der ein Gehäuse, in diesem eine Bohrung und in der Bohrung einen ersten verschiebbaren Kolben, der in Abhängigkeit vom Niedertreten des Bremspedals verschiebbar ist, einen zweiten Kolben auf der zum Bremspedal entgegengesetzten Seite des ersten Kolbens, zwischen dem ersten und dem zweiten Kolben eine erste Druckkammer, die mit einem am Gehäuse ausgebildeten ersten Anschluß oben sowie einem zweiten Anschluß unten in Verbindung ist, und an den zweiten Kolben angrenzend an seiner zur ersten Druckkammer entgegengesetzten Seite eine zweite Druckkammer mit einem an dem Gehäuse ausgebildeten dritten Anschluß oben und einem vierten Anschluß unten hat, wobei bei getretenem Bremspedal zwischen dem ersten und dem zweiten Anschluß sowie zwischen dem dritten und dem vierten Anschluß keine hydraulische Verbindung besteht, mit einem Vorratsbehälter für Druckmittel, wobei der Vorratsbehälter dem ersten und dem dritten Anschluß des Hauptbremszylinders zugeordnet ist, mit einer als Niederdruckpumpe ausgebildeten Pumpeinrichtung, die einen mit dem Vorratsbehälter verbundenen Sauganschluß und einen mit einem Bremskreis ständig verbundenen Druckanschluß besitzt zum Ansaugen von Druckmittel aus dem Vorratsbehälter und zum Fördern in den einen Bremskreis, mit einer Mehrzahl von Radbremszylindern für zugeordnete Räder, die in eine erste Gruppe und eine zweite Gruppe unterteilt sind, mit ersten Bremsdruckmodulationsventil-Anordnungen, die zwischen dem zweiten Anschluß des Hauptbremszylinders sowie der ersten Gruppe von Radbremszylindern angeordnet sind, mit zweiten Bremsdruckmodulationsventil-Anordnungen, die zwischen dem vierten Anschluß des Hauptbremszylinders sowie der zweiten Gruppe von Radbremszylindern angeordnet sind, und mit einem Steuergerät zur Durchführung von automatischem Bremsbetrieb mit Einschalten der Pumpeinrichtung und mit je Bremskreis einem von dem Steuergerät steuerbaren Umschaltventil zwischen dem Hauptbremszylinder und den Bremsdruckmodulationsventil-Anordnungen zum automatischen Bremsen, wobei den ersten und den zweiten Bremsdruckmodulationsvventilanordnungen für den Blockschutzbetrieb einschaltbare Rückförderpumpen zugeordnet sind, wobei die Rückförderpumpen mit ihren Saugseiten durch Wegeventile hindurch an den zweiten Anschluß und den vierten Anschluß des Hauptbremszylinders anschließbar sind. Hierbei sind die Rückförderpumpen als selbstansaugende, also als sich selbst ladende Kolbenpumpen ausgebildet. Es ist auch möglich, Vorladepumpen zusätzlich einzubauen, wodurch es erlaubt ist, die Rückförderpumpen als Freikolbenpumpen auszubilden. Insoweit ist jeder Rückförderpumpe eine eigene Vorladepumpe zugeordnet. Die Vorladepumpen sind als Niederdruckpumpen ausgebildet und versorgen sich aus dem Vorratsbehälter des Hauptbremszylinders. Die Vorladepumpen drücken zuvor aus dem Vorratsbehälter angesaugtes Druckmittel durch Vorladeleitungen, die an einem die Rückförderpumpen und Bremsdruckmodulationsventil-Anordnungen aufnehmenden Hydraulikblock enden und dabei zusätzlich zu von dem Hauptbremszylinder hin zum Hydraulikblock verlaufenden Hauptbremsleitungen angeordnet sind. Jeder Vorladepumpe ist ein deren Druck begrenzendes, beispielsweise mittels einer Feder belastetes Sicherheitsventil zugeordnet. Die einzige Figur des Dokumentes des DE 42 13 710 A zeigt nur eine der beiden gemäß der Beschreibung gemeinten Vorladepumpen. Für beide Vorladepumpen und beide Sicherheitsventile und auch für die beiden Vorladeleitungen ist ein hoher technischer Aufwand nötig. Daraus ableitbar ist die Aufgabe, den technischen Aufwand zu vermindern.

Aus dem nach veröffentlichten Dokument WO 97/15481A ist eine hydraulische Fahrzeugbremsanlage zum Bremsen per Bremspedalbetätigung und zum automatischen Bremsen mit einem Hauptbremszylinder bekannt, der ein Gehäuse, in diesem eine Bohrung und in der Bohrung einen ersten verschiebbaren Kolben, der in Abhängigkeit vom Niedertreten eines Bremspedals verschiebbar ist, einen zweiten Kolben auf der zum Bremspedal entgegengesetzten Seite des ersten Kolbens, zwischen dem ersten und dem zweiten Kolben eine erste Druckkammer, die mit einem am Gehäuse ausgebildeten ersten Anschluß oben sowie einem zweiten Anschluß unten in Verbindung ist, und ein an dem zweiten Kolben angrenzend an seiner zur ersten Druckkammer entgegengesetzten Seite eine zweite Druckkammer mit einem an dem Gehäuse ausgebildeten dritten Anschluß oben und einem vierten Anschluß unten hat, wobei bei getretenem Bremspedal zwischen dem ersten und dem zweiten Anschluß sowie zwischen dem dritten und dem vierten Anschluß keine hydraulische Verbindung besteht, mit einem Vorratsbehälter für Druckmittel, wobei der Vorratsbehälter dem ersten und dem dritten Anschluß des Hauptbremszylinders zugeordnet ist, mit einer als Niederdruckpumpe ausgebildeten Pumpeinrichtung, die einen mit dem Vorratsbehälter verbundenen Sauganschluß und einen mit einem Bremskreis ständig verbundenen Druckanschluß besitzt zum Ansaugen von Druckmittel aus dem Vorratsbehälter und zum Fördern in den einen Bremskreis, mit einer Mehrzahl von Radbremszylindern für zugeordnete Räder, die in eine erste Gruppe und in eine zweite Gruppe unterteilt sind, mit ersten Bremsdruckmodulationsventilanordnungen, die zwischen dem zweiten Anschluß des Hauptbremszylinders sowie der ersten Gruppe von Radbremszylindern angeordnet sind, mit zweiten Bremsdruckmodulationsventilanordnungen, die zwischen dem vierten Anschluß des Hauptbremszylinders sowie der zweiten Gruppe von Hauptbremszylindern angeordnet sind, und mit einem Steuergerät zur Durchführung von automatischem Bremsbetrieb mit Einschalten der Pumpeinrichtung und mit je Bremskreis einem von dem Steuergerät steuerbaren Umschaltventil zwischen dem Hauptbremszylinder und den Bremsdruckmodulationsventilanordnungen zum automatischen Bremsen, wobei den ersten und den zweiten Bremsdruckmodulationsventilanordnungen für den Blockierschutzbetrieb einschaltbare Rückförderpumpen zugeordnet sind, wobei die Rückförderpumpen mit ihren Saugseiten durch Wegeventile hindurch an den zweiten Anschluß und den vierten Anschluß des Hauptbremszylinders anschließbar sind, wobei der Druckanschluß der Pumpeinrichtung, die nur eine einzige Niederdruckpumpe aufweist, zwischen dem zweiten Anschluß des Hauptbremszylinders und dem diesen zugeordneten Umschaltventil mit dem dem zweiten Anschluß zugeordneten Bremskreis stetig verbunden ist und wobei in den Hauptbremszylinder zwischen seinem zweiten Anschluß und dem Vorratsbehälter eine Drossel-Rückschlagventil-Anordnung eingebaut ist, der der Drossel bei nichtbetätigtem Bremspedal im automatischen Bremsbetrieb eine strömungsbehindernde Engstelle bildet, derart, daß bei eingeschalteter Pumpeinrichtung der Rückförderpumpe des stetig mit der einzigen Niederdruckpumpe verbundenen Bremskreises Ladedruck zur Verfügung steht und auch zusätzlich der Rückförderpumpe des dem vierten Anschluß des Hauptbremszylinders zugeordneten Bremskreisladedruck durch Beaufschlagung des zweiten Kolbens mit vor der strömungsbehindernden Engstelle angestautem Druck mittelbar zur Verfügung steht. Dabei ist die Drossel-Rückschlagventil-Anordnung in Reihe geschaltet angeordnet zu einem Zentralventil des ersten Kolbens oder eingebaut in einen vom ersten Anschluß des Hauptbremszylinders geneigt nach unten verlaufenden Druckmittelzuführkanal zum Zuleiten von Druckmittel aus dem Vorratsbehälter gegen eine pedalseitige Stirnseite des ersten Kolbens und damit zum Zentralventil oder die Drossel-Rückschlagventil-Kombination ist in einer Patrone zusammengefaßt, die in einen Anschlußstutzen des Vorratsbehälters eingebaut wird, wobei dieser Stutzen in den ersten Anschluß des Hauptbremszylinders einsteckbar ist, oder es ist der Vorratsbehälter in einem Abstand über dem Hauptbremszylinder angeordnet und dazwischen ein in den ersten Anschluß des Hauptbremszylinders einsteckbarer Adapter vorgesehen, der in seinem in den ersten Anschluß des Hauptbremszylinders einsteckbaren Stutzen eine Drossel und ein Rückschlagventil aufweist und oben mit einem Anschluß zum Einstecken des Vorratsbehälters versehen ist und desweiteren dazwischen für einen Eingang der Niederdruckpumpe einen seitlichen ersten Anschluß und gegenüberliegend und dabei einen mit dem in den ersten Anschluß des ersten Hauptbremszylinders einsteckbaren Stutzen kommunizierenden zweiten seitlichen Anschluß aufweist, der mit einem druckseitigen Ausgang der Vorladepumpe verbunden ist. Mittels der an unterschiedlichen Positionen einbaubaren Drossel entsteht dank des Förderstroms bei eingeschalteter Vorladepumpe ein Vorladedruck zur unmittelbaren Versorgung der ersten Rückförderpumpe und zur mittelbaren Versorgung der zweiten Rückförderpumpe. Das Rückschlagventil bildet einen richtungsabhängigen Bypass um die Drossel und begünstigt dieserart den Zufluß von Druckmittel aus dem Vorratsbehälter in den Hauptbremszylinder bzw. durch dessen zweiten Anschluß hin in Richtung zu dem zweiten Anschluß zugeordneten Radbremsen. Für diese hydraulische und dabei zum automatischen Bremsen eingerichtete Fahrzeugbremsanlage mit Vorladepumpe ist also gemäß der nachveröffentlichten Druckschrift WO 97/15481A anstelle eines herkömmlichen Hauptbremszylinders ein irgendwie durch zusätzlichen Einbau einer Drossel-Rückschlagventil-Kombination weitergebildeter Hauptbremszylinder zu verwenden.

### Vorteile der Erfindung

Die hydraulische Fahrzeugbremsanlage mit den kennzeichnenden Merkmalen des Anspruchs 1 hat den Vorteil, daß die Versorgung der Bremskreise für den automatischen Bremsbetrieb mittels einer einzigen lediglich niedrigen Druck liefernden Ladepumpe erreicht wird. Dementsprechend ist weniger technischer Aufwandnötig als für eine hydraulische Fahrzeugbremsanlage gemäß der DE 4 213 710 A mit je Bremskreis einer Ladepumpe und einem jeweils zugeordneten Sicherheitsventil. Ein weiterer Vorteil besteht darin, daß ein üblicher Hauptbremszylinder mit üblichen Steckanschlüssen für den ersten Anschluß und den dritten Anschluß verwendbar ist. Demzufolge ist auch ein serienmäßiger Vorratsbehälter für den Hauptbremszylinder verwendbar. Weil solche serienmäßigen Vorratsbehälter und Hauptbremszylinder in einfacher Weise schnell zusammensteckbar sind, ergibt sich auch ein Preisvorteil gegenüber derjenigen Konstruktion, die für die Fahrzeugbremsanlage der DE 44 45 401 A1 notwendig ist. Ein weiterer Vorteil besteht darin, daß, wie sich bereits aus der Vorteilsnennung ergibt, der Vorratsbehälter direkt mit dem Hauptbremszylinder zusammengesteckt ist, so daß entgegen dem Vorschlag der DE 44 45 401 A1 keine zusätzliche Bauhöhe beansprucht wird. Des weiteren ist ein Hydroaggregat, also eine Anordnung von Ventilen und Pumpen, eines bereits existierenden Typs, wie er in der DE 42 32 311 C1 beschrieben ist, verwendbar. Dies spart Entwicklungskosten und verbilligt die Fertigung des Hydroaggregates und die Bereitstellung von Ersatzteilen durch Weiterbenützung vorhandener Fertigungsmittel.

Durch die in den Ansprüchen 2 bis 13 aufgeführten Maßnahmen sind vorteilhafte Weiterbildungen und Verbesserungen der im Anspruch 1 angegebenen Fahrzeugbremsanlage möglich. Die kennzeichnenden Merkmale des Anspruchs 5 ergeben eine vorteilhaft preisgünstige Art der Bereitstellung von Niederdruck für die erfindungsgemäße Fahrzeugbremsanlage, denn durch die kennzeichnenden Merkmale des Anspruchs 5 kann auf den technischen Aufwand für ein der Pumpe nachgeordnetes Ladedruckbegrenzungsventil verzichtet werden, und auch ein technischer Aufwand für einen den Pumpenausgang mit dem Pumpeneingang außerhalb der Pumpe verbindenden Rückströmkanal mit eingebauter Drossel kann zumindest teilweise eingespart werden. Die kennzeichnenden Merkmale des Anspruchs 6 geben ein Ausführungsbeispiel an, das auf die Gattung "Zahnradpumpen" aufbaut und den technischen Aufwand für den wenigstens einen Rückströmkanal, der als eine Drossel bemessen ist, niedrig hält. Die kennzeichnenden Merkmale des Anspruchs 7 ergeben ein Ausführungsbeispiel mit einer sogenannten Innenzahnringpumpe, die auch unter dem Namen Gerotorpumpe bekannt ist. Die kennzeichnenden Merkmale des Anspruchs 8 geben ein Ausführungsbeispiel an für ein in der erfindungsgemäßen Fahrzeugbremsanlage benötigtes Ventil, das nur in einer Richtung durchströmbar sein darf. Die kennzeichnenden Merkmale des Anspruchs 9 ergeben ebenfalls ein Ausführungsbeispiel für ein solches Ventil, wobei durch Verwendung einer eine Druckdifferenz bestimmenden Feder zwischen dem Ausgang der niederdruckerzeugenden Pumpe und der Rückförderpumpe ein solch hohes Druckgefälle entsteht, daß bei arbeitender oder stillstehender Niederdruckpumpe und bei gegebenenfalls in der Niederdruckpumpe vorhandener Luft diese nicht von einer selbstansaugenden Rückförderpumpe ansaugbar ist. Die Feder des Differenzdruckregelventils wird also so dimensioniert, daß bei stillstehender Niederdruckpumpe das in der Rückförderpumpe enthaltene Druckmittel beispielsweise zu Dampfblasenbildung neigen würde.

Die kennzeichnenden Merkmale des Anspruchs 10 geben eine preisgünstige Lösung an für die Zusammenfassung der erfindungsgemäßen Pumpe mit dem ihr zugeordneten Motor.

Gemäß Anspruch 11 ist die strömungsbehindernde Engstelle als in den ersten Anschluß des Hauptbremszylinders eingesetztes Drosselelement ausgebildet, das vorzugsweise von einem Anschlußflansch des Vorratsbehälters im ersten Anschluß gehalten ist. Auf diese Wiese läßt sich die strömungsbehindernde Engstelle mit minimalem Aufwand ohne jegliche Veränderung am Hauptbremszylinder, am Vorratsbehälter oder einem sonstigen Teil der Fahrzeugbremsanlage verwirklichen.

Bei einer Vorteilhaften Ausgestaltung der Erfindung gemäß Anspruch 12 ist die strömungsbehindernde Engstelle als an einer der ersten Druckkammer zugewandten Stirnseite des ersten Kolbens angebrachtes Drosselelement ausgebildet. Diese Ausgestaltung hat den Vorteil, daß das Drosselelement vor Manipulationen weitgehend geschützt im Innern des Hauptbremszylinders angeordnet ist.

Eine vorteilhafte Weiterbildung der Erfindung gemäß Anspruch 13 sieht ein parallel zur strömungsbehindernden Engstelle des Hauptbremszylinders geschaltetes Rückschlagventil vor, das sich insbesondere bei der Ausgestaltung gemäß Anspruch 11 einfach und damit preisgünstig zusammen mit dem Drosselelement herstellen läßt. Beim Befüllen der Fahrzeugbremsanlage wird das Rückschlagventil von Bremsflüssigkeit durchströmt, die Fahrzeugbremsanlage wird also parallel zur strömungsbehindernden Engstelle und infolgedessen mit geringem Strömungswiderstand befüllt. Die Befüllzeit wird verkürzt.

### Zeichnung

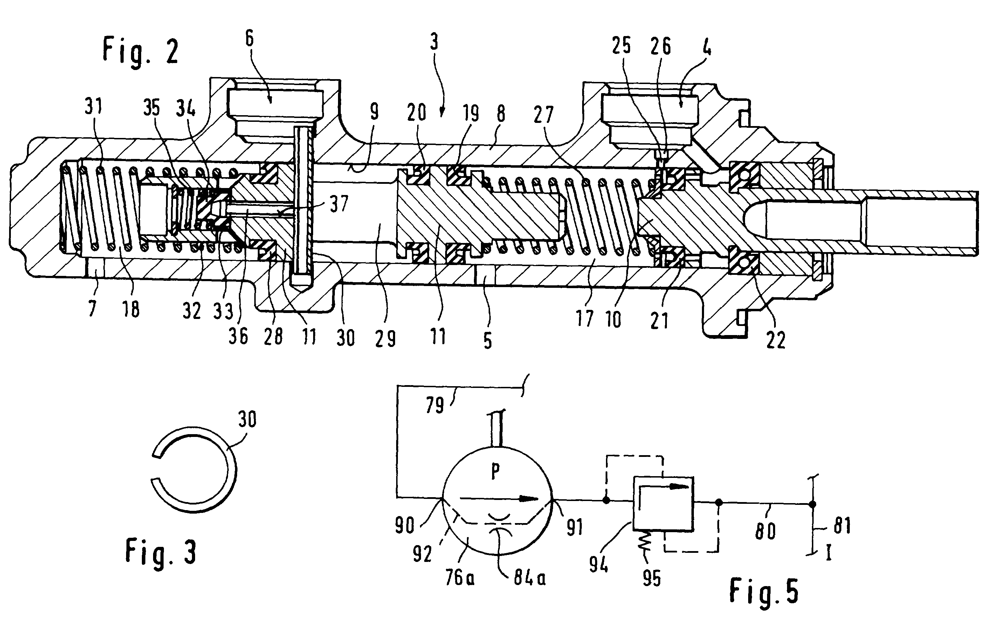

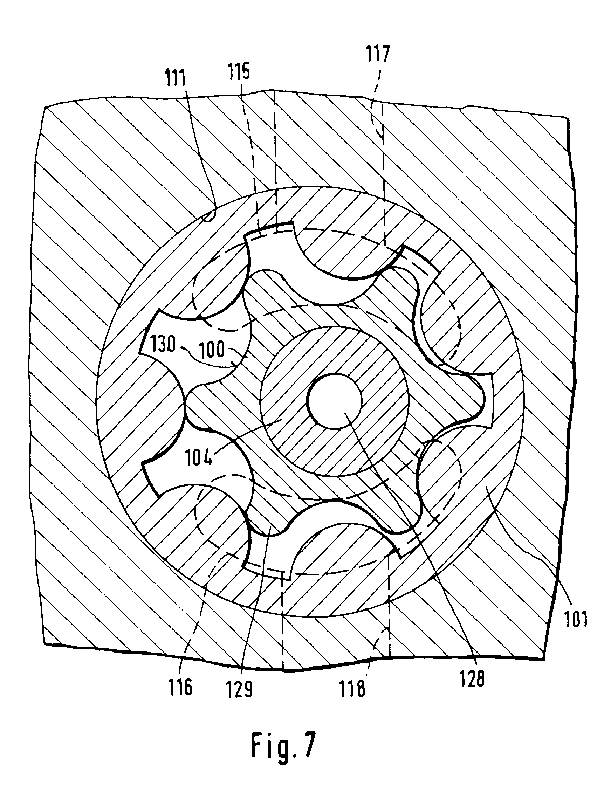

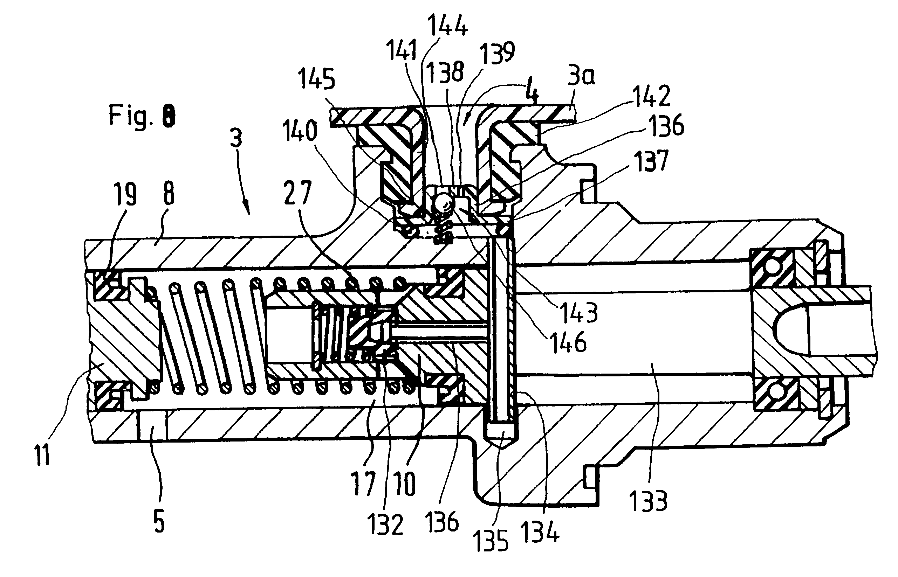

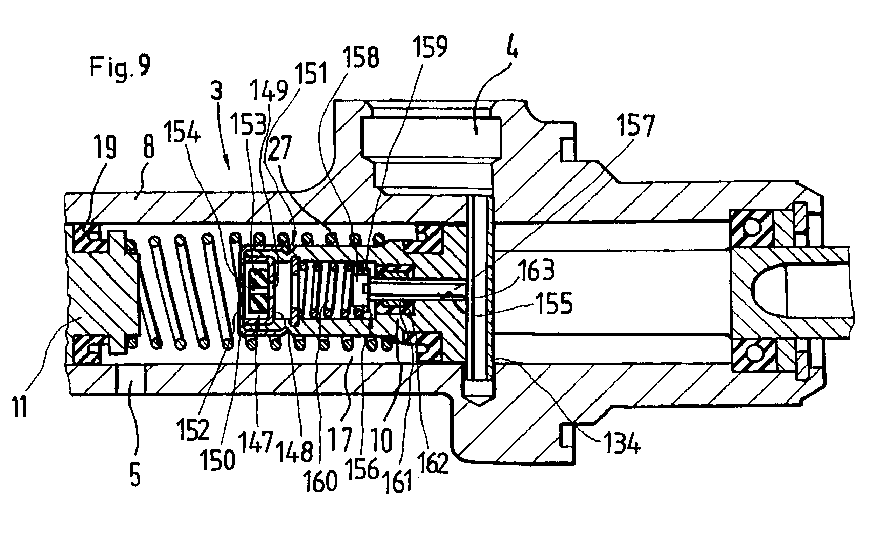

Ausführungsbeispiele der erfindungsgemäßen hydraulischen Fahrzeugbremsanlage sind in der Zeichnung dargestellt und nachfolgend näher beschrieben. Es zeigen die Figur 1 ein erstes Ausführungsbeispiel der erfindungsgemäßen Fahrzeugbremsanlage, Figur 2 einen Hauptbremszylinder der erfindungsgemäßen Fahrzeugbremsanlage im Längsschnitt, Figur 3 ein Detail des Hauptbremszylinders, Figur 4 ein weiteres Ausführungsbeispiel der erfindungsgemäßen Fahrzeugbremsanlage, Figur 5 eine Variante zum Ausführungsbeispiel der Figur 4, Figur 6 einen Längsschnitt durch eine Ladepumpe der erfindungsgemäßen Fahrzeugbremsanlage, Figur 7 ein Detail der Ladepumpe der Figur 6 im Querschnitt, Figur 8 eine abgewandelte Ausführungsform des in Figur 2 dargestellten Hauptbremszylinders im Bereich seines ersten Anschlusses gemäß der Erfindung und Figur 9 eine weitere, erfindungsgemäße Abwandlung des in Figur 2 dargestellten Hauptbremszylinders.

### Beschreibung der Ausführungsbeispiele

Die hydraulische Fahrzeugbremsanlage 2 gemäß der Figur 1 besitzt einen zweikreisigen Hauptbremszylinder 3 mit einem Vorratsbehälter 3a, mit einem ersten Anschluß 4, mit einem zweiten Anschluß 5, mit einem dritten Anschluß 6 und einem vierten Anschluß 7 sowie in einem Gehäuse 8 eine Bohrung 9, die in der Figur 2 dargestellt ist, und in dieser Bohrung 9 in Abhängigkeit vom Niedertreten des Bremspedals 23 verschiebbar einen ersten Kolben 10 und einen ebenfalls verschiebbaren zweiten Kolben 11, zwei Bremskreise I und II sowie den Bremskreisen I und II zugeordnete Radbremsen 12, 13, 14 und 15 mit jeweils wenigstens einem nicht dargestellten Radbremszylinder und zwischen dem Hauptbremszylinder 3 und den Radbremsen 12 bis 15 eine Blockierschutzeinrichtung 16, die zum automatischen Bremsen mittels wenigstens einer der Radbremsen 12 bis 15 weitergebildet ist.

Der Hauptbremszylinder 3 hat zwischen dem ersten Kolben 10 und dem zweiten Kolben 11 eine erste Druckkammer 17 und allein an den zweiten Kolben 11 angrenzend eine zweite Druckkammer 18. Zwei an dem zweiten Kolben 11 angebrachte Dichtmanschetten 19, 20 wirken in entgegengesetzten Richtungen und dichten die erste Druckkammer 17 und den dritten Anschluß 6 gegeneinander ab. Der erste Kolben 10 besitzt ebenfalls eine Dichtmanschette 21 und ist durch eine weitere Dichtmanschette 22 hindurch verschiebbar mittels eines Bremspedals 23 beispielsweise mit Unterstützung durch einen Bremskraftverstärker 24. Die Dichtmanschette 22 ist in dem Gehäuse 8 gehalten. Dem ersten Anschluß 4 zugeordnet besitzt der Hauptbremszylinder 3 beispielsweise eine in die Bohrung 9 mündende Schnüffelbohrung 25. Diese ist in an sich bekannter Weise so angeordnet, daß sie, wenn sich wie in der Figur 2 dargestellt der erste Kolben 10 in seiner Ausgangsstellung befindet, den ersten Anschluß 4 mit der ersten Druckkammer 17 verbindet. Dabei ist die Schnüffelbohrung 25 nahe bei der Dichtmanschette 22 angeordnet, so daß sie bei wenig Verschiebung des ersten Kolbens 10 von der Dichtmanschette 22 überfahren wird. Dabei wird die Schnüffelbohrung 25 hydraulisch von der ersten Druckkammer 17 getrennt. Wie in der Figur 2 dargestellt, hat die Schnüffelbohrung 25 einen relativ kleinen Durchmesser im Vergleich zu einer sich darüber befindenden Anschlußbohrung 26, die in den ersten Anschluß 4 mündet. Infolge des kleineren Durchmessers der Schnüffelbohrung 25 gegenüber der Anschlußbohrung 26 bildet die Schnüffelbohrung 25 die engste Stelle und also die am stärksten drosselnde Bohrung im Falle einer Durchströmung mit Druckmittel. Eine Rückstellfeder 27 bestimmt die Ausgangsstellung des ersten Kolbens 10. Hierbei stützt sich die Rückstellfeder 27 auf den zweiten Kolben 11 ab. Der zweite Kolben 11 besitzt ebenfalls eine Dichtmanschette 28 zum Abdichten der zweiten Druckkammer 18. In den zweiten Kolben 11 ist eine Ausnehmung 29 eingearbeitet, die sich nach Art eines Langloches in Längsrichtung des zweiten Kolbens 11 erstreckt. Quer zum zweiten Kolben 11 und dabei durch diese Ausnehmung 29 erstreckt sich ein hohles Anschlagelement 30. Dieses Anschlagelement 30 ruht beidendig in dem Gehäuse 8. Dabei ist das Anschlagelement 30 gemäß der Figur 3 mit einem C-förmigen Querschnitt derart ausgebildet, daß es den dritten Anschluß 6 hydraulisch mit der Bohrung 9 verbindet. Eine zweite Rückstellfeder 31 stützt sich in dem Gehäuse 8 ab und drückt den zweiten Kolben 11 in Richtung zum ersten Kolben 10 in eine Ausgangsstellung, die von dem Anschlagelement 30 bestimmt ist.

Innerhalb des zweiten Kolbens 11 befindet sich ein sogenanntes Zentralventil 32 mit einer Sitzfläche 33 am zweiten Kolben 11, mit einem gegen die Sitzfläche 33 anlegbaren elastischen Schließkörper 34, mit einer auf den Schließkörper 34 wirkenden Schließfeder 35, mit einem den Schließkörper 34 tragenden Steuerstößel 36 und mit einer in dem zweiten Kolben 11 befindlichen Längsbohrung 37, zu der der Steuerstößel 36 Radialspiel aufweist. In der in der Figur 2 gezeigten Ausgangsstellung des zweiten Kolbens 11 ist mittels der Schließfeder 35 auf dem Weg über den Schließkörper 34 der Steuerstößel 36 in Richtung des Anschlagelements 30 belastet und liegt an diesem an. Dabei hat der Schließkörper 34 von der Sitzfläche 33 einen axialen Abstand. Deshalb ist das Zentralventil 32 zwischen der Sitzfläche 33 und dem Schließkörper 34 sowie durch die Längsbohrung 37 um den Steuerstößel 36 herum für Druckmittel durchlässig. Infolgedessen kommuniziert die zweite Druckkammer 18 durch die Längsbohrung 37 hindurch mit der Ausnehmung 29 und dadurch auch durch das hohle Anschlagelement 30 hindurch mit dem dritten Anschluß 6. In der Praxis ist das Anschlagelement 30 ausgebildet als sogenannter Spannstift, also aus einem Element, das aus einem Streifen Federblech zu dem erwähnten C-förmigen Querschnitt geformt ist.

Erkennbar ist, daß die Längsbohrung 37 und der eingesteckte Steuerstößel 36 , je nach dem wie groß das erwähnte Radialspiel gewählt wird, einen Engpaß bilden, der beim Durchströmen nach Art einer Drossel wirkt. Ein zwischen der Sitzfläche 33 und dem Schließkörper 34 vorgewählter Abstand behindert ebenfalls eine Durchströmung und wirkt also nach Art einer Drossel. Durch Wahl eines kleinen Abstandes übernimmt das Zentralventil zusätzlich auch die Aufgabe einer Drossel. Der in der Figur 2 dargestellte Hauptbremszylinder 3 ist ein Erzeugnis der Firma Alfred Teves GmbH und wird eingesetzt in Bremsanlagen, die für Blockierschutzbetrieb oder/und Antriebsschlupfregelung eingerichtet sind.

Die Firma Alfred Teves GmbH liefert auch Hauptbremszylinder, bei denen in Abweichung von der Figur 2 auch der erste Kolben 10 mit einem Zentralventil der beschriebenen Art ausgerüstet ist. Zur Beschreibung der Erfindung wurde der Einfachheit halber eine Ausführung gemäß der Figur 2 ausgesucht, um nachzuweisen, daß Drosselwirkung zwischen den Anschlüssen 4 und 5 mit unterschiedlichen Mitteln erzeugbar ist. In den genannten Ausführungsbeispielen erfolgt Drosselwirkung unter Verwendung handelsüblicher Mittel.

Die Blockierschutzeinrichtung 16 ist beispielsweise eine der DE 42 32 311 C1 entnehmbare Blockierschutzeinrichtung des sogenannten Rückfördertyps und besitzt für den Bremskreis I eine Rückförderpumpe 40 und für den Bremskreis II eine Rückförderpumpe 41. Ferner besitzt die Blockierschutzeinrichtung 16 für jede der Radbremsen 12 bis 15 eine eigene Bremsdruckmodulationsventilanordnung 42, 43, 44 bzw. 45, bestehend aus jeweils einem Bremsdruckaufbauventil 46 und einem jeweiligen Bremsdruckabsenkventil 47, sowie für jeden Bremskreis I und II eine Speicherkammer 48 bzw. 49. Des weiteren sind beispielsweise eine erste Dämpferkammer 50 für den Bremskreis I und eine zweite Dämpferkammer 51 für den Bremskreis II sowie eine Dämpferdrossel 52 bzw. 53 vorgesehen. Ein Motor 54 ist als Antrieb den Rückförderpumpen 40 und 41 zugeordnet. Ausgehend von den Radbremsen 12 bis 15 sind die ihnen jeweils zugeordneten Bremsdruckaufbauventile 46 mittels Rückschlagventilen 55 in Richtung zum Hauptbremszylinder 3 umgehbar bei einem Druckgefälle um das jeweilige Bremsdruckaufbauventil 46. Beispielsweise sind die Bremsdruckaufbauventile 46 mit Drosseln 56 kombiniert.

Die normalerweise offen stehenden Bremsdruckaufbauventile 46 befinden sich zwischen den jeweiligen Radbremsen 12 bis 15 und dem Hauptbremszylinder 3, so daß durch Betätigung des Bremspedals 23 im Hauptbremszylinder 3 erzeugter Druck normalerweise in die Radbremsen 12 bis 15 gelangt. Jeweils ebenfalls mit den Radbremsen 12 bis 15 verbundene Bremsdruckabsenkventile 47 sind in der Normalstelllung geschlossen und ermöglichen in elektrisch gesteuerter Stellung einen drosselnden Durchlaß und sind mit der Rückförderpumpe 40 bzw. 41 des jeweiligen Bremskreises eingangsseitig und der Speicherkammer 48 bzw. 49 verbunden. Ausgangsseitig an die Rückförderpumpen 40 bzw. 41 schließen sich die Dämpferkammern 50 bzw. 51 an. In Richtung zum Hauptbremszylinder 3 sowie zu den jeweiligen Bremsdruckaufbauventilen 46 folgen die Drosseln 52 bzw. 53.

Zur Blockierschutzeinrichtung 16 gehört noch ein Steuergerät 57, das umrißhaft in der Figur 1 dargestellt ist, sowie die nicht dargestellten Räder, die mittels der Radbremsen 12 bis 15 bremsbar sind, zugeordnete Raddrehungssensoren 58 bis 61, an die das Steuergerät 57 angeschlossen ist. An das Steuergerät 57 sind zum einen die einzelnen Ventile 46 und 47 der Bremsdruckmodulationsventilanordnungen 42 bis 45 und andererseits der Motor 54 angeschlossen. Desweiteren kann beispielsweise im Bereich des Bremspedals 23 ein Bremspedalschalter 62 oder dergleichen angeordnet und mit dem Steuergerät 57 verbunden sein.

Bewirkt ein im Hauptbremszylinder 3 erzeugter Druck beispielsweise an dem der Radbremse 12 zugeordneten Rad eine Radblockiergefahr, so wird das zugeordnete Bremsdruckaufbauventil 46 geschlossen und je nach Größe der Radblockiergefahr das Bremsdruckabsenkventil 47 wenigstens eine Zeit lang geöffnet sowie der Motor 54 zum Antreiben der Rückförderpumpe 40 eingeschaltet. Die Folge davon ist, daß der Druck des Hauptbremszylinders 3 gegenüber der Radbremse 12 abgesperrt ist und aus der Radbremse 12 zur Speicherkammer 48 hin und zur Rückförderpumpe 40 hin Druckmittel abfließt und eine Bremsdruckabsenkung und damit eine Verringerung der Radblockiergefahr bewirkt. Das der Rückförderpumpe 40 zufließende Druckmittel wird von dieser durch die Dämpferkammer 50 und Dämpferdrossel 52 zum Hauptbremszylinderr 3 zurück gefördert. Ist die Radblockiergefahr ausreichend verringert, so wird das Bremsdruckabsenkventil 47 geschlossen und die Rückförderpumpe 40 entleert die Speicherkammer 48. Die Rückförderpumpe 40 sorgt also dafür, daß im Blockierschutzbetrieb aus einer Radbremse abgelassenes Druckmittel zur erneuten Bremsdruckerzeugung im Hauptbremszylinder 3 zur Verfügung steht.

Weil im Beispiel je Radbremse 12 bis 15 eine Bremsdruckmodulationsventilanordnung vorgesehen ist, ist das Steuergerät 57 vorzugsweise so eingerichtet, daß es bei unterschiedlichen Radblockiergefahren der einzelnen Räder deren zugeordnete Bremsdruckmodulationsventilanordnungen individuell steuert.

Zum automatischen Bremsen ist die Blockierschutzeinrichtung 16 zusätzlich ausgestattet mit einem Umschaltventil 64 für den Bremskreis I und einem weiteren Umschaltventil 65 für den Bremskreis II sowie mit Druckbegrenzungsventilen 66 und 67 und steuerbaren Wegeventilen 68 und 69. Dabei sind die Umschaltventile 65 und 66 zwischen den jeweiligen Drosseln 52 und 53 und dem Hauptbremszylinder 3 in die Bremskreise I und II eingebaut, wobei sich auch die Umschaltventile 64 und 65 zwischen dem Hauptbremszylinder 3 und den Bremsdruckmodulationsventilanordnungen 42, 43 bzw. 44, 45 befinden und letztere prinzipiell von den Rückförderpumpen 40 bzw. 41 durch die Drosseln 52 bzw. 53 hindurch mit Druckmittelmengen und dabei mit Druck versorgbar sind. Die Druckbegrenzungsventile 66 und 67 sind in diesem Beispiel in die Umschaltventile 64 und 65 integriert und beispielsweise gemäß dem bekannten Stand der Technik sind zu diesem Zweck die Umschaltventile 64 und 65 als elektromagnetisch betätigbare Sitzventile ausgebildet, wobei das Andrücken von Schließelementen auf Ventilsitze über druckbegrenzende Federn erfolgt. Die Kombinationen aus den Umschaltventilen 64, 65 und den Druckbegrenzungsventilen 66, 67 sind umgehbar mittels Rückschlagventilen 70 und 71, so daß dann, wenn auf automatischen Bremsbetrieb geschaltet ist, bei ausreichender Betätigung des Bremspedals 23 Druck aus dem Hauptbremszylinder 3 sich zu den Bremsdruckmodulationsventilanordnungen 42 bis 45 fortpflanzen kann. Die steuerbaren Wegeventile 68 und 69 sind beispielsweise als elektromagnetisch steuerbare 2/2-Wegeventile ausgebildet und zwischen dem zweiten Anschluß 5 des Hauptbremszylinders 3 und der Rückförderpumpe 40 auf deren Eingangsseite bzw. dem vierten Anschluß 7 des Hauptbremszylinders und der Rückförderpumpe 41, ebenfalls auf deren Eingangsseite, angeordnet. Die Wegeventile 68, 69 sind bei dieser elektromagnetischen Ausführung normalerweise geschlossen. Ein Öffnen dieser 2/2-Wegeventile 68, 69 bewirkt, daß die Rückförderpumpen 40, 41 durch diese 2/2-Wegeventile 68, 69 hindurch mit den Anschlüssen 5 und 7 des Hauptbremszylinders 3 kommunizieren. Werden die Rückförderpumpen 40 und 41 als sich selbst füllende Pumpen ausgebildet, so können sie je nach temperaturabhängiger Beschaffenheit des Druckmittels im Vorratsbehälter und den Bremskreisen I und II sich wenigstens teilweise selbst füllen.

Entsprechend der Weiterbildung der Blockierschutzeinrichtung 16 für automatischen Bremsbetrieb ist auch das Steuergerät 57 weitergebildet. Zu diesem Zweck ist es eingerichtet, um zum automatischen Bremsen den Motor 54 einzuschalten, innerhalb der Ventilkombinationen 64, 66 und 65, 67 die Druckbegrenzungsfunktion zu aktivieren und die Wegeventile 68, 69 zu öffnen. Infolgedessen können sich die Rückförderpumpen 40 und 41, sofern sie selbstsaugend ausgebildet sind, mit Druckmittel durch die Wegeventile 68 und 69 selbst versorgen und Druckmittel vor die Ventilkombinationen 64, 66 bzw. 65, 67, vor die Rückschlagventile 70 bzw. 71 und vor die diversen Bremsdruckmodulationsventilanordnungen 42 bis 45 drücken. Dabei ist die Geschwindigkeit von Druckanstiegen ausgangsseitig der Rückförderpumpen 40 bzw. 41 von der Hubfrequenz und davon abhängig, bis zu welchem Grad die Rückförderpumpen 40, 41 anläßlich von Füllhüben gefüllt sind.

Zur erfindungsgemäßen Verbesserung der Füllung der Rückförderpumpen 40 bzw. 41 ist der hydraulischen Fahrzeugbremsanlage 2 eine Pumpeinrichtung 75 zugeordnet. Im Ausführungsbeispiel enthält diese Pumpeinrichtung 75 eine Pumpe 76, einen Motor 77 und ausgangsseitig der Pumpe 76 ein Rückschlagventil 78. Eingangsseitig ist die Pumpe 76 mittels einer Saugleitung 79 und ausgangsseitig stromabwärts des Rückschlagventils 78 mit einer Ladedruckleitung 80 verbunden. Die Saugleitung 79 geht von einem Vorratsbehälter 3a oberhalb des Hauptbremszylinders 3 aus. Die Ladeleitung 80 mündet in eine Hauptbremsleitung 81, die für den Bremskreis I von dem Anschluß 5 des Hauptbremszylinders 3 ausgeht und zur Blockierschutzeinrichtung 16 führt. Der Bremskreis II besitzt eine Hauptbremsleitung 82, die vom vierten Anschluß 7 des Hauptbremszylinders ebenfalls zur Blockierschutzeinrichtung 16 führt. Beispielsweise kann gemäß der DE 42 32 311 C1 der Pumpe 76 ein Ladedruckbegrenzungsventil 83 nachgeordnet sein. Es kann auch eine Drossel 84 vorhanden sein, die zumindest die Eigenschaft bewirkt, daß bei ausgeschaltetem Motor 77 zwischen der Pumpe 76 und dem Rückschlagventil 78 kein Druck vorhanden sein kann bzw. verschwindet und somit selbst bei schwacher Betätigung des Bremspedals 23 erzeugter Druck im Schließ- und damit Abdichtsinn im Rückschlagventil 78 wirkt. Das Steuergerät 57 ist des weiteren so eingerichtet, daß es für automatisches Bremsen den Motor 77 einschaltet und dadurch die Pumpe 76 angetrieben wird.

Das Einschalten der Pumpe 76 hat zur Folge, daß Druckmittel durch das Rückschlagventil 78 und die Ladedruckleitung 80 hindurch in die Hauptbremsleitung 81 strömt und bedingungsabhängig auch einen Druckmittelstrom zur ersten Druckkammer 17 verursacht. Als Folge davon werden die erste Druckkammer 17 und auch die Schnüffelbohrung 25 durchströmt. Das Durchströmen der Schnüffelbohrung 25 bewirkt wegen deren engem und dadurch drosselnden Querschnitt eine Druckdifferenz zwischen der ersten Druckkammer 17 und dem Vorratsbehälter 3a des Hauptbremszylinders 3. Dieser mittels der Schnüffelbohrung 25 angestaute Druck wirkt treibend auf Druckmittel, das sich zwischen der Ladedruckleitung 80 und dem 2/2-Wegeventil 68 befindet. Durch Öffnen des Wegeventils 68 und Einschalten der Rückförderpumpe 40 entsteht ein Druckmittelstrom. Dieser angestaute Druck kann also das Füllen der Rückförderpumpe 40 zumindest unterstützen oder gar vollständig übernehmen, so daß im letzteren Fall die Rückförderpumpe 40 in einer für den Blockierschutzbetrieb ausreichenden Weise als Freikolbenpumpe ausbildbar ist.

Die Förderleistung der Pumpe 76 und der Querschnitt der Schnüffelbohrung 25 und, falls die Drossel 84 vorhanden ist, deren Querschnitt, sind so aufeinander abgestimmt, daß zumindest bei winterlichen Temperaturen in der ersten Druckkammer 17 des Hauptbremszylinders 3 ein Druck in der Größenordnung von beispielsweise 5 bis 10 bar angestaut wird. Ein solcher Druck reicht dann auch aus, bei Zähflüssigkeit des Druckmittels in der Hauptbremsleitung 81 und innerhalb der Blockierschutzeinrichtung 16 die theoretische Förderleistung der Rückförderpumpe 40, bestimmbar aus Hubfrequenz und Hubvolumen, vorteilhaft ausnutzbar zu machen.

In zur Erfindung gehörender Weise wird ein in der ersten Druckkammer 17 des Hauptbremszylinders 3 zur Verfügung stehender Druck auch dazu benützt,den zweiten Kolben 11 zu verschieben, dabei das Zentralventil 32 zu schließen und in der zweiten Druckkammer 18 Druck aufzubauen, derart, daß mit Druckmittel aus der zweiten Druckkammer 18 durch das bereits erwähnte 2/2-Wegeventil 69, das ebenfalls zu öffnen ist, auch die Rückförderpumpe 41 gut füllbar wird zum Erreichen hoher Förderleistung.

Einem beispielsweise eingebauten Ladedruckbegrenzungsventil 83 kommt die Aufgabe zu, bei niedriger, winterlicher Temperatur, wenn also das Druckmittel besonders zähflüssig ist, das Anstauen eines unerwünscht hohen Ladedruckes mittels der Schnüffelbohrung 25 zu begrenzen. Alternativ dazu ist es natürlich auch möglich, beispielsweise in einer in der DE 38 31 426 C2 angedeuteten Weise, mittels eines Mikroprozessors unerwünscht hohen Druck zu erkennen und dementsprechend auf den Pumpbetrieb einzuwirken. Man kann also beispielsweise den elektrischen Strom des Motors 77 begrenzen mit der Folge einer Druckbegrenzung in der ersten Druckkammer 17 des Hauptbremszylinders 3.

Bei sommerlichen Temperaturen, wenn also das Druckmittel dünnflüssig ist, wird die Schnüffelbohrung 25 weniger Druckanstieg erzeugen, aber es wird bei der genannten Dünnflüssigkeit des Druckmittels auch weniger Druckgefälle gebraucht für Strömungen zum Füllen der Rückförderpumpen 40 bzw. 41 während Füllhüben. Werden die Rückförderpumpen 40 und 41 als selbstansaugende Rückförderpumpen ausgebildet, so könnte man sogar durch Versuche ermitteln, ob man bei sommerlichen Temperaturen die Pumpe 76 ausgeschaltet lassen kann.

Das erwähnte automatische Bremsen kann beispielsweise automatisches Bremsen eines oder mehrerer mit Überschußdrehmoment angetriebener Räder sein zu dem Zweck, Antriebsschlupf auf einen günstigen Wertebereich zu beschränken. Das automatische Bremsen kann aber auch dazu dienen, so wie dies in der DE 42 32 311 C1 beschrieben ist, das Fahrverhalten eines mit der erfindungsgemäßen Fahrzeugbremsanlage ausgerüsteten Fahrzeugs zu verbesseren, insbesondere beim Durchfahren von Kurven oder bei Spurwechseln anläßlich von Überholvorgängen. Hierzu kann beispielsweise dem Steuergerät 57 ein Gerät 85 zum Messen des Gierverhaltens des Fährzeugs zugeordnet sein. Dabei spielt es an sich keine Rolle, ob als ein solches Gerät ein altbekannter Schwungmassenkreisel oder eine modernere Lösung wie ein optisches Gyroskop oder ein auf Coriolisbeschleunigung reagierendes Schwingungssystem verwendet wird. Mit der Gattung "Gerät zum Messen des Gierverhaltens des Fahrzeugs" ist also irgendein Gerät gemeint, mittels dem die Drehrate des Fahrzeugs um seine Hochachse meßbar ist, so daß unter Berücksichtigung der tatsächlichen oder geschätzten Geschwindigkeit des Fahrzeugs und des gemessenen Lenkwinkels dessen gegebenenfalls vorhandene Übersteuerungs- oder Untersteuerungstendenz erkennbar wird und über das Steuergerät 57, das automatisches Bremsen mittels wenigstens einer Radbremse auslöst, korrigierbar ist.

Das Anstauen von Druck für die Füllung der Rückförderpumpe 40 wurde, ausgehend von der Figur 2, beschrieben im Zusammenhang mit der als Drossel wirkenden Schnüffelbohrung 25, die dem Bremskreis I, zu dem die Rückförderpumpe 40 gehört, zugeordnet ist. Anläßlich der Beschreibung des Hauptbremszylinders 3 gemäß der Figur 2 wurde bereits darauf hingewiesen, daß anstelle des ersten Kolbens 10, der mit der genannten Schnüffelbohrung 25 ein Ventil bildet, wobei die Schnüffelbohrung 25 auch als Drossel benutzbar ist, auch ein anderer erster Kolben verwendbar ist, der analog zu dem zweiten Kolben 11 ein Zentralventil 32 aufweist. Das Drosseln bei angetriebener Pumpe 76 erfolgt dann zwischen der Sitzfläche 33 und dem Schließkörper 34 oder/und in der Längsbohrung 37 entlang dem Steuerstößel 36. Sollten Drosselungen in den genannten Weisen mittels am Markt befindlicher Hauptbremszylinder nur unzureichend sein, dann macht es keine Schwierigkeit, beispielsweise Schnüffellöcher 25 mit kleinerem Durchmesser zu bohren oder aber konstruktiv kleinere Abstände zwischen Sitzflächen 33 und Schließkörper 34 durch Verkürzen der Steuerstößel 36 vorzusehen. Gleiches gilt natürlich auch für die Durchmesser der Längsbohrung 37 und des Steuerstößels 36.

Die hydraulische Fahrzeugbremsanlage 2a gemäß der Figur 4 unterscheidet sich von der Fahrzeugbremsanlage gemäß der Figur 1 dadurch ,daß der technische Aufwand für das der Pumpe 76 der Figur 1 nachgeordnete Ladedruckbegrenzungsventil 83 eingespart ist. Des weiteren ist eine in der Figur 1 außerhalb der Pumpe 76 dargestellte Drossel 84, die in eine um die Pumpe herum führende Leitung eingebaut ist, in die Pumpe 76a gemäß der Figur 4 verlegt und in einer nachfolgend beschriebenen Weise ausgebildet.

In der Fahrzeugbremsanlage 2a gemäß der Figur 4 besitzt die von einem Motor 77 antreibbare Pumpe 76a innerhalb des Pumpensymbols und damit innerhalb eines nicht im einzelnen dargestellten Gehäuses gemäß einem Gedanken der Erfindung einen Rückströmkanal 92, der sowohl mit dem Ausgang 91 als auch dem Eingang 90 permanent kommuniziert und einen drosselnden Querschnitt aufweist. Dieser drosselnde Querschnitt bewirkt dann, wenn beispielsweise mittels des Bremspedals 23 in dem Hauptbremszylinder 4 ein Panikbremsdruck erzeugt wird, der durch die Hauptbremsleitung 81 und die Ladedruckleitung 80 das Rückschlagventil 78 schließt, daß bei noch eingeschalteter Pumpe 76a durch Druckmittelrückfluß durch den Rückströmkanal 92 innerhalb der Pumpe 76a eine vorgewählte Druckgrenze nicht überschritten wird. Zu diesem Zweck ist einerseits ein ausreichender Durchgang von dem Ausgang 91 zu dem Eingang 90 erforderlich, und andererseits ist der Durchgang zu dem Zweck, daß ausreichend Ladedruck zustandekommt, zu drosseln, was entlang dem Rückströmkanal 92 mittels des Symbols der Drossel 84a dargestellt ist. Ein praktisches Ausführungsbeispiel, das gegenüber dem Ausführungsbeispiel der Figur 1 raumsparend ist, ist in den Figuren 6 und 7 dargestellt.

Ziel ist es, wenn das verwendete Druckmittel bei winterlicher Temperatur eine zähe Viskosität aufweist, zum automatischen Bremsen und damit der Versorgung der Rückförderpumpe 40 in der Hauptbremsleitung 81 einen Einspeisedruck von beispielsweise 5 bar zur Verfügung zu haben. Demnach ist die Drossel 84a so zu bemessen, daß, unter Berücksichtigung eines bei der Durchströmung des Rückschlagventils 78 sich einstellenden Druckgefälles, die Pumpe 76a im Förderbetrieb dann, wenn die Rückförderpumpe 40 Druckmittel aufnimmt, einen um das genannte Druckgefälle über den genannten 5 bar liegenden Druck liefert. Wenn die Rückförderpumpe 40 vorübergehend kein Druckmittel benötigt, beispielsweise weil ein automatisches Bremsen nicht mehr notwendig ist, die Pumpe aber weiterhin beispielsweise zwei Sekunden lang angetrieben wird, steigt der Druck in der Hauptbremsleitung 81 an. Der Druck wird aber letztlich durch Rückfluß innerhalb der Pumpe 76a in der zur Erfindung gehörenden Weise niedrig gehalten, so daß der dieserart begrenzte Druck einerseits in der Fahrzeugbremsanlage 2a nicht stört und andererseits die Pumpe 76a oder den Motor 77 nicht beschädigt. Eine dem Rückschlagventil 78 zugeordnete Schließfeder 93 sorgt dafür, daß vor Beginn eines mittels des Bremspedals 23 einleitbaren Bremsvorgangs das Rückschlagventil 78 geschlossen ist zum Vermeiden von Abströmen von Druckmittel aus der Hauptbremsleitung zur Pumpe 76a und schließlich zum Vorratsbehälter 3a. Denn dadurch würde das Bremspedal 23 absinken oder gar die Pumpkapazität des Hauptbremszylinders 3 während der Dauer eines Bremsvorganges erschöpft.

Gemäß der Figur 5 ist das in der Figur 4 enthaltene Rückschlagventil 78 ersetzbar durch ein Differenzdruckregelventil 94, das gemäß seinem Symbol mit dem Pfeil in nur einer Richtung, nämlich hin zur Hauptbremsleitung 81 durchströmbar ist, sobald eine Druckdifferenz zwischen dem Ausgang 91 und der Hauptbremsleitung 81 einen vorgewählten Wert erreicht. Dieser Wert ist vorwählbar durch Auswahl der die Druckdifferenz bestimmenden Feder 95 in einer an sich bekannten und deshalb hier nicht zu beschreibenden Weise. Im Prinzip ist das Differenzdruckregelventil 94 konstruktiv gleichartig ausbildbar wie das Rückschlagventil 78, aber schaltungstechnisch besteht der Unterschied, daß man bei Rückschlagventilen 78 Wert legt auf ein sicheres Schließen, aber ein Öffnen bei geringem Druckverlust, während man bei einem Differenzdruckregelventil höhere Druckdifferenzen zwischen einem Eingang und einem Ausgang haben will. Im Fall der Figur 5 ist die Feder 95 so ausgewählt, daß bei stillstehender Pumpe 76a und bei eingeschalteter Rückförderpumpe 40 diese beispielsweise während Ansaughüben gegebenenfalls Dampfblasen erzeugt, ohne daß sich das Differenzdruckregelventil 94 öffnet. Dadurch wird erreicht, daß innerhalb der Fahrzeugbremsanlage gegebenenfalls vorhandene Blasen keine von außen durch die Niederdruckpumpe 76a eingesaugten Luftblasen sind. Je nach der Fördereigenschaft der mit der Drossel 84a ausgerüsteten Pumpe 76a wird aber vorzugsweise die Feder 95 stärker dimensioniert, damit auch dann, wenn im Pumpbetrieb die Pumpe 76a durch ihren Eingang 90 Luft ansaugen sollte, diese Luftblasen das Differenzdruckventil 94 nicht passieren, sondern vom Ausgang 91 möglichst fernbleiben und durch den Rückströmkanal 92 wieder zum Eingang 90 gelangen, was vorteilhafterweise dadurch unterstützt wird, daß die Förderleistung von Zahnradpumpen oder dergleichen bei lufthaltigem Druckmittel wesentlich abnimmt oder gar verschwindet. Erkennbar vermindert also ein auf eine höhere Druckdifferenz eingestelltes Differenzdruckregelventil 94 gegenüber einem auf geringere Druckdifferenz reagierenden Rückschlagventil 78 die Gefahr des Eindringens von Umgebungsluft in die Hauptbremsleitung 81.

Beispielsweise ist die Pumpe 76a ausgebildet gemäß den Figuren 6 und 7 mit einem mittels des Motors 77 antreibbaren Zahnrad 100 und einem zum Zahnrad 100 exzentrisch gelagerten, das Zahnrad 100 umgebenden und mit ihm kämmenden sogenannten Innenzahnring 101, weswegen die Pumpe 76a den Namen "Innenzahnringpumpe" hat. Diese Pumpe 76a ist aber auch bekannt unter dem Namen "Gerotorpumpe". Zur Pumpe 76a gehören noch ein Gehäuse 102 und ein Gehäusedeckel 103 und eine Antriebswelle 104 für das Zahnrad 100.

Das Zahnrad 100 ist gelagert und antreibbar mittels einer beispielsweise eingepreßten Antriebswelle 104, die an einem zum Motor 77 ausgerichteten Ende 105 eine quer verlaufende nutartige Ausnehmung 106 hat. Eine aus dem Motor 77 herausragende Motorwelle 107 ist zu einem Mitnehmer 108 abgeflacht, wobei der Mitnehmer 108 in die Ausnehmung 106 eintaucht zur Übertragung von Drehmomenten. Die Antriebswelle 104 ist in einer im Gehäuse 102 befindlichen Lagerbohrung 109 und einer in dem Gehäusedeckel 102 befindlichen Lagerbohrung 110 drehbar gelagert.

Angrenzend an die Lagerbohrung 109 ist im Gehäuse eine Bohrung 111 zu der Lagerbohrung 109 exzentrisch, also achsversetzt, angeordnet. Die Bohrung 111 nimmt den Innenzahnring 101 mit wenig Radialspiel drehbar auf. In axialer Richtung ist die Tiefe der Bohrung 111 begrenzt durch eine gehäusefeste quer zur Bohrung 111 ausgerichtete Fläche 112. Diese Fläche 112 hat von einer gehäusedeckelseitigen Begrenzungsfläche 113 einen vorgewählten Abstand. An dieser Begrenzungsfläche 113 liegt eine Deckelfläche 114 an. Zwischen der Deckelfläche 114 und der Begrenzungsfläche 113 finden das Zahnrad 100 und der Innenzahnring 101 Platz mit einem später beschriebenen Axialspiel 131.

Von der Fläche 112 gehen eine erste bogenförmig um die Lagerbohrung 109 gekrümmte Ausnehmung 115 und eine zweite ebenfalls gekrümmte Ausnehmung 116 aus. Beide Ausnehmungen erstrecken sich je über einen Bogen, der weniger als 180° einschließt. Die Ausnehmungen sind im wesentlichen nutartig ausgebildet. Die erste Ausnehmung 115 ist durch eine Anschlußbohrung 117 an den Eingang 90, der sich im Gehäuse 102 befindet, angeschlossen und bildet dieserart einen Ansaugkanal, der zum Zahnrad 100 und zum Innenzahnring 101 mündet. An die zweite Ausnehmung 116 ist durch eine Verbindungsbohrung 118 der Ausgang 91, der sich ebenfalls in dem Gehäuse 102 befindet, angeschlossen, so daß die Ausnehmung 116 einen bei dem Zahnrad 100 und dem Innenzahnring 101 beginnenden Druckkanal bildet. Der Eingang 90 und der Ausgang 91 sind beispielsweise in Form von Gewindeanschlüssen ausgebildet.

Der Gehäusedeckel 103 ist zum Motor 77 hin mit einem rohrartigen Fortsatz 119 versehen, in den ein Zentrieransatz 120 des Motors eingesteckt ist. Wenigstens eine Schraube 121 ist vorgesehen zum Zusammenhalten des Gehäuses 102, des Gehäusedeckels 103 und des Motors 77. Ein Dichtring 122 ist zwischen das Gehäuse 102 und den Gehäusedeckel 103 eingelegt. Ein weiterer Dichtring 123 sorgt für eine Abdichtung zwischen dem Fortsatz 119 und dem Motor 77. Ein zusätzlicher Dichtring 124 umschließt abdichtend die Motorwelle 107. Innerhalb des Fortsatzes 119 und dabei zwischen dem Motor 77 und dem Gehäusedeckel 3 befindet sich ein Hohlraum 125. Dieser ist außerhalb der Projektion der Bohrung 111 durch eine sich durch den Gehäusedeckel 103 erstreckende erste Verbindungsbohrung 126 und eine sich in das Gehäuse 102 erstreckende zweite Verbindungsbohrung 127 an die Anschlußbohrung 117 und somit den Eingang 90 angeschlossen. Durch die Antriebswelle 104 erstreckt sich eine Druckausgleichsbohrung 128.

Das Zahnrad 100 weist beispielsweise sechs Zähne 129 und der Innenzahnring 101 demgemäß sieben Zahnlücken 130 auf. Die Form der Zähne und der Zahnlücken ist nicht Gegenstand der Erfindung, weil hier auf ein Zahnrad und einen Innenzahnring, so wie er im Handel erhältlich ist, zurückgegriffen wird. Wenn der Motor 77 das Zahnrad 100 antreibt, wird auch der Innenzahnring 101 gedreht. Dabei tauchen im Bereich der Ausnehmung 115 Zähne 129 aus Zahnlücken 130 aus, und im Bereich der Ausnehmung 116 tauchen Zähne 115 nacheinander in Zahnlücken 130 ein mit der an sich bekannten Folge, daß von der ersten Ausnehmung 115 aus Druckmittel zwischen das Zahnrad 100 und den Innenzahnring 101 einfließt und nachfolgend heraus und in die zweite Ausnehmung 116 gedrückt wird. Demzufolge wird sich bei richtig gewählter Drehrichtung der Antriebswellen 104 am Ausgang 91 ein Druck einstellen, der höher ist als ein Druck am Eingang 90. Anders ausgedrückt: Zwischen der zweiten Ausnehmung 116 und der ersten Ausnehmung 115 entsteht ein Druckgefälle.

Dieses Druckgefälle führt wegen des bereits angesprochenen Axialspiels des Zahnrades 100 zwischen der Fläche 112 und der Deckelfläche 114 und auch des Axialspiels des Innenzahnringes 101 zwischen diesen genannten Flächen 112 und 114 zu Leckageströmungen, also zu Rückströmungen innerhalb der Pumpe 76a. Dadurch verursachte Volumenströme sind um so größer, je größer das Druckgefälle, je größer die Axialspiele und je dünnflüssiger das Druckmittel z. B. infolge von Erwärmung im Pumpenbetrieb oder bei sommerlichen Temperaturen ist. Beispielsweise sind beide Axialspiele gleich groß ausgebildet und in der Figur 6 deshalb mit dem gemeinsamen Bezugszeichen 131 bezeichnet. Deshalb sind der Einfachheit halber auch die Axialspiele zwischen dem Zahnrad 100 bzw. dem Innenzahnring 101 und der Fläche 112 gleich groß eingezeichnet. Dadurch ist erkennbar, daß das genannte Druckgefälle in dem durch das Axialspiel 131 bestimmten Querschnitt Druckmittel aus dem Bereich der zweiten Ausnehmung 116 um die Antriebswelle 104 herum in den Bereich der ersten Ausnehmung 115 drückt. In zur Erfindung gehörender Weise wird wenigstens eines der genannten Axialspiele größer als bei handelsüblichen Pumpen gewählt zu dem Zweck, daß durch die gegenüber handelsüblichen Pumpen verstärkte Rückströmung eine Pumpendruckbegrenzung in dem zur Figur 4 beschriebenen Sinne resultiert, wodurch man das Ladedruckbegrenzungsventil 83 in der Fahrzeugbremsanlage der Figur 1 weglassen kann und somit Kosten und Gewicht spart.

Wie bereits angedeutet, wird beispielsweise nur dem Zahnrad 100 das vergrößerte Axialspiel zugeordnet. Dies wird dadurch erreicht, daß man einen handelsüblichen Innenzahnring 101 verwendet und ein handelsübliches Zahnrad 100 durch Nachbearbeitung verkürzt. Hierfür kann ein beispielsweise aus Stahl gesintertes Zahnrad 100 magnetisch fixiert und stirnseitig geschliffen werden. Erkennbar ist, daß es wegen des geringeren Durchmessers des Zahnrades 100 gegenüber dem größeren Durchmesser des Innenzahnringes 101 billiger nachbearbeitet werden kann. Durch diese Nachbearbeitung bzw. das dadurch hergestellte Axialspiel 131 kommt noch der bereits angedeutete funktionelle Vorteil zustande, daß beim Ansaugen von lufthaltigem Druckmittel oder Luft allein das Angesaugte leicht genug den Weg von der zweiten Ausnehmung 116 zur ersten Ausnehmung 115 in durch das Axialspiel 131 festgelegten Querschnitten findet. Der Grund hierfür ist, daß infolge der Luft- oder Gasblasen das im Axialspiel befindliche Medium weniger kinematische Zähigkeit aufweist als luftfreies Druckmittel. Luft- oder Gasblasen oder gar Luft allein bewirken deshalb, daß die Pumpe 76a keinen nennenswerten Druck zum Ausgang 91 liefert.

Weitere Rückströmkänale sind vorhanden infolge der Anordnung der Ausgleichsbohrung 128 und der Verbindungsbohrungen 126 und 127 und wegen eines unvermeidlichen Lagerspiels zwischen der Antriebswelle 104 und der Lagerbohrung 109 und wegen eines ebenfalls unvermeidlichen Lagerspiels zwischen der Antriebswelle 104 und der Lagerbohrung 110. Diese Rückströmungskanäle werden bei der Auswahl des Axialspieles 131 berücksichtigt. Weitere Rückströmungskanäle sind deshalb vorhanden, weil auf dem Weg aus dem Bereich der ersten Ausnehmung 115 zu dem Bereich der zweiten Ausnehmung 116 Zähne 129 aus Zahnlücken 130 des Innenzahnringes 101 austauchen. Vorteilhafterweise wird in den vorhandenen Rückströmkanälen vorzugsweise nur das Axialspiel 131 zur Erfüllung der gestellten Aufgabe anders als üblich dimensioniert. Erkennbar bildet der wenigstens eine Rückströmkanal, der von der Ausnehmung 116 ausgeht und zur Ausnehmung 115 führt, eine sogenannte Laminardrossel infolge von Flüssigkeitsreibung entlang der Fläche 112 und entlang den Stirnseiten des Zahnrades 100 und des Innenzahnrings 101. Da es also vorteilhafterweise auf eine ausgewählte Drosselung ankommt, ist in der Figur 4 in das Symbol der Pumpe 76a das Symbol der Drossel 84a eingezeichnet.

Infolge der Weiterbildung des an sich unvermeidlichen Gehäusedeckels 102 zu einem Befestigungselement infolge der Anbringung des Fortsatzes 119 für den Motor 177 ist die Baueinheit aus Motor 77 und Pumpe 76a preisgünstig herstellbar.

Der erfindungsgemäße Gedanke, gezielt Rückströmungen zur Pumpendruckbegrenzung zu erzeugen, ist auch übertragbar auf andere Zahnradpumpen, die beispielsweise Paare von Stirnzahnrädern oder andere verzahnte und miteinander in Eingriff befindliche Pumpenelemente aufweisen.

Die Figuren 8 und 9 zeigen Abwandlungen des in der Figur 2 dargestellten Hauptbremszylinders 3. Zur Vermeidung von Wiederholungen werden in den Figuren 8 und 9 für gleiche Bauteile dieselben Bezugsgrößen wie in der Figur 2 gewählt, und es wird insoweit auf die jeweiligen Ausführungen verwiesen.

Der mittels eines nicht dargestellten Bremspedals betätigbare erste Kolben 10 des in der Figur 8 dargestellten Hauptbremszylinders 3 weist ein Zentralventil 132 wie der zweite Kolben 11 des in der Figur 2 dargestellten Hauptbremszylinders 3 auf. An seiner der ersten Druckkammer 17 abgewandten Seite ist der Kolben 10 zur Begrenzung seines Verschiebewegs mit einem Längsschlitz 133 versehen, durch den eine Spannhülse 134 quer hindurchgesteckt ist, die in einer Querbohrung 135 im Gehäuse 8 des Hauptbremszylinders 3 gehalten ist. Die Querbohrung 135 ist durch den ersten Anschluß 4 des Hauptbremszylinders 3 zugänglich.

Zur Bildung einer strömungsbehindernden Engstelle, um wie oben beschrieben mittels einer Niederdruckpumpe 76, 76a, die in die Hauptbremsleitung 81 des an die erste Druckkammer 17 des Hauptbremszylinders 3 angeschlossenen ersten Bremskreises I fördert, in beiden Druckkammern 17, 18 des Hauptbremszylinders 3 und damit in beiden Bremskreisen I, II der erfindungsgemäßen Fahrzeugbremsanlage 2 Druck aufbauen zu können, ist in den ersten, mit der ersten Druckkammer 17 kommunizierenden Anschluß 4 des Hauptbremszylinders 3 ein Drosselelement 136 eingesetzt.

Das aus Kunststoff bestehende Drosselelement 136 ist napfförmig und geht an seinem freien Umfangsrand einstückig in einen Radialflansch 137 über, wobei der Radialflansch 137 dem Hauptbremszylinder 3 und ein Boden 138 des napfförmigen Drosselelements 136 dem Bremsflüssigkeitsvorratsbehälter 3a zugewandt ist. Der Boden 138 weist eine Drosselbohrung 139 auf.

Abgedichtet ist das Drosselelement 136 mittels eines in den Anschluß 4 des Hauptbremszylinders 3 unter dem Radialflansch 137 des Drosselelements 136 eingelegten O-Rings 140. Gehalten wird das Drosselelement 136 an seinem Radialflansch 137 von einem Anschlußstutzen 141 des Vorratsbehälters 3a, der in den Anschluß 4 des Hauptbremszylinders 3 ragt und dort in an sich bekannter Weise mittels eines Gummi-Formrings 142 gehalten ist.

Zusätzlich zur Drosselbohrung 139 weist das Drosselelement 136 ein Rückschlagventil 143 auf, das der Drosselbohrung 139 parallelgeschaltet ist und das in Richtung vom Vorratsbehälter 3a zum Hauptbremszylinder 3 durchströmbar ist: Der Boden 138 des Drosselelements 136 weist außer der Drosselbohrung 139 eine Ventilbohrung 144 mit größerem Durchmesser als die Drosselbohrung 139 auf. Eine Druckfeder 145, die sich am Grund des ersten Anschlusses 4 des Hauptbremszylinders 3 abstützt, drückt eine Ventilkugel 146 gegen eine Mündung der Ventilbohrung 144.

Das Rückschlagventil 143 ist zum Befüllen der erfindungsgemäßen Fahrzeugbremsanlage 2 vorgesehen. Mit seiner großen Strömungsquerschnittsfläche zusätzlich zur Querschnittsfläche der Drosselbohrung 139 vergrößert es einen Bremsflüssigkeitsstrom durch den ersten Anschluß 4 des Hauptbremszylinders 3 in den ersten Bremkreis I beim Befüllen der Fahrzeugbremsanlage 2.

Bei dem in der Figur 9 dargestellten Ausführungsbeispiel des Hauptbremszylinders 3 ist ein Drosselelement 147 mit integriertem Rückschlagventil an einer der ersten Druckkammer 17 des Hauptbremszylinders 3 zugewandten Stirnseite des ersten Kolbens 10 angebracht. In die der ersten Druckkammer 17 zugewandte Stirnseite des Kolbens 10 ist ein Ventilsitznapf 148 mit einem Zentralloch 149 eingesetzt und mittels einer über die Stirnseite des ersten Kolbens 10 gestülpten Haltekappe 150 gehalten, die einen Umfang des ersten Kolbens 10 umgreift und durch Umbördeln seines freien Randes in eine umlaufende Nut 151 am ersten Kolben 10 fixiert ist. Der Ventilsitznapf 148 weist ein Zentralloch 149 in seinem Boden auf. Die Haltekappe 150 weist mehrere Durchbohrungen 152 auf. Im Innenraum zwischen dem Ventilsitznapf 148 und der Haltekappe 152 ist eine aus Gummi bestehende Ventilscheibe 153 mit einem axialen Drosselkanal 154 aufgenommen. Herrscht in der ersten Druckkammer 17 Überdruck, wird die Ventilscheibe 153 gegen den Boden des Ventilsitznapfes 148 gedrückt, so daß Bremsflüssigkeit nur durch den Drosselkanal 154 der Ventilscheibe 153 und das Zentralloch 149 des Ventilsitznapfs 148 strömen kann. Herrscht dagegen, beispielsweise beim Befüllen der Fahrzeugbremsanlage 2, im ersten Anschluß 4 des Hauptbremszylinders 3 größerer Druck als in der ersten Druckkammer 17, so strömt Bremsflüssigkeit durch den ersten Anschluß 4, die Spannhülse 134, eine Axialbohrung 155 des ersten Kolbens 10, durch das Zentralloch 149 des Ventilsitznapfes 148, hebt die Ventilscheibe 153 ab und strömt weiter durch die Bohrungen 152 der Haltekappe 150 in die erste Druckkammer 17. Die Ventilscheibe 153 mit ihrem Drosselkanal 154 wirkt also in Richtung von der ersten Druckkammer 17 zum ersten Anschluß 4 als Drosselelement und zugleich als in Gegenrichtung durchströmbares Rückschlagventil.

Der erste Kolben 10 des in der Figur 9 dargestellten Hauptbremszylinders 3 weist ebenso wie derjenige aus der Figur 8 und der zweite Kolben 11 des in der Figur 2 dargestellten Hauptbremszylinders 3 ein Zentralventil 156 auf. Allerdings ist das Zentralventil 156 des in der Figur 9 dargestellten Hauptbremszylinders 3 modifiziert: Es weist auf seinem die Axialbohrung 155 des ersten Kolbens 10 durchsetzenden Stößel 157 einen Zylinderkopf 158 mit radial abstehenden Nasen 159 auf, gegen die eine Druckfeder 160 drückt, um das Zentralventil 156 zu schließen. In eine Ansenkung der Axialbohrung 155 ist ein Dichtelement mit einem Stützring 161 aus Metall eingesetzt, der mit Gummi 162 umgeben ist. Das Zentralventil 156 ist bei nicht betätigtem ersten Kolben 10 durch den Stößel 157 geöffnet, der an der Spannhülse 134 anliegt, wie der zweite Kolben 11 in der Figur 2. Zwischenräume zwischen den radial abstehenden Nasen 159 und durchgehende Längsnuten 163 des Stößels 157 bilden große Strömungsquerschnitte für Bremsflüssigkeit.

Wird der erste Kolben 10 zum Betätigen der Fahrzeugbremsanlage 2 in das Gehäuse 8 des Hauptbremszylinders 3 hineingedrückt, so kommt der Stößel 157 von der Spannhülse 134 frei und sein Kopf 158 wird von der Druckfeder 160 gegen das Dichtelement 161, 162 gedrückt. Die Axialbohrung 155 des ersten Kolbens 10 ist dadurch verschlossen.

### Stand der Technik

Durch die Figuren 1 und 4 der Druckschrift DE 44 45 401 A1 ist eine hydraulische Fahrzeugbremsanlage bekannt mit einem Hauptbremszylinder, der ein Gehäuse und in diesem eine Bohrung hat, in der ein erster Kolben verschiebbar ist in Abhängigkeit vom Niedertreten eines Bremspedals und in der ein zweiter Kolben verschiebbar auf der zum Bremspedal entgegengesetzten Seite des ersten Kolbens angeordnet ist, wobei der erste Kolben und der zweite Kolben zwischen sich eine erste Druckkammer abgrenzen, die mit einem an dem Gehäuse ausgebildeten ersten Anschluß sowie einem zweiten Anschluß in Verbindung ist, wobei der zweite Kolben an seiner zur ersten Druckkammer entgegengesetzten Seite eine zweite Druckkammer abgrenzt, die mit einem dritten an dem Gehäuse ausgebildeten Anschluß sowie einem vierten Anschluß in Verbindung ist, und der erste Kolben die Verbindung zwischen dem ersten Anschluß sowie der ersten Druckkammer und der zweite Kolben die Verbindung zwischen dem dritten Anschluß sowie der zweiten Druckkammer - jeweils bei niedergetretenem Bremspedal - absperren, mit einem Vorratsbehälter zur Speicherung von Druckmittel, wobei der Vorratsbehälter mit dem dritten Anschluß des Hauptbremszylinders in Verbindung steht, mit einer Ventilanordnung zum Öffnen oder Verschließen der Verbindung zwischen dem ersten Anschluß des Hauptbremszylinders und dem Vorratsbehälter, mit einer Pumpeinrichtung, die einen mit dem Vorratsbehälter verbundenen Sauganschluß und einen mit dem zweiten Anschluß des Hauptbremszylinders verbundenen Druckanschluß besitzt sowie das Druckmittel aus dem Vorratsbehälter ansaugt und dieses zum zweiten Anschluß fördert, mit einer Mehrzahl von Radbremszylindern für zugeordnete Räder, um diese Räder zu bremsen, und die in eine erste Gruppe von Radbremszylindern sowie eine zweite Gruppe von Radbremszylindern unterteilt sind, mit ersten Bremsdruckmodulationsvorrichtungen, die zwischen dem zweiten Anschluß des Hauptbremszylinders sowie der ersten Gruppe von Radbremszylindern angeordnet sind, mit zweiten Bremsdruckmodulationsvorrichtungen, die zwischen dem vierten Anschluß des Hauptbremszylinders sowie der zweiten Gruppe von Radbremszylindern angeordnet sind, und mit einem Steuergerät, um die Ventilanordnung zum Öffnen oder Schließen der Verbindung zwischen dem ersten Anschluß des Hauptbremszylinders und dem Vorratsbehälter in Übereinstimmung mit einer aus einer Öffnungsbetriebsart und einer Schließbetriebsart gewählten Betriebsart zu betätigen. Die Pumpeinrichtung ist dabei ausgebildet als eine Hochdruckpumpe, deren Förderdruck mittels eines Druckbegrenzungsventils begrenzt wird auf einen Druck, der wenigstens so hoch ist wie ein höchster wenigstens einem Radbremszylinder zuzuführender Bremsdruck. Dadurch ist diese hydraulische Fahrzeugbremsanlage dazu geeignet, ohne Betätigung des Bremspedals Bremsdrücke zu erzeugen zur Traktionskontrolle, die auch bekannt ist unter dem Namen Antriebsschlupfregelung, durch bedingtes Bremsen von wenigstens einem antreibbaren Rad. Die hydraulische Fahrzeugbremsanlage gemäß den Figuren 1 und 4 hat den Nachteil, daß sie außer für normales Bremsen per Bremspedalbetätigung nur noch für den Antriebschlupfregelbetrieb eingerichtet ist und daß der von dieser Pumpeinrichtung lieferbare hohe Druck am Hauptbremszylinder einen ersten Anschluß benötigt, der diesen hohen Druck aushält. Demgemäß kann kein normaler Hauptbremszylinder verwendet werden mit den bekannten Anschlüssen, in die als Verbindungselemente zu dem jeweiligen Vorratsbehälter lediglich elastische Gummiringe eingelegt sind. Anstelle der Verbindung über einen solchen elastischen Gummiring müßte beispielsweise eine Schraubverbindung vorgesehen werden, die beispielsweise identisch ist mit Schraubverbindungen für den zweiten Anschluß und den vierten Anschluß. Vorteilhaft ist aber, daß die Pumpeinrichtung durch den zweiten Anschluß in der ersten Druckkammer einen Druck aufbaut, der mittels des zweiten Kolbens auch in der zweiten Druckkammer zu einem Druckanstieg führt, der durch den vierten Anschluß hindurch den zweiten Bremsdruckmodulationsvorrichtungen zur Verfügung steht. Es wird also lediglich - ausgehend von einem Ausgang der Pumpeinrichtung - eine hydraulische Verbindung zum Hauptbremszylinder benötigt.

Eine durch die Figur 5 der DE 4445401 A1 bekannte weitere hydraulische Fahrzeugbremsanlage verzichtet auf die in der voranstehend beschriebenen Fahrzeugbremsanlage vorhandene Pumpeinrichtung durch Verwendung von sogenannten Rückförderpumpen einer Blockierschutzeinrichtung, wobei die dem zweiten Anschluß des Hauptbremszylinders zugeordnete Rückförderpumpe sich durch eine Saugleitung, in die ein normal sperrendes, elektrisch steuerbares 2/2-Wegeventil eingebaut ist, selbst aus dem Vorratsbehälter mit Druckmittel versorgt. Dies hat jedoch den Nachteil, daß eine Fehlsteuerung oder ein Defekt dieses 2/2-Wegeventils zu einer Öffnung des vom zweiten Anschluß des Hauptbremszylinders ausgehenden Bremskreises führt mit der Folge, daß während der Durchführung von Blockierschutzbetrieb Druckmittel zum Vorratsbehälter entweichen und das Bremspedal tiefer gehen kann. Erkennbar kann dies dazu führen, daß eine an sich vorhandene Hubreserve des ersten Kolbens aufgezehrt wird mit dem Verlust von Bremsleistung. Nachteilig ist des weiteren, daß sich diese Rückförderpumpe durch die genannte Saugleitung und das genannte 2/2-Wegeventil nur unvollkommen mit Druckmittel selbst versorgt, wenn dieses Druckmittel beispielsweise bei winterlichen Temperaturen zähflüssig ist oder bei sommerlichen Temperaturen eine Dampfblasenbildung in Folge von Sogwirkung nicht ausschließbar ist. Mangelhafte Füllung dieser sich selbst versorgenden Rückförderpumpe führt natürlich zu mangelhafter Pumpleistung und demzufolge zu nachteilig langsamem Bremsdruckanstieg oder ungenügendem Bremsdruckanstieg. Langsamer Bremsdruckanstieg im Antriebsregelschlupfbetrieb ist insbesondere über Glatteis oder Schnee nachteilig.

Eine durch die Druckschrift DE 4226646 A1 bekannte Fahrzeugbremsanlage ist eingerichtet zur Vermeidung von Radblockiergefahr beim Bremsen und auch zum automatischen Bremsen, beispielsweise zur Antriebsschlupfregelung, zur Bremskraftverteilung zwischen Vorderradbremsen und Hinterradbremsen oder/und zum individuellen Bremsen wenigstens eines der Fahrzeugräder zum Zwecke des Stabilisierens des Fahrzeugs bei Übersteuerungstendenz, zum Zwecke der Erhaltung der Lenkbarkeit des Fahrzeugs bei Untersteuertendenz, zum Zwecke der fahrdynamisch bestmöglichen Einhaltung der durch den Lenkwinkel vorgegebenen Bahnkurve der Fahrzeugbewegung dadurch, daß bei auftretender Über- und Untersteuertendenz bzw. Abweichung von der vorgegebenen Bahnkurve diese korrigiert wird durch Bremsen oder verstärktes Bremsen wenigstens eines Rades. Diese Fahrzeugbremsanlage besitzt ebenfalls einen Hauptbremszylinder mit vier Anschlüssen, einen Vorratsbehälter, zwei an den Hauptbremszylinder angeschlossene Bremskreise für mehrere Radbremszylinder von mehreren Rädern und dazwischen Bremsdruckmodulationseinrichtungen mit Wegeventilen und je Bremskreis eine Pumpe, die im Betrieb zur Radblockiergefahrverminderung arbeitet oder im automatischen Bremsbetrieb Drücke liefert wenigstens in einer zum Bremsen ausreichenden Höhe, wobei für automatisches Bremsen zwischen Druckausgängen dieser Pumpen und den jeweiligen Anschlüssen des Hauptbremszylinders Ventilanordnungen vorgesehen sind, die zum automatischen Bremsen aus ihren Grundstellungen in Steuerstellungen gesteuert werden, damit Druckmittelmengen aus diesen Pumpen nur dann zum Hauptbremszylinder abströmen, wenn projektierte Drücke erreicht sind. Die genannten Ventilanordnungen besitzen also einerseits die Funktion eines für das normale Bremsen durchgängigen Wegeventils und andererseits die Funktion eines die jeweilge Pumpe vor Überlastung schützenden Sicherheitsventils. Eingänge der beiden Pumpen werden durch elektrisch steuerbare Wegeventile hindurch von einer gemeinsamen Ladepumpeneinheit mit Druckmittel aus dem Vorratsbehälter des Hauptbremszylinders versorgt. Hierfür liefert die Ladepumpeneinheit beispielsweise einen Druck in der Größenordnung von 5 bar. Zu der Ladepumpeneinheit gehören eine Ladepumpe, ein an deren Ausgang angeschlossenes Druckbegrenzungsventil und noch eine an diesen Ausgang angeschlossene Drossel, die mit dem Vorratsbehälter und also auch einem Eingang der Ladepumpe kommuniziert. Vorteilhaft ist, daß die Ladepumpe lediglich einen Druck in der genannten Größenordnung von 5 bar zu erzeugen braucht, deshalb wenig Geräusch erzeugt, wenig Antriebsleistung aufnimmt und dementsprechend preisgünstig ist. Als nachteilig kann angesehen werden, daß bei mangelhaft gefülltem Vorratsbehälter und unter Beschleunigungseinwirkung oder aber bei verschäumtem Druckmittel die Ladepumpe Luft ansaugt und gegebenenfalls Teilmengen dieser angesaugten Luft in beide Pumpen und somit beide Bremskreise drückt, was dort Volumenelastizitäten zur Folge haben würde. Solche Volumenelastizitäten können bekanntermaßen mangelnde Bremswirkung verursachen.

Durch das Dokument DE 42 13 710 A ist eine die Gattung bildende hydraulische Fahrzeugbremsanlage bekannt zum Bremsen per Bremspedalbetätigung und zum automatischen Bremsen, mit einem Hauptbremszylinder, der ein Gehäuse, in diesem eine Bohrung und in der Bohrung einen ersten verschiebbaren Kolben, der in Abhängigkeit vom Niedertreten des Bremspedals verschiebbar ist, einen zweiten Kolben auf der zum Bremspedal entgegengesetzten Seite des ersten Kolbens, zwischen dem ersten und dem zweiten Kolben eine erste Druckkammer, die mit einem am Gehäuse ausgebildeten ersten Anschluß oben sowie einem zweiten Anschluß unten in Verbindung ist, und an den zweiten Kolben angrenzend an seiner zur ersten Druckkammer entgegengesetzten Seite eine zweite Druckkammer mit einem an dem Gehäuse ausgebildeten dritten Anschluß oben und einem vierten Anschluß unten hat, wobei bei getretenem Bremspedal zwischen dem ersten und dem zweiten Anschluß sowie zwischen dem dritten und dem vierten Anschluß keine hydraulische Verbindung besteht, mit einem Vorratabehälter für Druckmittel, wobei der Vorratsbehälter dem ersten und dem dritten Anschluß des Hauptbremszylinders zugeordnet ist, mit einer als Niederdruckpumpe ausgebildeten Pumpeinrichtung, die einen mit dem Vorratsbehälter verbundenen Sauganschluß und einen mit einem Bremskreis ständig verbundenen Druckanschluß beaitzt zum Ansaugen von Druckmittel aus dem Vorratsbehälter und zum Fördern in den einen Bremskreis, mit einer Mehrzahl von Radbremszylindern für zugeordnete Räder, die in eine erste Gruppe und eine zweite Gruppe unterteilt sind, mit ersten Bremsdruckmodulationsventilanordnungen, die zwischen dem zweiten Anschluß des Hauptbremszylinders sowie der ersten Gruppe von Radbremszylindern angeordnet sind, mit zweiten Bremsdruckmodulationsventilanordnungen, die zwischen dem vierten Anschluß des Hauptbremszylinders sowie der zweiten Gruppe von Radbremszylindern angeordnet sind. und mit einem Steuergerät zur Durchführung von automatischem Bremsbetrieb mit Einschalten der Pumpeinrichtung mit je Bremskreis einem von dem Steuergerät steuerbarem Umschaltventil zwischen dem Hauptbremszylinder und den Bremsdruckmodulationsventilanordnungen zum automatischen Bremsen, wobei den ersten und den zweiten Bremsdruckmodulationsventilanordnungen für den Blockierechutzbetrieb einschaltbare Rückförderpumpen zugeordnet sind, wobei die Rückförderpumpen mit ihren Saugseiten durch Wegeventile hindurch an den zweiten Anschluß und den vierten Anschluß des Hauptbremszylinders anschließbar sind. Hierbei sind die Rückförderpumpen als selbstansaugende, also als sich selbst ladende Kolbenpumpen ausgebildet. Es ist auch möglich, Vorladepumpen zusätzlich einzubauen, wodurch es erlaubt ist, die Rückförderpumpen als Freikolbenpumpen auszubilden. Insoweit ist jeder Rückförderpumpe eine eigene Vorladepumpe zugeordnet. Die Vorladepumpen sind als Niederdruckpumpen ausgebildet und versorgen sich aus dem Vorratsbehälter des Hauptbremszylinders. Die Vorladepumpen drücken zuvor aus dem Vorratsbehälter angesaugtes Druckmittel durch Vorladeleitungen, die an einem die Rückförderpumpen und Bremsdruckmodulationsventil-Anordnungen aufnehmenden Hydraulikblock enden und dabei zusätzlich zu von dem Hauptbremszylinder hin zum Hydraulikblock verlaufenden Hauptbremsleitungen angeordnet sind. Jeder Vorladepumpe ist ein deren Druck begrenzendes, beispielsweise mittels einer Feder betastetes, Sicherheitsventil zugeordnet. Die einzige Figur des Dokumentes DE 42 13 710 A zeigt nur die eine der beiden gemäß der Beschreibung gemeinten Vorladepumpen. Für beide Vorladepumpen und beide Sicherheitsventile und auch für die beiden Vorladeleitungen ist ein hoher technischer Aufwand nötig. Daraus ableitbar ist die Aufgabe, den technischen Aufwand zu vermindern.

### Vorteile der Erfindung

Die hydraulische Fahrzeugbremsanlage mit den kennzeichnenden Merkmalen des Anspruchs 1 hat den Vorteil, daß die Versorgung der Bremskreise für den automatischen Bremsbetrieb mittels einer einzigen lediglich niedrigen Druck liefernden Ladepumpe erreicht wird. Dementsprechend ist weniger technischer Aufwandnötig als für eine hydraulische Fahrzeugbremsanlage gemäß der DE 4 213 710 A mit je Bremskreis einer Ladepumpe und einem jeweils zugeordneten Sicherheitsventil. Ein weiterer Vorteil besteht darin, daß ein üblicher Hauptbremszylinder mit üblichen Steckanschlüssen für den ersten Anschluß und den dritten Anschluß verwendbar ist. Demzufolge ist auch ein serienmäßiger Vorratsbehälter für den Hauptbremszylinder verwendbar. Weil solche serienmäßigen Vorratsbehälter und Hauptbremszylinder in einfacher Weise schnell zusammensteckbar sind, ergibt sich auch ein Preisvorteil gegenüber derjenigen Konstruktion, die für die Fahrzeugbremsanlage der DE 44 45 401 A1 notwendig ist. Ein weiterer Vorteil besteht darin, daß, wie sich bereits aus der Vorteilsnennung ergibt, der Vorratsbehälter direkt mit dem Hauptbremszylinder zusammengesteckt ist, so daß entgegen dem Vorschlag der DE 44 45 401 A1 keine zusätzliche Bauhöhe beansprucht wird. Des weiteren ist ein Hydroaggregat, also eine Anordnung von Ventilen und Pumpen, eines bereits existierenden Typs, wie er in der DE 42 32 311 C1 beschrieben ist, verwendbar. Dies spart Entwicklungskosten und verbilligt die Fertigung des Hydroaggregates und die Bereitstellung von Ersatzteilen durch Weiterbenützung vorhandener Fertigungsmittel.

Durch die in den Ansprüchen 2 bis 13 aufgeführten Maßnahmen sind vorteilhafte Weiterbildungen und Verbesserungen der im Anspruch 1 angegebenen Fahrzeugbremsanlage möglich. Die kennzeichnenden Merkmale des Anspruchs 5 ergeben eine vorteilhaft preisgünstige Art der Bereitstellung von Niederdruck für die erfindungsgemäße Fahrzeugbremsanlage, denn durch die kennzeichnenden Merkmale des Anspruchs 5 kann auf den technischen Aufwand für ein der Pumpe nachgeordnetes Ladedruckbegrenzungsventil verzichtet werden, und auch ein technischer Aufwand für einen den Pumpenausgang mit dem Pumpeneingang außerhalb der Pumpe verbindenden Rückströmkanal mit eingebauter Drossel kann zumindest teilweise eingespart werden. Die kennzeichnenden Merkmale des Anspruchs 6 geben ein Ausführungsbeispiel an, das auf die Gattung "Zahnradpumpen" aufbaut und den technischen Aufwand für den wenigstens einen Rückströmkanal, der als eine Drossel bemessen ist, niedrig hält. Die kennzeichnenden Merkmale des Anspruchs 7 ergeben ein Ausführungsbeispiel mit einer sogenannten Innenzahnringpumpe, die auch unter dem Namen Gerotorpumpe bekannt ist. Die kennzeichnenden Merkmale des Anspruchs 8 geben ein Ausführungsbeispiel an für ein in der erfindungsgemäßen Fahrzeugbremsanlage benötigtes Ventil, das nur in einer Richtung durchströmbar sein darf. Die kennzeichnenden Merkmale des Anspruchs 9 ergeben ebenfalls ein Ausführungsbeispiel für ein solches Ventil, wobei durch Verwendung einer eine Druckdifferenz bestimmenden Feder zwischen dem Ausgang der niederdruckerzeugenden Pumpe und der Rückförderpumpe ein solch hohes Druckgefälle entsteht, daß bei arbeitender oder stillstehender Niederdruckpumpe und bei gegebenenfalls in der Niederdruckpumpe vorhandener Luft diese nicht von einer selbstansaugenden Rückförderpumpe ansaugbar ist. Die Feder des Differenzdruckregelventils wird also so dimensioniert, daß bei stillstehender Niederdruckpumpe das in der Rückförderpumpe enthaltene Druckmittel beispielsweise zu Dampfblasenbildung neigen würde.

Die kennzeichnenden Merkmale des Anspruchs 10 geben eine preisgünstige Lösung an für die Zusammenfassung der erfindungsgemäßen Pumpe mit dem ihr zugeordneten Motor.

Gemäß Anspruch 11 ist die strömungsbehindernde Engstelle als in den ersten Anschluß des Hauptbremszylinders eingesetztes Drosselelement ausgebildet, das vorzugsweise von einem Anschlußflansch des Vorratsbehälters im ersten Anschluß gehalten ist. Auf diese Wiese läßt sich die strömungsbehindernde Engstelle mit minimalem Aufwand ohne jegliche Veränderung am Hauptbremszylinder, am Vorratsbehälter oder einem sonstigen Teil der Fahrzeugbremsanlage verwirklichen.

Bei einer vorteilhaften Ausgestaltung der Erfindung gemäß Anspruch 12 ist die strömungsbehindernde Engstelle als an einer der ersten Druckkammer zugewandten Stirnseite des ersten Kolbens angebrachtes Drosselelement ausgebildet. Diese Ausgestaltung hat den Vorteil, daß das Drosselelement vor Manipulationen weitgehend geschützt im Innern des Hauptbremszylinders angeordnet ist.

Eine vorteilhafte Weiterbildung der Erfindung gemäß Anspruch 13 sieht ein parallel zur strömungsbehindernden Engstelle des Hauptbremszylinders geschaltetes Rückschlagventil vor, das sich insbesondere bei der Ausgestaltung gemäß Anspruch 11 einfach und damit preisgünstig zusammen mit dem Drosselelement herstellen läßt. Beim Befüllen der Fahrzeugbremsanlage wird das Rückschlagventil von Bremsflüssigkeit durchströmt, die Fahrzeugbremsanlage wird also parallel zur strömungsbehindernden Engstelle und infolgedessen mit geringem Strömungswiderstand befüllt. Die Befüllzeit wird verkürzt.

### Zeichnung

Ausführungsbeispiele der erfindungsgemäßen hydraulischen Fahrzeugbremsanlage sind in der Zeichnung dargestellt und nachfolgend näher beschrieben. Es zeigen die Figur 1 ein erstes Ausführungsbeispiel der erfindungsgemäßen Fahrzeugbremsanlage, Figur 2 einen Hauptbremszylinder der erfindungsgemäßen Fahrzeugbremsanlage im Längsschnitt, Figur 3 ein Detail des Hauptbremszylinders, Figur 4 ein weiteres Ausführungsbeispiel der erfindungsgemäßen Fahrzeugbremsanlage, Figur 5 eine Variante zum Ausführungsbeispiel der Figur 4, Figur 6 einen Längsschnitt durch eine Ladepumpe der erfindungsgemäßen Fahrzeugbremsanlage, Figur 7 ein Detail der Ladepumpe der Figur 6 im Querschnitt, Figur 8 eine abgewandelte Ausführungsform des in Figur 2 dargestellten Hauptbremszylinders im Bereich seines ersten Anschlusses gemäß der Erfindung und Figur 9 eine weitere, erfindungsgemäße Abwandlung des in Figur 2 dargestellten Hauptbremszylinders.

### Beschreibung der Ausführungsbeispiele

Die hydraulische Fahrzeugbremsanlage 2 gemäß der Figur 1 besitzt einen zweikreisigen Hauptbremszylinder 3 mit einem Vorratsbehälter 3a, mit einem ersten Anschluß 4, mit einem zweiten Anschluß 5, mit einem dritten Anschluß 6 und einem vierten Anschluß 7 sowie in einem Gehäuse 8 eine Bohrung 9, die in der Figur 2 dargestellt ist, und in dieser Bohrung 9 in Abhängigkeit vom Niedertreten des Bremspedals 23 verschiebbar einen ersten Kolben 10 und einen ebenfalls verschiebbaren zweiten Kolben 11, zwei Bremskreise I und II sowie den Bremskreisen I und II zugeordnete Radbremsen 12, 13, 14 und 15 mit jeweils wenigstens einem nicht dargestellten Radbremszylinder und zwischen dem Hauptbremszylinder 3 und den Radbremsen 12 bis 15 eine Blockierschutzeinrichtung 16, die zum automatischen Bremsen mittels wenigstens einer der Radbremsen 12 bis 15 weitergebildet ist.

Der Hauptbremszylinder 3 hat zwischen dem ersten Kolben 10 und dem zweiten Kolben 11 eine erste Druckkammer 17 und allein an den zweiten Kolben 11 angrenzend eine zweite Druckkammer 18. Zwei an dem zweiten Kolben 11 angebrachte Dichtmanschetten 19, 20 wirken in entgegengesetzten Richtungen und dichten die erste Druckkammer 17 und den dritten Anschluß 6 gegeneinander ab. Der erste Kolben 10 besitzt ebenfalls eine Dichtmanschette 21 und ist durch eine weitere Dichtmanschette 22 hindurch verschiebbar mittels eines Bremspedals 23 beispielsweise mit Unterstützung durch einen Bremskraftverstärker 24. Die Dichtmanschette 22 ist in dem Gehäuse 8 gehalten. Dem ersten Anschluß 4 zugeordnet besitzt der Hauptbremszylinder 3 beispielsweise eine in die Bohrung 9 mündende Schnüffelbohrung 25. Diese ist in an sich bekannter Weise so angeordnet, daß sie, wenn sich wie in der Figur 2 dargestellt der erste Kolben 10 in seiner Ausgangsstellung befindet, den ersten Anschluß 4 mit der ersten Druckkammer 17 verbindet. Dabei ist die Schnüffelbohrung 25 nahe bei der Dichtmanschette 22 angeordnet, so daß sie bei wenig Verschiebung des ersten Kolbens 10 von der Dichtmanschette 22 überfahren wird. Dabei wird die Schnüffelbohrung 25 hydraulisch von der ersten Druckkammer 17 getrennt. Wie in der Figur 2 dargestellt, hat die Schnüffelbohrung 25 einen relativ kleinen Durchmesser im Vergleich zu einer sich darüber befindenden Anschlußbohrung 26, die in den ersten Anschluß 4 mündet. Infolge des kleineren Durchmessers der Schnüffelbohrung 25 gegenüber der Anschlußbohrung 26 bildet die Schnüffelbohrung 25 die engste Stelle und also die am stärksten drosselnde Bohrung im Falle einer Durchströmung mit Druckmittel. Eine Rückstellfeder 27 bestimmt die Ausgangsstellung des ersten Kolbens 10. Hierbei stützt sich die Rückstellfeder 27 auf den zweiten Kolben 11 ab. Der zweite Kolben 11 besitzt ebenfalls eine Dichtmanschette 28 zum Abdichten der zweiten Druckkammer 18. In den zweiten Kolben 11 ist eine Ausnehmung 29 eingearbeitet, die sich nach Art eines Langloches in Längsrichtung des zweiten Kolbens 11 erstreckt. Quer zum zweiten Kolben 11 und dabei durch diese Ausnehmung 29 erstreckt sich ein hohles Anschlagelement 30. Dieses Anschlagelement 30 ruht beidendig in dem Gehäuse 8. Dabei ist das Anschlagelement 30 gemäß der Figur 3 mit einem C-förmigen Querschnitt derart ausgebildet, daß es den dritten Anschluß 6 hydraulisch mit der Bohrung 9 verbindet. Eine zweite Rückstellfeder 31 stützt sich in dem Gehäuse 8 ab und drückt den zweiten Kolben 11 in Richtung zum ersten Kolben 10 in eine Ausgangsstellung, die von dem Anschlagelement 30 bestimmt ist.

Innerhalb des zweiten Kolbens 11 befindet sich ein sogenanntes Zentralventil 32 mit einer Sitzfläche 33 am zweiten Kolben 11, mit einem gegen die Sitzfläche 33 anlegbaren elastischen Schließkörper 34, mit einer auf den Schließkörper 34 wirkenden Schließfeder 35, mit einem den Schließkörper 34 tragenden Steuerstößel 36 und mit einer in dem zweiten Kolben 11 befindlichen Längsbohrung 37, zu der der Steuerstößel 36 Radialspiel aufweist. In der in der Figur 2 gezeigten Ausgangsstellung des zweiten Kolbens 11 ist mittels der Schließfeder 35 auf dem Weg über den Schließkörper 34 der Steuerstößel 36 in Richtung des Anschlagelements 30 belastet und liegt an diesem an. Dabei hat der Schließkörper 34 von der Sitzfläche 33 einen axialen Abstand. Deshalb ist das Zentralventil 32 zwischen der Sitzfläche 33 und dem Schließkörper 34 sowie durch die Längsbohrung 37 um den Steuerstößel 36 herum für Druckmittel durchlässig. Infolgedessen kommuniziert die zweite Druckkammer 18 durch die Längsbohrung 37 hindurch mit der Ausnehmung 29 und dadurch auch durch das hohle Anschlagelement 30 hindurch mit dem dritten Anschluß 6. In der Praxis ist das Anschlagelement 30 ausgebildet als sogenannter Spannstift, also aus einem Element, das aus einem Streifen Federblech zu dem erwähnten C-förmigen Querschnitt geformt ist.

Erkennbar ist, daß die Längsbohrung 37 und der eingesteckte Steuerstößel 36 , je nach dem wie groß das erwähnte Radialspiel gewählt wird, einen Engpaß bilden, der beim Durchströmen nach Art einer Drossel wirkt. Ein zwischen der Sitzfläche 33 und dem Schließkörper 34 vorgewählter Abstand behindert ebenfalls eine Durchströmung und wirkt also nach Art einer Drossel. Durch Wahl eines kleinen Abstandes übernimmt das Zentralventil zusätzlich auch die Aufgabe einer Drossel. Der in der Figur 2 dargestellte Hauptbremszylinder 3 ist ein Erzeugnis der Firma Alfred Teves GmbH und wird eingesetzt in Bremsanlagen, die für Blockierschutzbetrieb oder/und Antriebsschlupfregelung eingerichtet sind.

Die Firma Alfred Teves GmbH liefert auch Hauptbremszylinder, bei denen in Abweichung von der Figur 2 auch der erste Kolben 10 mit einem Zentralventil der beschriebenen Art ausgerüstet ist. Zur Beschreibung der Erfindung wurde der Einfachheit halber eine Ausführung gemäß der Figur 2 ausgesucht, um nachzuweisen, daß Drosselwirkung zwischen den Anschlüssen 4 und 5 mit unterschiedlichen Mitteln erzeugbar ist. In den genannten Ausführungsbeispielen erfolgt Drosselwirkung unter Verwendung handelsüblicher Mittel.

Die Blockierschutzeinrichtung 16 ist beispielsweise eine der DE 42 32 311 C1 entnehmbare Blockierschutzeinrichtung des sogenannten Rückfördertyps und besitzt für den Bremskreis I eine Rückförderpumpe 40 und für den Bremskreis II eine Rückförderpumpe 41. Ferner besitzt die Blockierschutzeinrichtung 16 für jede der Radbremsen 12 bis 15 eine eigene Bremsdruckmodulationsventilanordnung 42, 43, 44 bzw. 45, bestehend aus jeweils einem Bremsdruckaufbauventil 46 und einem jeweiligen Bremsdruckabsenkventil 47, sowie für jeden Bremskreis I und II eine Speicherkammer 48 bzw. 49. Des weiteren sind beispielsweise eine erste Dämpferkammer 50 für den Bremskreis I und eine zweite Dämpferkammer 51 für den Bremskreis II sowie eine Dämpferdrossel 52 bzw. 53 vorgesehen. Ein Motor 54 ist als Antrieb den Rückförderpumpen 40 und 41 zugeordnet. Ausgehend von den Radbremsen 12 bis 15 sind die ihnen jeweils zugeordneten Bremsdruckaufbauventile 46 mittels Rückschlagventilen 55 in Richtung zum Hauptbremszylinder 3 umgehbar bei einem Druckgefälle um das jeweilige Bremsdruckaufbauventil 46. Beispielsweise sind die Bremsdruckaufbauventile 46 mit Drosseln 56 kombiniert.

Die normalerweise offen stehenden Bremsdruckaufbauventile 46 befinden sich zwischen den jeweiligen Radbremsen 12 bis 15 und dem Hauptbremszylinder 3, so daß durch Betätigung des Bremspedals 23 im Hauptbremszylinder 3 erzeugter Druck normalerweise in die Radbremsen 12 bis 15 gelangt. Jeweils ebenfalls mit den Radbremsen 12 bis 15 verbundene Bremsdruckabsenkventile 47 sind in der Normalstelllung geschlossen und ermöglichen in elektrisch gesteuerter Stellung einen drosselnden Durchlaß und sind mit der Rückförderpumpe 40 bzw. 41 des jeweiligen Bremskreises eingangsseitig und der Speicherkammer 48 bzw. 49 verbunden. Ausgangsseitig an die Rückförderpumpen 40 bzw. 41 schließen sich die Dämpferkammern 50 bzw. 51 an. In Richtung zum Hauptbremszylinder 3 sowie zu den jeweiligen Bremsdruckaufbauventilen 46 folgen die Drosseln 52 bzw. 53.

Zur Blockierschutzeinrichtung 16 gehört noch ein Steuergerät 57, das umrißhaft in der Figur 1 dargestellt ist, sowie die nicht dargestellten Räder, die mittels der Radbremsen 12 bis 15 bremsbar sind, zugeordnete Raddrehungssensoren 58 bis 61, an die das Steuergerät 57 angeschlossen ist. An das Steuergerät 57 sind zum einen die einzelnen Ventile 46 und 47 der Bremsdruckmodulationsventilanordnungen 42 bis 45 und andererseits der Motor 54 angeschlossen. Desweiteren kann beispielsweise im Bereich des Bremspedals 23 ein Bremspedalschalter 62 oder dergleichen angeordnet und mit dem Steuergerät 57 verbunden sein.

Bewirkt ein im Hauptbremszylinder 3 erzeugter Druck beispielsweise an dem der Radbremse 12 zugeordneten Rad eine Radblockiergefahr, so wird das zugeordnete Bremsdruckaufbauventil 46 geschlossen und je nach Größe der Radblockiergefahr das Bremsdruckabsenkventil 47 wenigstens eine Zeit lang geöffnet sowie der Motor 54 zum Antreiben der Rückförderpumpe 40 eingeschaltet. Die Folge davon ist, daß der Druck des Hauptbremszylinders 3 gegenüber der Radbremse 12 abgesperrt ist und aus der Radbremse 12 zur Speicherkammer 48 hin und zur Rückförderpumpe 40 hin Druckmittel abfließt und eine Bremsdruckabsenkung und damit eine Verringerung der Radblockiergefahr bewirkt. Das der Rückförderpumpe 40 zufließende Druckmittel wird von dieser durch die Dämpferkammer 50 und Dämpferdrossel 52 zum Hauptbremszylinderr 3 zurück gefördert. Ist die Radblockiergefahr ausreichend verringert, so wird das Bremsdruckabsenkventil 47 geschlossen und die Rückförderpumpe 40 entleert die Speicherkammer 48. Die Rückförderpumpe 40 sorgt also dafür, daß im Blockierschutzbetrieb aus einer Radbremse abgelassenes Druckmittel zur erneuten Bremsdruckerzeugung im Hauptbremszylinder 3 zur Verfügung steht.

Weil im Beispiel je Radbremse 12 bis 15 eine Bremsdruckmodulationsventilanordnung vorgesehen ist, ist das Steuergerät 57 vorzugsweise so eingerichtet, daß es bei unterschiedlichen Radblockiergefahren der einzelnen Räder deren zugeordnete Bremsdruckmodulationsventilanordnungen individuell steuert.

Zum automatischen Bremsen ist die Blockierschutzeinrichtung 16 zusätzlich ausgestattet mit einem Umschaltventil 64 für den Bremskreis I und einem weiteren Umschaltventil 65 für den Bremskreis II sowie mit Druckbegrenzungsventilen 66 und 67 und steuerbaren Wegeventilen 68 und 69. Dabei sind die Umschaltventile 65 und 66 zwischen den jeweiligen Drosseln 52 und 53 und dem Hauptbremszylinder 3 in die Bremskreise I und II eingebaut, wobei sich auch die Umschaltventile 64 und 65 zwischen dem Hauptbremszylinder 3 und den Bremsdruckmodulationsventilanordnungen 42, 43 bzw. 44, 45 befinden und letztere prinzipiell von den Rückförderpumpen 40 bzw. 41 durch die Drosseln 52 bzw. 53 hindurch mit Druckmittelmengen und dabei mit Druck versorgbar sind. Die Druckbegrenzungsventile 66 und 67 sind in diesem Beispiel in die Umschaltventile 64 und 65 integriert und beispielsweise gemäß dem bekannten Stand der Technik sind zu diesem Zweck die Umschaltventile 64 und 65 als elektromagnetisch betätigbare Sitzventile ausgebildet, wobei das Andrücken von Schließelementen auf Ventilsitze über druckbegrenzende Federn erfolgt. Die Kombinationen aus den Umschaltventilen 64, 65 und den Druckbegrenzungsventilen 66, 67 sind umgehbar mittels Rückschlagventilen 70 und 71, so daß dann, wenn auf automatischen Bremsbetrieb geschaltet ist, bei ausreichender Betätigung des Bremspedals 23 Druck aus dem Hauptbremszylinder 3 sich zu den Bremsdruckmodulationsventilanordnungen 42 bis 45 fortpflanzen kann. Die steuerbaren Wegeventile 68 und 69 sind beispielsweise als elektromagnetisch steuerbare 2/2-Wegeventile ausgebildet und zwischen dem zweiten Anschluß 5 des Hauptbremszylinders 3 und der Rückförderpumpe 40 auf deren Eingangsseite bzw. dem vierten Anschluß 7 des Hauptbremszylinders und der Rückförderpumpe 41, ebenfalls auf deren Eingangsseite, angeordnet. Die Wegeventile 68, 69 sind bei dieser elektromagnetischen Ausführung normalerweise geschlossen. Ein Öffnen dieser 2/2-Wegeventile 68, 69 bewirkt, daß die Rückförderpumpen 40, 41 durch diese 2/2-Wegeventile 68, 69 hindurch mit den Anschlüssen 5 und 7 des Hauptbremszylinders 3 kommunizieren. Werden die Rückförderpumpen 40 und 41 als sich selbst füllende Pumpen ausgebildet, so können sie je nach temperaturabhängiger Beschaffenheit des Druckmittels im Vorratsbehälter und den Bremskreisen I und II sich wenigstens teilweise selbst füllen.

Entsprechend der Weiterbildung der Blockierschutzeinrichtung 16 für automatischen Bremsbetrieb ist auch das Steuergerät 57 weitergebildet. Zu diesem Zweck ist es eingerichtet, um zum automatischen Bremsen den Motor 54 einzuschalten, innerhalb der Ventilkombinationen 64, 66 und 65, 67 die Druckbegrenzungsfunktion zu aktivieren und die Wegeventile 68, 69 zu öffnen. Infolgedessen können sich die Rückförderpumpen 40 und 41, sofern sie selbstsaugend ausgebildet sind, mit Druckmittel durch die Wegeventile 68 und 69 selbst versorgen und Druckmittel vor die Ventilkombinationen 64, 66 bzw. 65, 67, vor die Rückschlagventile 70 bzw. 71 und vor die diversen Bremsdruckmodulationsventilanordnungen 42 bis 45 drücken. Dabei ist die Geschwindigkeit von Druckanstiegen ausgangsseitig der Rückförderpumpen 40 bzw. 41 von der Hubfrequenz und davon abhängig, bis zu welchem Grad die Rückförderpumpen 40, 41 anläßlich von Füllhüben gefüllt sind.

Zur erfindungsgemäßen Verbesserung der Füllung der Rückförderpumpen 40 bzw. 41 ist der hydraulischen Fahrzeugbremsanlage 2 eine Pumpeinrichtung 75 zugeordnet. Im Ausführungsbeispiel enthält diese Pumpeinrichtung 75 eine Pumpe 76, einen Motor 77 und ausgangsseitig der Pumpe 76 ein Rückschlagventil 78. Eingangsseitig ist die Pumpe 76 mittels einer Saugleitung 79 und ausgangsseitig stromabwärts des Rückschlagventils 78 mit einer Ladedruckleitung 80 verbunden. Die Saugleitung 79 geht von einem Vorratsbehälter 3a oberhalb des Hauptbremszylinders 3 aus. Die Ladeleitung 80 mündet in eine Hauptbremsleitung 81, die für den Bremskreis I von dem Anschluß 5 des Hauptbremszylinders 3 ausgeht und zur Blockierschutzeinrichtung 16 führt. Der Bremskreis II besitzt eine Hauptbremsleitung 82, die vom vierten Anschluß 7 des Hauptbremszylinders ebenfalls zur Blockierschutzeinrichtung 16 führt. Beispielsweise kann gemäß der DE 42 32 311 C1 der Pumpe 76 ein Ladedruckbegrenzungsventil 83 nachgeordnet sein. Es kann auch eine Drossel 84 vorhanden sein, die zumindest die Eigenschaft bewirkt, daß bei ausgeschaltetem Motor 77 zwischen der Pumpe 76 und dem Rückschlagventil 78 kein Druck vorhanden sein kann bzw. verschwindet und somit selbst bei schwacher Betätigung des Bremspedals 23 erzeugter Druck im Schließ- und damit Abdichtsinn im Rückschlagventil 78 wirkt. Das Steuergerät 57 ist des weiteren so eingerichtet, daß es für automatisches Bremsen den Motor 77 einschaltet und dadurch die Pumpe 76 angetrieben wird.

Das Einschalten der Pumpe 76 hat zur Folge, daß Druckmittel durch das Rückschlagventil 78 und die Ladedruckleitung 80 hindurch in die Hauptbremsleitung 81 strömt und bedingungsabhängig auch einen Druckmittelstrom zur ersten Druckkammer 17 verursacht. Als Folge davon werden die erste Druckkammer 17 und auch die Schnüffelbohrung 25 durchströmt. Das Durchströmen der Schnüffelbohrung 25 bewirkt wegen deren engem und dadurch drosselnden Querschnitt eine Druckdifferenz zwischen der ersten Druckkammer 17 und dem Vorratsbehälter 3a des Hauptbremszylinders 3. Dieser mittels der Schnüffelbohrung 25 angestaute Druck wirkt treibend auf Druckmittel, das sich zwischen der Ladedruckleitung 80 und dem 2/2-Wegeventil 68 befindet. Durch Öffnen des Wegeventils 68 und Einschalten der Rückförderpumpe 40 entsteht ein Druckmittelstrom. Dieser angestaute Druck kann also das Füllen der Rückförderpumpe 40 zumindest unterstützen oder gar vollständig übernehmen, so daß im letzteren Fall die Rückförderpumpe 40 in einer für den Blockierschutzbetrieb ausreichenden Weise als Freikolbenpumpe ausbildbar ist.

Die Förderleistung der Pumpe 76 und der Querschnitt der Schnüffelbohrung 25 und, falls die Drossel 84 vorhanden ist, deren Querschnitt, sind so aufeinander abgestimmt, daß zumindest bei winterlichen Temperaturen in der ersten Druckkammer 17 des Hauptbremszylinders 3 ein Druck in der Größenordnung von beispielsweise 5 bis 10 bar angestaut wird. Ein solcher Druck reicht dann auch aus, bei Zähflüssigkeit des Druckmittels in der Hauptbremsleitung 81 und innerhalb der Blockierschutzeinrichtung 16 die theoretische Förderleistung der Rückförderpumpe 40, bestimmbar aus Hubfrequenz und Hubvolumen, vorteilhaft ausnutzbar zu machen.

In zur Erfindung gehörender Weise wird ein in der ersten Druckkammer 17 des Hauptbremszylinders 3 zur Verfügung stehender Druck auch dazu benützt,den zweiten Kolben 11 zu verschieben, dabei das Zentralventil 32 zu schließen und in der zweiten Druckkammer 18 Druck aufzubauen, derart, daß mit Druckmittel aus der zweiten Druckkammer 18 durch das bereits erwähnte 2/2-Wegeventil 69, das ebenfalls zu öffnen ist, auch die Rückförderpumpe 41 gut füllbar wird zum Erreichen hoher Förderleistung.

Einem beispielsweise eingebauten Ladedruckbegrenzungsventil 83 kommt die Aufgabe zu, bei niedriger, winterlicher Temperatur, wenn also das Druckmittel besonders zähflüssig ist, das Anstauen eines unerwünscht hohen Ladedruckes mittels der Schnüffelbohrung 25 zu begrenzen. Alternativ dazu ist es natürlich auch möglich, beispielsweise in einer in der DE 38 31 426 C2 angedeuteten Weise, mittels eines Mikroprozessors unerwünscht hohen Druck zu erkennen und dementsprechend auf den Pumpbetrieb einzuwirken. Man kann also beispielsweise den elektrischen Strom des Motors 77 begrenzen mit der Folge einer Druckbegrenzung in der ersten Druckkammer 17 des Hauptbremszylinders 3.

Bei sommerlichen Temperaturen, wenn also das Druckmittel dünnflüssig ist, wird die Schnüffelbohrung 25 weniger Druckanstieg erzeugen, aber es wird bei der genannten Dünnflüssigkeit des Druckmittels auch weniger Druckgefälle gebraucht für Strömungen zum Füllen der Rückförderpumpen 40 bzw. 41 während Füllhüben. Werden die Rückförderpumpen 40 und 41 als selbstansaugende Rückförderpumpen ausgebildet, so könnte man sogar durch Versuche ermitteln, ob man bei sommerlichen Temperaturen die Pumpe 76 ausgeschaltet lassen kann.

Das erwähnte automatische Bremsen kann beispielsweise automatisches Bremsen eines oder mehrerer mit Überschußdrehmoment angetriebener Räder sein zu dem Zweck, Antriebsschlupf auf einen günstigen Wertebereich zu beschränken. Das automatische Bremsen kann aber auch dazu dienen, so wie dies in der DE 42 32 311 C1 beschrieben ist, das Fahrverhalten eines mit der erfindungsgemäßen Fahrzeugbremsanlage ausgerüsteten Fahrzeugs zu verbesseren, insbesondere beim Durchfahren von Kurven oder bei Spurwechseln anläßlich von Überholvorgängen. Hierzu kann beispielsweise dem Steuergerät 57 ein Gerät 85 zum Messen des Gierverhaltens des Fahrzeugs zugeordnet sein. Dabei spielt es an sich keine Rolle, ob als ein solches Gerät ein altbekannter Schwungmassenkreisel oder eine modernere Lösung wie ein optisches Gyroskop oder ein auf Coriolisbeschleunigung reagierendes Schwingungssystem verwendet wird. Mit der Gattung "Gerät zum Messen des Gierverhaltens des Fahrzeugs" ist also irgendein Gerät gemeint, mittels dem die Drehrate des Fahrzeugs um seine Hochachse meßbar ist, so daß unter Berücksichtigung der tatsächlichen oder geschätzten Geschwindigkeit des Fahrzeugs und des gemessenen Lenkwinkels dessen gegebenenfalls vorhandene Übersteuerungs- oder Untersteuerungstendenz erkennbar wird und über das Steuergerät 57, das automatisches Bremsen mittels wenigstens einer Radbremse auslöst, korrigierbar ist.

Das Anstauen von Druck für die Füllung der Rückförderpumpe 40 wurde, ausgehend von der Figur 2, beschrieben im Zusammenhang mit der als Drossel wirkenden Schnüffelbohrung 25, die dem Bremskreis I, zu dem die Rückförderpumpe 40 gehört, zugeordnet ist. Anläßlich der Beschreibung des Hauptbremszylinders 3 gemäß der Figur 2 wurde bereits darauf hingewiesen, daß anstelle des ersten Kolbens 10, der mit der genannten Schnüffelbohrung 25 ein Ventil bildet, wobei die Schnüffelbohrung 25 auch als Drossel benutzbar ist, auch ein anderer erster Kolben verwendbar ist, der analog zu dem zweiten Kolben 11 ein Zentralventil 32 aufweist. Das Drosseln bei angetriebener Pumpe 76 erfolgt dann zwischen der Sitzfläche 33 und dem Schließkörper 34 oder/und in der Längsbohrung 37 entlang dem Steuerstößel 36. Sollten Drosselungen in den genannten Weisen mittels am Markt befindlicher Hauptbremszylinder nur unzureichend sein, dann macht es keine Schwierigkeit, beispielsweise Schnüffellöcher 25 mit kleinerem Durchmesser zu bohren oder aber konstruktiv kleinere Abstände zwischen Sitzflächen 33 und Schließkörper 34 durch Verkürzen der Steuerstößel 36 vorzusehen. Gleiches gilt natürlich auch für die Durchmesser der Längsbohrung 37 und des Steuerstößels 36.

Die hydraulische Fahrzeugbremsanlage 2a gemäß der Figur 4 unterscheidet sich von der Fahrzeugbremsanlage gemäß der Figur 1 dadurch ,daß der technische Aufwand für das der Pumpe 76 der Figur 1 nachgeordnete Ladedruckbegrenzungsventil 83 eingespart ist. Des weiteren ist eine in der Figur 1 außerhalb der Pumpe 76 dargestellte Drossel 84, die in eine um die Pumpe herum führende Leitung eingebaut ist, in die Pumpe 76a gemäß der Figur 4 verlegt und in einer nachfolgend beschriebenen Weise ausgebildet.

In der Fahrzeugbremsanlage 2a gemäß der Figur 4 besitzt die von einem Motor 77 antreibbare Pumpe 76a innerhalb des Pumpensymbols und damit innerhalb eines nicht im einzelnen dargestellten Gehäuses gemäß einem Gedanken der Erfindung einen Rückströmkanal 92, der sowohl mit dem Ausgang 91 als auch dem Eingang 90 permanent kommuniziert und einen drosselnden Querschnitt aufweist. Dieser drosselnde Querschnitt bewirkt dann, wenn beispielsweise mittels des Bremspedals 23 in dem Hauptbremszylinder 4 ein Panikbremsdruck erzeugt wird, der durch die Hauptbremsleitung 81 und die Ladedruckleitung 80 das Rückschlagventil 78 schließt, daß bei noch eingeschalteter Pumpe 76a durch Druckmittelrückfluß durch den Rückströmkanal 92 innerhalb der Pumpe 76a eine vorgewählte Druckgrenze nicht überschritten wird. Zu diesem Zweck ist einerseits ein ausreichender Durchgang von dem Ausgang 91 zu dem Eingang 90 erforderlich, und andererseits ist der Durchgang zu dem Zweck, daß ausreichend Ladedruck zustandekommt, zu drosseln, was entlang dem Rückströmkanal 92 mittels des Symbols der Drossel 84a dargestellt ist. Ein praktisches Ausführungsbeispiel, das gegenüber dem Ausführungsbeispiel der Figur 1 raumsparend ist, ist in den Figuren 6 und 7 dargestellt.

Ziel ist es, wenn das verwendete Druckmittel bei winterlicher Temperatur eine zähe Viskosität aufweist, zum automatischen Bremsen und damit der Versorgung der Rückförderpumpe 40 in der Hauptbremsleitung 81 einen Einspeisedruck von beispielsweise 5 bar zur Verfügung zu haben. Demnach ist die Drossel 84a so zu bemessen, daß, unter Berücksichtigung eines bei der Durchströmung des Rückschlagventils 78 sich einstellenden Druckgefälles, die Pumpe 76a im Förderbetrieb dann, wenn die Rückförderpumpe 40 Druckmittel aufnimmt, einen um das genannte Druckgefälle über den genannten 5 bar liegenden Druck liefert. Wenn die Rückförderpumpe 40 vorübergehend kein Druckmittel benötigt, beispielsweise weil ein automatisches Bremsen nicht mehr notwendig ist, die Pumpe aber weiterhin beispielsweise zwei Sekunden lang angetrieben wird, steigt der Druck in der Hauptbremsleitung 81 an. Der Druck wird aber letztlich durch Rückfluß innerhalb der Pumpe 76a in der zur Erfindung gehörenden Weise niedrig gehalten, so daß der dieserart begrenzte Druck einerseits in der Fahrzeugbremsanlage 2a nicht stört und andererseits die Pumpe 76a oder den Motor 77 nicht beschädigt. Eine dem Rückschlagventil 78 zugeordnete Schließfeder 93 sorgt dafür, daß vor Beginn eines mittels des Bremspedals 23 einleitbaren Bremsvorgangs das Rückschlagventil 78 geschlossen ist zum Vermeiden von Abströmen von Druckmittel aus der Hauptbremsleitung zur Pumpe 76a und schließlich zum Vorratsbehälter 3a. Denn dadurch würde das Bremspedal 23 absinken oder gar die Pumpkapazität des Hauptbremszylinders 3 während der Dauer eines Bremsvorganges erschöpft.

Gemäß der Figur 5 ist das in der Figur 4 enthaltene Rückschlagventil 78 ersetzbar durch ein Differenzdruckregelventil 94, das gemäß seinem Symbol mit dem Pfeil in nur einer Richtung, nämlich hin zur Hauptbremsleitung 81 durchströmbar ist, sobald eine Druckdifferenz zwischen dem Ausgang 91 und der Hauptbremsleitung 81 einen vorgewählten Wert erreicht. Dieser Wert ist vorwählbar durch Auswahl der die Druckdifferenz bestimmenden Feder 95 in einer an sich bekannten und deshalb hier nicht zu beschreibenden Weise. Im Prinzip ist das Differenzdruckregelventil 94 konstruktiv gleichartig ausbildbar wie das Rückschlagventil 78, aber schaltungstechnisch besteht der Unterschied, daß man bei Rückschlagventilen 78 Wert legt auf ein sicheres Schließen, aber ein Öffnen bei geringem Druckverlust, während man bei einem Differenzdruckregelventil höhere Druckdifferenzen zwischen einem Eingang und einem Ausgang haben will. Im Fall der Figur 5 ist die Feder 95 so ausgewählt, daß bei stillstehender Pumpe 76a und bei eingeschalteter Rückförderpumpe 40 diese beispielsweise während Ansaughüben gegebenenfalls Dampfblasen erzeugt, ohne daß sich das Differenzdruckregelventil 94 öffnet. Dadurch wird erreicht, daß innerhalb der Fahrzeugbremsanlage gegebenenfalls vorhandene Blasen keine von außen durch die Niederdruckpumpe 76a eingesaugten Luftblasen sind. Je nach der Fördereigenschaft der mit der Drossel 84a ausgerüsteten Pumpe 76a wird aber vorzugsweise die Feder 95 stärker dimensioniert, damit auch dann, wenn im Pumpbetrieb die Pumpe 76a durch ihren Eingang 90 Luft ansaugen sollte, diese Luftblasen das Differenzdruckventil 94 nicht passieren, sondern vom Ausgang 91 möglichst fernbleiben und durch den Rückströmkanal 92 wieder zum Eingang 90 gelangen, was vorteilhafterweise dadurch unterstützt wird, daß die Förderleistung von Zahnradpumpen oder dergleichen bei lufthaltigem Druckmittel wesentlich abnimmt oder gar verschwindet. Erkennbar vermindert also ein auf eine höhere Druckdifferenz eingestelltes Differenzdruckregelventil 94 gegenüber einem auf geringere Druckdifferenz reagierenden Rückschlagventil 78 die Gefahr des Eindringens von Umgebungsluft in die Hauptbremsleitung 81.

Beispielsweise ist die Pumpe 76a ausgebildet gemäß den Figuren 6 und 7 mit einem mittels des Motors 77 antreibbaren Zahnrad 100 und einem zum Zahnrad 100 exzentrisch gelagerten, das Zahnrad 100 umgebenden und mit ihm kämmenden sogenannten Innenzahnring 101, weswegen die Pumpe 76a den Namen "Innenzahnringpumpe" hat. Diese Pumpe 76a ist aber auch bekannt unter dem Namen "Gerotorpumpe". Zur Pumpe 76a gehören noch ein Gehäuse 102 und ein Gehäusedeckel 103 und eine Antriebswelle 104 für das Zahnrad 100.

Das Zahnrad 100 ist gelagert und antreibbar mittels einer beispielsweise eingepreßten Antriebswelle 104, die an einem zum Motor 77 ausgerichteten Ende 105 eine quer verlaufende nutartige Ausnehmung 106 hat. Eine aus dem Motor 77 herausragende Motorwelle 107 ist zu einem Mitnehmer 108 abgeflacht, wobei der Mitnehmer 108 in die Ausnehmung 106 eintaucht zur Übertragung von Drehmomenten. Die Antriebswelle 104 ist in einer im Gehäuse 102 befindlichen Lagerbohrung 109 und einer in dem Gehäusedeckel 102 befindlichen Lagerbohrung 110 drehbar gelagert.

Angrenzend an die Lagerbohrung 109 ist im Gehäuse eine Bohrung 111 zu der Lagerbohrung 109 exzentrisch, also achsversetzt, angeordnet. Die Bohrung 111 nimmt den Innenzahnring 101 mit wenig Radialspiel drehbar auf. In axialer Richtung ist die Tiefe der Bohrung 111 begrenzt durch eine gehäusefeste quer zur Bohrung 111 ausgerichtete Fläche 112. Diese Fläche 112 hat von einer gehäusedeckelseitigen Begrenzungsfläche 113 einen vorgewählten Abstand. An dieser Begrenzungsfläche 113 liegt eine Deckelfläche 114 an. Zwischen der Deckelfläche 114 und der Begrenzungsfläche 113 finden das Zahnrad 100 und der Innenzahnring 101 Platz mit einem später beschriebenen Axialspiel 131.

Von der Fläche 112 gehen eine erste bogenförmig um die Lagerbohrung 109 gekrümmte Ausnehmung 115 und eine zweite ebenfalls gekrümmte Ausnehmung 116 aus. Beide Ausnehmungen erstrecken sich je über einen Bogen, der weniger als 180° einschließt. Die Ausnehmungen sind im wesentlichen nutartig ausgebildet. Die erste Ausnehmung 115 ist durch eine Anschlußbohrung 117 an den Eingang 90, der sich im Gehäuse 102 befindet, angeschlossen und bildet dieserart einen Ansaugkanal, der zum Zahnrad 100 und zum Innenzahnring 101 mündet. An die zweite Ausnehmung 116 ist durch eine Verbindungsbohrung 118 der Ausgang 91, der sich ebenfalls in dem Gehäuse 102 befindet, angeschlossen, so daß die Ausnehmung 116 einen bei dem Zahnrad 100 und dem Innenzahnring 101 beginnenden Druckkanal bildet. Der Eingang 90 und der Ausgang 91 sind beispielsweise in Form von Gewindeanschlüssen ausgebildet.

Der Gehäusedeckel 103 ist zum Motor 77 hin mit einem rohrartigen Fortsatz 119 versehen, in den ein Zentrieransatz 120 des Motors eingesteckt ist. Wenigstens eine Schraube 121 ist vorgesehen zum Zusammenhalten des Gehäuses 102, des Gehäusedeckels 103 und des Motors 77. Ein Dichtring 122 ist zwischen das Gehäuse 102 und den Gehäusedeckel 103 eingelegt. Ein weiterer Dichtring 123 sorgt für eine Abdichtung zwischen dem Fortsatz 119 und dem Motor 77. Ein zusätzlicher Dichtring 124 umschließt abdichtend die Motorwelle 107. Innerhalb des Fortsatzes 119 und dabei zwischen dem Motor 77 und dem Gehäusedeckel 3 befindet sich ein Hohlraum 125. Dieser ist außerhalb der Projektion der Bohrung 111 durch eine sich durch den Gehäusedeckel 103 erstreckende erste Verbindungsbohrung 126 und eine sich in das Gehäuse 102 erstreckende zweite Verbindungsbohrung 127 an die Anschlußbohrung 117 und somit den Eingang 90 angeschlossen. Durch die Antriebswelle 104 erstreckt sich eine Druckausgleichsbohrung 128.

Das Zahnrad 100 weist beispielsweise sechs Zähne 129 und der Innenzahnring 101 demgemäß sieben Zahnlücken 130 auf. Die Form der Zähne und der Zahnlücken ist nicht Gegenstand der Erfindung, weil hier auf ein Zahnrad und einen Innenzahnring, so wie er im Handel erhältlich ist, zurückgegriffen wird. Wenn der Motor 77 das Zahnrad 100 antreibt, wird auch der Innenzahnring 101 gedreht. Dabei tauchen im Bereich der Ausnehmung 115 Zähne 129 aus Zahnlücken 130 aus, und im Bereich der Ausnehmung 116 tauchen Zähne 115 nacheinander in Zahnlücken 130 ein mit der an sich bekannten Folge, daß von der ersten Ausnehmung 115 aus Druckmittel zwischen das Zahnrad 100 und den Innenzahnring 101 einfließt und nachfolgend heraus und in die zweite Ausnehmung 116 gedrückt wird. Demzufolge wird sich bei richtig gewählter Drehrichtung der Antriebswellen 104 am Ausgang 91 ein Druck einstellen, der höher ist als ein Druck am Eingang 90. Anders ausgedrückt: Zwischen der zweiten Ausnehmung 116 und der ersten Ausnehmung 115 entsteht ein Druckgefälle.

Dieses Druckgefälle führt wegen des bereits angesprochenen Axialspiels des Zahnrades 100 zwischen der Fläche 112 und der Deckelfläche 114 und auch des Axialspiels des Innenzahnringes 101 zwischen diesen genannten Flächen 112 und 114 zu Leckageströmungen, also zu Rückströmungen innerhalb der Pumpe 76a. Dadurch verursachte Volumenströme sind um so größer, je größer das Druckgefälle, je größer die Axialspiele und je dünnflüssiger das Druckmittel z. B. infolge von Erwärmung im Pumpenbetrieb oder bei sommerlichen Temperaturen ist. Beispielsweise sind beide Axialspiele gleich groß ausgebildet und in der Figur 6 deshalb mit dem gemeinsamen Bezugszeichen 131 bezeichnet. Deshalb sind der Einfachheit halber auch die Axialspiele zwischen dem Zahnrad 100 bzw. dem Innenzahnring 101 und der Fläche 112 gleich groß eingezeichnet. Dadurch ist erkennbar, daß das genannte Druckgefälle in dem durch das Axialspiel 131 bestimmten Querschnitt Druckmittel aus dem Bereich der zweiten Ausnehmung 116 um die Antriebswelle 104 herum in den Bereich der ersten Ausnehmung 115 drückt. In zur Erfindung gehörender Weise wird wenigstens eines der genannten Axialspiele größer als bei handelsüblichen Pumpen gewählt zu dem Zweck, daß durch die gegenüber handelsüblichen Pumpen verstärkte Rückströmung eine Pumpendruckbegrenzung in dem zur Figur 4 beschriebenen Sinne resultiert, wodurch man das Ladedruckbegrenzungsventil 83 in der Fahrzeugbremsanlage der Figur 1 weglassen kann und somit Kosten und Gewicht spart.

Wie bereits angedeutet, wird beispielsweise nur dem Zahnrad 100 das vergrößerte Axialspiel zugeordnet. Dies wird dadurch erreicht, daß man einen handelsüblichen Innenzahnring 101 verwendet und ein handelsübliches Zahnrad 100 durch Nachbearbeitung verkürzt. Hierfür kann ein beispielsweise aus Stahl gesintertes Zahnrad 100 magnetisch fixiert und stirnseitig geschliffen werden. Erkennbar ist, daß es wegen des geringeren Durchmessers des Zahnrades 100 gegenüber dem größeren Durchmesser des Innenzahnringes 101 billiger nachbearbeitet werden kann. Durch diese Nachbearbeitung bzw. das dadurch hergestellte Axialspiel 131 kommt noch der bereits angedeutete funktionelle Vorteil zustande, daß beim Ansaugen von lufthaltigem Druckmittel oder Luft allein das Angesaugte leicht genug den Weg von der zweiten Ausnehmung 116 zur ersten Ausnehmung 115 in durch das Axialspiel 131 festgelegten Querschnitten findet. Der Grund hierfür ist, daß infolge der Luft- oder Gasblasen das im Axialspiel befindliche Medium weniger kinematische Zähigkeit aufweist als luftfreies Druckmittel. Luft- oder Gasblasen oder gar Luft allein bewirken deshalb, daß die Pumpe 76a keinen nennenswerten Druck zum Ausgang 91 liefert.

Weitere Rückströmkänale sind vorhanden infolge der Anordnung der Ausgleichsbohrung 128 und der Verbindungsbohrungen 126 und 127 und wegen eines unvermeidlichen Lagerspiels zwischen der Antriebswelle 104 und der Lagerbohrung 109 und wegen eines ebenfalls unvermeidlichen Lagerspiels zwischen der Antriebswelle 104 und der Lagerbohrung 110. Diese Rückströmungskanäle werden bei der Auswahl des Axialspieles 131 berücksichtigt. Weitere Rückströmungskanäle sind deshalb vorhanden, weil auf dem Weg aus dem Bereich der ersten Ausnehmung 115 zu dem Bereich der zweiten Ausnehmung 116 Zähne 129 aus Zahnlücken 130 des Innenzahnringes 101 austauchen. Vorteilhafterweise wird in den vorhandenen Rückströmkanälen vorzugsweise nur das Axialspiel 131 zur Erfüllung der gestellten Aufgabe anders als üblich dimensioniert. Erkennbar bildet der wenigstens eine Rückströmkanal, der von der Ausnehmung 116 ausgeht und zur Ausnehmung 115 führt, eine sogenannte Laminardrossel infolge von Flüssigkeitsreibung entlang der Fläche 112 und entlang den Stirnseiten des Zahnrades 100 und des Innenzahnrings 101. Da es also vorteilhafterweise auf eine ausgewählte Drosselung ankommt, ist in der Figur 4 in das Symbol der Pumpe 76a das Symbol der Drossel 84a eingezeichnet.

Infolge der Weiterbildung des an sich unvermeidlichen Gehäusedeckels 102 zu einem Befestigungselement infolge der Anbringung des Fortsatzes 119 für den Motor 177 ist die Baueinheit aus Motor 77 und Pumpe 76a preisgünstig herstellbar.

Der erfindungsgemäße Gedanke, gezielt Rückströmungen zur Pumpendruckbegrenzung zu erzeugen, ist auch übertragbar auf andere Zahnradpumpen, die beispielsweise Paare von Stirnzahnrädern oder andere verzahnte und miteinander in Eingriff befindliche Pumpenelemente aufweisen.

Die Figuren 8 und 9 zeigen Abwandlungen des in der Figur 2 dargestellten Hauptbremszylinders 3. Zur Vermeidung von Wiederholungen werden in den Figuren 8 und 9 für gleiche Bauteile dieselben Bezugsgrößen wie in der Figur 2 gewählt, und es wird insoweit auf die jeweiligen Ausführungen verwiesen.

Der mittels eines nicht dargestellten Bremspedals betätigbare erste Kolben 10 des in der Figur 8 dargestellten Hauptbremszylinders 3 weist ein Zentralventil 132 wie der zweite Kolben 11 des in der Figur 2 dargestellten Hauptbremszylinders 3 auf. An seiner der ersten Druckkammer 17 abgewandten Seite ist der Kolben 10 zur Begrenzung seines Verschiebewegs mit einem Längsschlitz 133 versehen, durch den eine Spannhülse 134 quer hindurchgesteckt ist, die in einer Querbohrung 135 im Gehäuse 8 des Hauptbremszylinders 3 gehalten ist. Die Querbohrung 135 ist durch den ersten Anschluß 4 des Hauptbremszylinders 3 zugänglich.

Zur Bildung einer strömungsbehindernden Engstelle, um wie oben beschrieben mittels einer Niederdruckpumpe 76, 76a, die in die Hauptbremsleitung 81 des an die erste Druckkammer 17 des Hauptbremszylinders 3 angeschlossenen ersten Bremskreises I fördert, in beiden Druckkammern 17, 18 des Hauptbremszylinders 3 und damit in beiden Bremskreisen I, II der erfindungsgemäßen Fahrzeugbremsanlage 2 Druck aufbauen zu können, ist in den ersten, mit der ersten Druckkammer 17 kommunizierenden Anschluß 4 des Hauptbremszylinders 3 ein Drosselelement 136 eingesetzt.

Das aus Kunststoff bestehende Drosselelement 136 ist napfförmig und geht an seinem freien Umfangsrand einstückig in einen Radialflansch 137 über, wobei der Radialflansch 137 dem Hauptbremszylinder 3 und ein Boden 138 des napfförmigen Drosselelements 136 dem Bremsflüssigkeitsvorratsbehälter 3a zugewandt ist. Der Boden 138 weist eine Drosselbohrung 139 auf.

Abgedichtet ist das Drosselelement 136 mittels eines in den Anschluß 4 des Hauptbremszylinders 3 unter dem Radialflansch 137 des Drosselelements 136 eingelegten O-Rings 140. Gehalten wird das Drosselelement 136 an seinem Radialflansch 137 von einem Anschlußstutzen 141 des Vorratsbehälters 3a, der in den Anschluß 4 des Hauptbremszylinders 3 ragt und dort in an sich bekannter Weise mittels eines Gummi-Formrings 142 gehalten ist.

Zusätzlich zur Drosselbohrung 139 weist das Drosselelement 136 ein Rückschlagventil 143 auf, das der Drosselbohrung 139 parallelgeschaltet ist und das in Richtung vom Vorratsbehälter 3a zum Hauptbremszylinder 3 durchströmbar ist: Der Boden 138 des Drosselelements 136 weist außer der Drosselbohrung 139 eine Ventilbohrung 144 mit größerem Durchmesser als die Drosselbohrung 139 auf. Eine Druckfeder 145, die sich am Grund des ersten Anschlusses 4 des Hauptbremszylinders 3 abstützt, drückt eine Ventilkugel 146 gegen eine Mündung der Ventilbohrung 144.

Das Rückschlagventil 143 ist zum Befüllen der erfindungsgemäßen Fahrzeugbremsanlage 2 vorgesehen. Mit seiner großen Strömungsquerschnittsfläche zusätzlich zur Querschnittsfläche der Drosselbohrung 139 vergrößert es einen Bremsflüssigkeitsstrom durch den ersten Anschluß 4 des Hauptbremszylinders 3 in den ersten Bremkreis I beim Befüllen der Fahrzeugbremsanlage 2.

Bei dem in der Figur 9 dargestellten Ausführungsbeispiel des Hauptbremszylinders 3 ist ein Drosselelement 147 mit integriertem Rückschlagventil an einer der ersten Druckkammer 17 des Hauptbremszylinders 3 zugewandten Stirnseite des ersten Kolbens 10 angebracht. In die der ersten Druckkammer 17 zugewandte Stirnseite des Kolbens 10 ist ein Ventilsitznapf 148 mit einem Zentralloch 149 eingesetzt und mittels einer über die Stirnseite des ersten Kolbens 10 gestülpten Haltekappe 150 gehalten, die einen Umfang des ersten Kolbens 10 umgreift und durch Umbördeln seines freien Randes in eine umlaufende Nut 151 am ersten Kolben 10 fixiert ist. Der Ventilsitznapf 148 weist ein Zentralloch 149 in seinem Boden auf. Die Haltekappe 150 weist mehrere Durchbohrungen 152 auf. Im Innenraum zwischen dem Ventilsitznapf 148 und der Haltekappe 152 ist eine aus Gummi bestehende Ventilscheibe 153 mit einem axialen Drosselkanal 154 aufgenommen. Herrscht in der ersten Druckkammer 17 Überdruck, wird die Ventilscheibe 153 gegen den Boden des Ventilsitznapfes 148 gedrückt, so daß Bremsflüssigkeit nur durch den Drosselkanal 154 der Ventilscheibe 153 und das Zentralloch 149 des Ventilsitznapfs 148 strömen kann. Herrscht dagegen, beispielsweise beim Befüllen der Fahrzeugbremsanlage 2, im ersten Anschluß 4 des Hauptbremszylinders 3 größerer Druck als in der ersten Druckkammer 17, so strömt Bremsflüssigkeit durch den ersten Anschluß 4, die Spannhülse 134, eine Axialbohrung 155 des ersten Kolbens 10, durch das Zentralloch 149 des Ventilsitznapfes 148, hebt die Ventilscheibe 153 ab und strömt weiter durch die Bohrungen 152 der Haltekappe 150 in die erste Druckkammer 17. Die Ventilscheibe 153 mit ihrem Drosselkanal 154 wirkt also in Richtung von der ersten Druckkammer 17 zum ersten Anschluß 4 als Drosselelement und zugleich als in Gegenrichtung durchströmbares Rückschlagventil.

Der erste Kolben 10 des in der Figur 9 dargestellten Hauptbremszylinders 3 weist ebenso wie derjenige aus der Figur 8 und der zweite Kolben 11 des in der Figur 2 dargestellten Hauptbremszylinders 3 ein Zentralventil 156 auf. Allerdings ist das Zentralventil 156 des in der Figur 9 dargestellten Hauptbremszylinders 3 modifiziert: Es weist auf seinem die Axialbohrung 155 des ersten Kolbens 10 durchsetzenden Stößel 157 einen Zylinderkopf 158 mit radial abstehenden Nasen 159 auf, gegen die eine Druckfeder 160 drückt, um das Zentralventil 156 zu schließen. In eine Ansenkung der Axialbohrung 155 ist ein Dichtelement mit einem Stützring 161 aus Metall eingesetzt, der mit Gummi 162 umgeben ist. Das Zentralventil 156 ist bei nicht betätigtem ersten Kolben 10 durch den Stößel 157 geöffnet, der an der Spannhülse 134 anliegt, wie der zweite Kolben 11 in der Figur 2. Zwischenräume zwischen den radial abstehenden Nasen 159 und durchgehende Längsnuten 163 des Stößels 157 bilden große Strömungsquerschnitte für Bremsflüssigkeit.

Wird der erste Kolben 10 zum Betätigen der Fahrzeugbremsanlage 2 in das Gehäuse 8 des Hauptbremszylinders 3 hineingedrückt, so kommt der Stößel 157 von der Spannhülse 134 frei und sein Kopf 158 wird von der Druckfeder 160 gegen das Dichtelement 161, 162 gedrückt. Die Axialbohrung 155 des ersten Kolbens 10 ist dadurch verschlossen.

## Patentansprüche (Patentansprüche für folgende(n) Vertragsstaat(en): DE, FR, GB)

1. Hydraulische Fahrzeugbremsanlage (2) zum Bremsen per Bremspedalbetätigung und zum automatischen Bremsen, mit einem Hauptbremszylinder (3), der ein Gehäuse, in diesem eine Bohrung und in der Bohrung einen ersten verschiebbaren Kolben (10), der in Abhängigkeit vom Niedertreten eines Bremspedals (23) verschiebbar ist, einen zweiten Kolben (11) auf der zum Bremspedal (23) entgegengesetzten Seite des ersten Kolbens (10), zwischen dem ersten (10) und dem zweiten (11) Kolben eine erste Druckkammer (17), die mit einem am Gehäuse ausgebildeten ersten Anschluß (4) oben sowie einem zweiten Anschluß (5) unten in Verbindung ist, und an den zweiten Kolben (11) angrenzend an seiner zur ersten Druckkammer (17) entgegengesetzten Seite eine zweite Druckkammer (18) mit einem an dem Gehäuse ausgebildeten dritten Anschluß (6) oben und einem vierten Anschluß (7) unten hat, wobei bei getretenem Bremspedal (23) zwischen dem ersten (4) und dem zweiten (5) Anschluß sowie zwischen dem dritten (6) und dem vierten (7) Anschluß keine hydraulische Verbindung besteht, mit einem Vorratsbehälter (3a) für Druckmittel, wobei der Vorratsbehälter (3a) dem ersten (4) und dem dritten (6) Anschluß des Hauptbremszylinders (3)zugeordnet ist, mit einer als Niederdruckpumpe (76, 76a) ausgebildeten Pumpeinrichtung (75), die einen mit dem Vorratsbehälter (3a) verbundenen Sauganschluß und einen mit einem Bremskreis (I) ständig verbundenen Druckanschluß besitzt zum Ansaugen von Druckmittel aus dem Vorratsbehälter (3) und zum Fördern in den einen Bremskreis (I), mit einer Mehrzahl von Radbremszylindern (12, 13, 14, 15) für zugeordnete Räder, die in eine erste Gruppe und eine zweite Gruppe unterteilt sind, mit ersten Bremsdruckmodulationsventilanordnungen (42, 43), die zwischen dem zweiten Anschluß (5) des Hauptbremszylinders (3) sowie der ersten Gruppe von Radbremszylindern (12, 13) angeordnet sind, mit zweiten Bremsdruckmodulationsventilanordnungen (44, 45), die zwischen dem vierte Anschluß (7) des Hauptbremszylinders (3) sowie der zweiten Gruppe von Radbremszylindern (14, 15) angeordnet sind, und mit einem Steuergerät (57) zur Durchführung von automatischem Bremsbetrieb mit Einschalten der Pumpeinrichtung (75) und mit je Bremskreis (I, II) einem von dem Steuergerät (57) steuerbaren Umschaltventil (64, 65) zwischen dem Hauptbremszylinder (3) und den Bemsdruckmodulationsventilanordnungen (42, 43, 44, 44, 45) zum automatischen Bremsen, wobei den ersten und den zweiten Bremdruckmodulationsventilanordnungen (42, 43, 44, 45) für den Blockierschutzbetrieb einschaltbare Rückförderpumpen (40, 41) zugeordnet sind, wobei die Rückförderpumpen (40, 41) mit ihren Saugseiten durch Wegeventile (68, 69) hindurch an den zweiten Anschluß (5) und den vierten Anschluß (7) des Hauptbremszylinders (3) anschließbar sind, dadurch gekennzeichnet, daß der Druckanschluß der Pumpeinrichtung (75), die nur eine einzige Niederdruckpumpe (76, 76a) aufweist, zwischen dem zweiten Anschluß (5) des Hauptbremszylinders (3) und dem diesen zugeordneten Umschaltventil (64) mit dem dem zweiten Anschluß (5) zugeordneten Bremskreis (I) stetig verbunden ist, daß bei nicht betätigtem Bremspedal (23) im automatischen Bremsbetrieb zwischen dem Vorratsbehälter (3a) und dem zweiten Anschluß (5) des Hauptbremszylinders (3) wenigstens eine strömungsbehinderte Engstelle (25; 33, 34; 36, 37, 136, 139; 174) wirksam ist, derart, daß bei eingeschalteter Pumpeinrichtung (75) der Rückförderpumpe (40) des stetig mit der einzigen Niederdruckpumpe (76, 76a) verbundenen Bremskreises (I) Ladedruck zur Verfügung steht, und daß zusätzlich der Rückförderpumpe (41) des dem vierten Anschluß des Hauptbremszylinders zugeordneten Bremskreises (II) Ladedruck durch Beaufschlagung des zweiten Kolbens (11) mit vor der wenigstens einen strömungsbehindernden Engstelle angestautem Druck mittelbar zur Verfügung steht, wobei die wenigstens eine strömungsbehindernde Engstelle gebildet ist von einer Schnüffelbohrung (25), die die den ersten verschiebbaren Kolben (10) aufnehmende Bohrung (17) des Gehäuses (8) mit dem ersten Anschluß (4) verbindet, und wobei die Schnüffelbohrung (25) derart eng bemessen ist, daß der Ladedruck angestaut wird.

2. Hydraulische Fahrzeugbremsanlage (2) zum Bremsen per Bremspedalbetätigung und zum automatischen Bremsen, mit einem Hauptbremszylinder (3), der ein Gehäuse, in diesem eine Bohrung und in der Bohrung einen ersten verschiebbaren Kolben (10), der in Abhängigkeit vom Niedertreten eines Bremspedals (23) verschiebbar ist, einen zweiten Kolben (11) auf der zum Bremspedal (23) entgegengesetzten Seite des ersten Kolbens (10), zwischen dem ersten (10) und dem zweiten (11) Kolben eine erste Druckkammer (17), die mit einem am Gehäuse ausgebildeten ersten Anschluß (4) oben sowie einem zweiten Anschluß (5) unten in Verbindung ist, und an den zweiten Kolben (11) angrenzend an seiner zur ersten Druckkammer (17) entgegengesetzten Seite eine zweite Druckkammer (18) mit einem an dem Gehäuse ausgebildeten dritten Anschluß (6) oben und einem vierten Anschluß (7) unten hat, wobei bei getretenem Bremspedal (23) zwischen dem ersten (4) und dem zweiten (5) Anschluß sowie zwischen dem dritten (6) und dem vierten (7) Anschluß keine hydraulische Verbindung besteht, mit einem Vorratsbehälter (3a) für Druckmittel, wobei der Vorratsbehälter (3a) dem ersten (4) und dem dritten (6) Anschluß des Hauptbremszylinders (3)zugeordnet ist, mit einer als Niederdruckpumpe (76, 76a) ausgebildeten Pumpeinrichtung (75), die einen mit dem Vorratsbehälter (3a) verbundenen Sauganschluß und einen mit einem Bremskreis (I) ständig verbundenen Druckanschluß besitzt zum Ansaugen von Druckmittel aus dem Vorratsbehälter (3) und zum Fördern in den einen Bremskreis (I), mit einer Mehrzahl von Radbremszylindern (12, 13, 14, 15) für zugeordnete Räder, die in eine erste Gruppe und eine zweite Gruppe unterteilt sind, mit ersten Bremsdruckmodulationsventilanordnungen (42, 43), die zwischen dem zweiten Anschluß (5) des Hauptbremszylinders (3) sowie der ersten Gruppe von Radbremszylindern (12, 13) angeordnet sind, mit zweiten Bremsdruckmodulationsventilanordnungen (44, 45), die zwischen dem vierte Anschluß (7) des Hauptbremszylinders (3) sowie der zweiten Gruppe von Radbremszylindern (14, 15) angeordnet sind, und mit einem Steuergerät (57) zur Durchführung von automatischem Bremsbetrieb mit Einschalten der Pumpeinrichtung (75) und mit je Bremskreis (I, II) einem von dem Steuergerät (57) steuerbaren Umschaltventil (64, 65) zwischen dem Hauptbremszylinder (3) und den Bemsdruckmodulationsventilanordnungen (42, 43, 44, 45) zum automatischen Bremsen, wobei den ersten und den zweiten Bremdruckmodulationsventilanordnungen (42, 43, 44, 45) für den Blockierschutzbetrieb einschaltbare Rückförderpumpen (40, 41) zugeordnet sind, wobei die Rückförderpumpen (40, 41) mit ihren Saugseiten durch Wegeventile (68, 69) hindurch an den zweiten Anschluß (5) und den vierten Anschluß (7) des Hauptbremszylinders (3) anschließbar sind, dadurch gekennzeichnet, daß der Druckanschluß der Pumpeinrichtung (75), die nur eine einzige Niederdruckpumpe (76, 76a) aufweist, zwischen dem zweiten Anschluß (5) des Hauptbremszylinders (3) und dem diesen zugeordneten Umschaltventil (64) mit dem dem zweiten Anschluß (5) zugeordneten Bremskreis (I) stetig verbunden ist, daß bei nicht betätigtem Bremspedal (23) im automatischen Bremsbetrieb zwischen dem Vorratsbehälter (3a) und dem zweiten Anschluß (5) des Hauptbremszylinders (3) wenigstens eine strömungsbehinderte Engstelle (25; 33, 34; 36, 37, 136, 139; 174) wirksam ist, derart, daß bei eingeschalteter Pumpeinrichtung (75) der Rückförderpumpe (40) des stetig mit der einzigen Niederdruckpumpe (76, 76a) verbundenen Bremskreises (I) Ladedruck zur Verfügung steht, und daß zusätzlich der Rückförderpumpe (41) des dem vierten Anschluß des Hauptbremszylinders zugeordneten Bremskreises (II) Ladedruck durch Beaufschlagung des zweiten Kolbens (11) mit vor der wenigstens einen strömungsbehindernden Engstelle angestautem Druck mittelbar zur Verfügung steht wobei die wenigstens eine strömungsbehindernde Engstelle gebildet wird von einer Sitzfläche (33) und einem Schließkörper (34) eines Zentralventils (132) des ersten Kolbens (10), wobei ein Abstand zwischen der Sitzfläche (33) und dem Schließkörper (34) derart eng eingestellt ist, daß bei eingeschalteter Pumpeinrichtung (75) der Ladedruck zur Verfügung gestellt wird.

3. Hydraulische Fahrzeugbremsanlage (2) zum Bremsen per Bremspedalbetätigung und zum automatischen Bremsen, mit einem Hauptbremszylinder (3), der ein Gehäuse, in diesem eine Bohrung und in der Bohrung einen ersten verschiebbaren Kolben (10), der in Abhängigkeit vom Niedertreten eines Bremspedals (23) verschiebbar ist, einen zweiten Kolben (11) auf der zum Bremspedal (23) entgegengesetzten Seite des ersten Kolbens (10), zwischen dem ersten (10) und dem zweiten (11) Kolben eine erste Druckkammer (17), die mit einem am Gehäuse ausgebildeten ersten Anschluß (4) oben sowie einem zweiten Anschluß (5) unten in Verbindung ist, und an den zweiten Kolben (11) angrenzend an seiner zur ersten Druckkammer (17) entgegengesetzten Seite eine zweite Druckkammer (18) mit einem an dem Gehäuse ausgebildeten dritten Anschluß (6) oben und einem vierten Anschluß (7) unten hat, wobei bei getretenem Bremspedal (23) zwischen dem ersten (4) und dem zweiten (5) Anschluß sowie zwischen dem dritten (6) und dem vierten (7) Anschluß keine hydraulische Verbindung besteht, mit einem Vorratsbehälter (3a) für Druckmittel, wobei der Vorratsbehälter (3a) dem ersten (4) und dem dritten (6) Anschluß des Hauptbremszylinders (3)zugeordnet ist, mit einer als Niederdruckpumpe (76, 76a) ausgebildeten Pumpeinrichtung (75), die einen mit dem Vorratsbehälter (3a) verbundenen Sauganschluß und einen mit einem Bremskreis (I) ständig verbundenen Druckanschluß besitzt zum Ansaugen von Druckmittel aus dem Vorratsbehälter (3) und zum Fördern in den einen Bremskreis (I), mit einer Mehrzahl von Radbremszylindern (12, 13, 14, 15) für zugeordnete Räder, die in eine erste Gruppe und eine zweite Gruppe unterteilt sind, mit ersten Bremsdruckmodulationsventilanordnungen (42, 43), die zwischen dem zweiten Anschluß (5) des Hauptbremszylinders (3) sowie der ersten Gruppe von Radbremszylindern (12, 13) angeordnet sind, mit zweiten Bremsdruckmodulationsventilanordnungen (44, 45), die zwischen dem vierte Anschluß (7) des Hauptbremszylinders (3) sowie der zweiten Gruppe von Radbremszylindern (14, 15) angeordnet sind, und mit einem Steuergerät (57) zur Durchführung von automatischem Bremsbetrieb mit Einschalten der Pumpeinrichtung (75) und mit je Bremskreis (I, II) einem von dem Steuergerät (57) steuerbaren Umschaltventil (64, 65) zwischen dem Hauptbremszylinder (3) und den Bemsdruckmodulationsventilanordnungen (42, 43, 44, 45) zum automatischen Bremsen, wobei den ersten und den zweiten Bremdruckmodulationsventilanordnungen (42, 43, 44, 45) für den Blockierschutzbetrieb einschaltbare Rückförderpumpen (40, 41) zugeordnet sind, wobei die Rückförderpumpen (40, 41) mit ihren Saugseiten durch Wegeventile (68, 69) hindurch an den zweiten Anschluß (5) und den vierten Anschluß (7) des Hauptbremszylinders (3) anschließbar sind, dadurch gekennzeichnet, daß der Druckanschluß der Pumpeinrichtung (75), die nur eine einzige Niederdruckpumpe (76, 76a) aufweist, zwischen dem zweiten Anschluß (5) des Hauptbremszylinders (3) und dem diesen zugeordneten Umschaltventil (64) mit dem dem zweiten Anschluß (5) zugeordneten Bremskreis (I) stetig verbunden ist, daß bei nicht betätigtem Bremspedal (23) im automatischen Bremsbetrieb zwischen dem Vorratsbehälter (3a) und dem zweiten Anschluß (5) des Hauptbremszylinders (3) wenigstens eine strömungsbehinderte Engstelle (25; 33, 34; 36, 37, 136, 139; 174) wirksam ist, derart, daß bei eingeschalteter Pumpeinrichtung (75) der Rückförderpumpe (40) des stetig mit der einzigen Niederdruckpumpe (76, 76a) verbundenen Bremskreises (I) Ladedruck zur Verfügung steht, und daß zusätzlich der Rückförderpumpe (41) des dem vierten Anschluß des Hauptbremszylinders zugeordneten Bremskreises (II) Ladedruck durch Beaufschlagung des zweiten Kolbens (11) mit vor der wenigstens einen strömungsbehindernden Engstelle angestautem Druck mittelbar zur Verfügung steht, wobei die strömungsbehindernde Engstelle gebildet ist zwischen einer Längsbohrung (37) und einem durch diese verschiebbaren Steuerstößel (36) eines Zentralventils (132), das eine an die Längsbohrung (37) angrenzende Sitzfläche (31) und einen von dem Steuerstößel getragenen Schließkörper (35) hat und dem ersten Kolben (10) zugeordnet ist.

4. Fahrzeugbremsanlage nach einem der Ansprüche 1 bis 3, dadurch gekennzeichnet, daß die als Niederdruckpumpe ausgebildete Pumpe (76a) ein Gehäuse (102), einen Gehäusedeckel (103), einen Eingang (90) und einen Ausgang (91) besitzt, daß innerhalb des Gehäuses (102, 103) wenigstens ein den Ausgang (91) mit dem Eingang (90) verbindender Rückströmungskanal (92) vorhanden ist, dessen Querschnitt zur Funktion als eine Drossel (84a) so bemessen ist, daß bei verhindertem Ausfluß von Druckmittel aus der als Niederdruckpumpe ausgebildeten Pumpe (76a) durch deren Ausgang (91) und bei vorgegebener Viskosität des Druckmitels sowie einer vorgegebenen Antriebsdrehzahl für die als Niederdruckpumpe ausgebildete Pumpe (76a) per Rückströmung von Druckmittel durch die Drossel (84a) eine Druckbegrenzung auf einen gewollten Wert stattfindet, und daß zwischen dem Ausgang (91) und der als Niederdruckpumpe ausgebildeten Pumpe (76a) und dem zweiten Anschluß (5) des Hauptbremszylinders (3) ein in Richtung zu diesem durchströmbares Ventil (78, 94) angeordnet ist.

5. Fahrzeugbremsanlage nach Anspruch 4, dadurch gekennzeichnet, daß die Pumpe (76a) drehbare Pumpenelemente (100, 101) mit Zähnen (129) und Zahnlücken (130) aufweist, daß stirnseitig zu den Pumpenelementen (100, 101) eine im Gehäuse (102) befindliche Fläche (112) ausgerichtet ist mit einer mit dem Eingang (90) verbundenen ersten saugseitigen Ausnehmung (115) und einer mit dem Ausgang (91) verbundenen druckseitigen Ausnehmung (116), und daß der wenigstens eine Rückströmkanal (92) ausgeht von der zweiten druckseitigen Ausnehmung (116) hin zur ersten saugseitigen Ausnehmung (115), wobei der wenigstens eine Rückströmkanal (92) eine Drossel (84a) bildet durch Auswahl der Größe des Axialspiels (131) zwischen der Fläche (112) und wenigstens einem der drehbaren Pumpenelemente (100, 101).

6. Fahrzeugbremsanlage nach Anspruch 5, dadurch gekennzeichnet, daß ein erstes der drehbaren Pumpenelemente als ein Zahnrad (100) ausgebildet ist und daß ein zweites der drehbaren Pumpenlemente als ein Innenzahnring (101) ausgebildet ist mit einer Anzahl von Zahnlücken (130), die um den Wert 1 größer ist als die Anzahl der Zähne (129) des Zahnrades (100), wobei der wenigstens eine Rückströmkanal (92) wenigstens entlang einem der beiden Pumpenelemente (100, 101) verläuft.

7. Fahrzeugbremsanlage nach Anspruch 4, dadurch gekennzeichnet, daß das durchströmbare Ventil (78) als ein Rückschlagventil mit einer Schließfeder (93) ausgebildet ist.

8. Fahrzeugbremsanlage nach Anspruch 4, dadurch gekennzeichnet, daß das durchströmbare Ventil (94) als ein in einer Richtung öffenbares Differenzdruckregelventil ausgebildet ist.

9. Fahrzeugbremsanlage nach Anspruch 4, dadurch gekennzeichnet, daß der als Niederdruckpumpe ausgebildeten Pumpe (76a) ein Motor (77) zugeordnet ist, und daß zum Vereinigen der als Niederdruckpumpe ausgebildeten Pumpe (76a) mit dem Motor (77) zu einer Baueinheit der Gehäusedeckel (103) einen gegen den Motor (77) gerichteten Fortsatz (119) hat.

10. Hydraulische Fahrzeugbremsanlage (2) zum Bremsen per Bremspedalbetätigung und zum automatischen Bremsen, mit einem Hauptbremszylinder (3), der ein Gehäuse, in diesem eine Bohrung und in der Bohrung einen ersten verschiebbaren Kolben (10), der in Abhängigkeit vom Niedertreten eines Bremspedals (23) verschiebbar ist, einen zweiten Kolben (11) auf der zum Bremspedal (23) entgegengesetzten Seite des ersten Kolbens (10), zwischen dem ersten (10) und dem zweiten (11) Kolben eine erste Druckkammer (17), die mit einem am Gehäuse ausgebildeten ersten Anschluß (4) oben sowie einem zweiten Anschluß (5) unten in Verbindung ist, und an den zweiten Kolben (11) angrenzend an seiner zur ersten Druckkammer (17) entgegengesetzten Seite eine zweite Druckkammer (18) mit einem an dem Gehäuse ausgebildeten dritten Anschluß (6) oben und einem vierten Anschluß (7) unten hat, wobei bei getretenem Bremspedal (23) zwischen dem ersten (4) und dem zweiten (5) Anschluß sowie zwischen dem dritten (6) und dem vierten (7) Anschluß keine hydraulische Verbindung besteht, mit einem Vorratsbehälter (3a) für Druckmittel, wobei der Vorratsbehälter (3a) dem ersten (4) und dem dritten (6) Anschluß des Hauptbremszylinders (3)zugeordnet ist, mit einer als Niederdruckpumpe (76, 76a) ausgebildeten Pumpeinrichtung (75), die einen mit dem Vorratsbehälter (3a) verbundenen Sauganschluß und einen mit einem Bremskreis (I) ständig verbundenen Druckanschluß besitzt zum Ansaugen von Druckmittel aus dem Vorratsbehälter (3) und zum Fördern in den einen Bremskreis (I), mit einer Mehrzahl von Radbremszylindern (12, 13, 14, 15) für zugeordnete Räder, die in eine erste Gruppe und eine zweite Gruppe unterteilt sind, mit ersten Bremsdruckmodulationsventilanordnungen (42, 43), die zwischen dem zweiten Anschluß (5) des Hauptbremszylinders (3) sowie der ersten Gruppe von Radbremszylindern (12, 13) angeordnet sind, mit zweiten Bremsdruckmodulationsventilanordnungen (44, 45), die zwischen dem vierte Anschluß (7) des Hauptbremszylinders (3) sowie der zweiten Gruppe von Radbremszylindern (14, 15) angeordnet sind, und mit einem Steuergerät (57) zur Durchführung von automatischem Bremsbetrieb mit Einschalten der Pumpeinrichtung (75) und mit je Bremskreis (I, II) einem von dem Steuergerät (57) steuerbaren Umschaltventil (64, 65) zwischen dem Hauptbremszylinder (3) und den Bemsdruckmodulationsventilanordnungen (42, 43, 44, 45) zum automatischen Bremsen, wobei den ersten und den zweiten Bremdruckmodulationsventil-anordnungen (42, 43, 44, 45) für den Blockierschutzbetrieb einschaltbare Rückförderpumpen (40, 41) zugeordnet sind, wobei die Rückförderpumpen (40, 41) mit ihren Saugseiten durch Wegeventile (68, 69) hindurch an den zweiten Anschluß (5) und den vierten Anschluß (7) des Hauptbremszylinders (3) anschließbar sind, dadurch gekennzeichnet, daß der Druckanschluß der Pumpeinrichtung (75), die nur eine einzige Niederdruckpumpe (76, 76a) aufweist, zwischen dem zweiten Anschluß (5) des Hauptbremszylinders (3) und dem diesen zugeordneten Umschaltventil (64) mit dem dem zweiten Anschluß (5) zugeordneten Bremskreis (I) stetig verbunden ist, daß bei nicht betätigtem Bremspedal (23) im automatischen Bremsbetrieb zwischen dem Vorratsbehälter (3a) und dem zweiten Anschluß (5) des Hauptbremszylinders (3) wenigstens eine strömungsbehinderte Engstelle (25; 33, 34; 36, 37, 136, 139; 174) wirksam ist, derart, daß bei eingeschalteter Pumpeinrichtung (75) der Rückförderpumpe (40) des stetig mit der einzigen Niederdruckpumpe (76, 76a) verbundenen Bremskreises (I) Ladedruck zur Verfügung steht, und daß zusätzlich der Rückförderpumpe (41) des dem vierten Anschluß des Hauptbremszylinders zugeordneten Bremskreises (II) ladedruck durch Beaufschlagung des zweiten Kolbens (11) mit vor der wenigstens einen Strömungsbehindernden Engstelle angestautem Druck mittelbar zur Verfügung steht, wobei ein die wenigstens eine strömungsbehindernde Engstelle bildendes Drosselelement (136) napfförmig gestaltet mit einem freien Umfangsrand einstückig in einen Radialflansch (137) übergeht, wobei der Radialflansch (137) und ein Boden (138) des napfförmigen Drosselelements (136) dem Vorratsbehälter (3a) zugewandt ist und wobei das Drosselelement (136) in den ersten Anschluß (4) des Hauptbremszylinders (3) eingebaut und mit einem unter dem Radialflansch (137) des Drosselelements (136) eingelegten O-Ring (140) abgedichtet ist und das Drosselelement (136) an seinem Radialflansch (137) von einem Anschlußstutzen (141) des Vorratsbehälters (3a) niedergehalten ist.

11. Hydraulische Fahrzeugbremsanlage (2) zum Bremsen per Bremspedalbetätigung und zum automatischen Bremsen, mit einem Hauptbremszylinder (3), der ein Gehäuse, in diesem eine Bohrung und in der Bohrung einen ersten verschiebbaren Kolben (10), der in Abhängigkeit vom Niedertreten eines Bremspedals (23) verschiebbar ist, einen zweiten Kolben (11) auf der zum Bremspedal (23) entgegengesetzten Seite des ersten Kolbens (10), zwischen dem ersten (10) und dem zweiten (11) Kolben eine erste Druckkammer (17), die mit einem am Gehäuse ausgebildeten ersten Anschluß (4) oben sowie einem zweiten Anschluß (5) unten in Verbindung ist, und an den zweiten Kolben (11) angrenzend an seiner zur ersten Druckkammer (17) entgegengesetzten Seite eine zweite Druckkammer (18) mit einem an dem Gehäuse ausgebildeten dritten Anschluß (6) oben und einem vierten Anschluß (7) unten hat, wobei bei getretenem Bremspedal (23) zwischen dem ersten (4) und dem zweiten (5) Anschluß sowie zwischen dem dritten (6) und dem vierten (7) Anschluß keine hydraulische Verbindung besteht, mit einem Vorratsbehälter (3a) für Druckmittel, wobei der Vorratsbehälter (3a) dem ersten (4) und dem dritten (6) Anschluß des Hauptbremszylinders (3)zugeordnet ist, mit einer als Niederdruckpumpe (76, 76a) ausgebildeten Pumpeinrichtung (75), die einen mit dem Vorratsbehälter (3a) verbundenen Sauganschluß und einen mit einem Bremskreis (I) ständig verbundenen Druckanschluß besitzt zum Ansaugen von Druckmittel aus dem Vorratsbehälter (3) und zum Fördern in den einen Bremskreis (I), mit einer Mehrzahl von Radbremszylindern (12, 13, 14, 15) für zugeordnete Räder, die in eine erste Gruppe und eine zweite Gruppe unterteilt sind, mit ersten Bremsdruckmodulationsventilanordnungen (42, 43), die zwischen dem zweiten Anschluß (5) des Hauptbremszylinders (3) sowie der ersten Gruppe von Radbremszylindern (12, 13) angeordnet sind, mit zweiten Bremsdruckmodulationsventilanordnungen (44, 45), die zwischen dem vierte Anschluß (7) des Hauptbremszylinders (3) sowie der zweiten Gruppe von Radbremszylindern (14, 15) angeordnet sind, und mit einem Steuergerät (57) zur Durchführung von automatischem Bremsbetrieb mit Einschalten der Pumpeinrichtung (75) und mit je Bremskreis (I, II) einem von dem Steuergerät (57) steuerbaren Umschaltventil (64, 65) zwischen dem Hauptbremszylinder (3) und den Bemsdruckmodulationsventilanordnungen (42, 43, 44, 45) zum automatischen Bremsen, wobei den ersten und den zweiten Bremdruckmodulationsventilanordnungen (42, 43, 44, 45) für den Blockierschutzbetrieb einschaltbare Rückförderpumpen (40, 41) zugeordnet sind, wobei die Rückförderpumpen (40, 41) mit ihren Saugseiten durch Wegeventile (68, 69) hindurch an den zweiten Anschluß (5) und den vierten Anschluß (7) des Hauptbremszylinders (3) anschließbar sind, dadurch gekennzeichnet, daß der Druckanschluß der Pumpeinrichtung (75), die nur eine einzige Niederdruckpumpe (76, 76a) aufweist, zwischen dem zweiten Anschluß (5) des Hauptbremszylinders (3) und dem diesen zugeordneten Umschaltventil (64) mit dem dem zweiten Anschluß (5) zugeordneten Bremskreis (I) stetig verbunden ist, daß bei nicht betätigtem Bremspedal (23) im automatischen Bremsbetrieb zwischen dem Vorratsbehälter (3a) und dem zweiten Anschluß (5) des Hauptbremszylinders (3) wenigstens eine strömungsbehinderte Engstelle (25; 33, 34; 36, 37, 136, 139; 174) wirksam ist, derart, daß bei eingeschalteter Pumpeinrichtung (75) der Rückförderpumpe (40) des stetig mit der einzigen Niederdruckpumpe (76, 76a) verbundenen Bremskreises (I) Ladedruck zur Verfügung steht, und daß zusätzlich der Rückförderpumpe (41) des dem vierten Anschluß des Hauptbremszylinders zugeordneten Bremskreises (II) ladedruck durch Beaufschlagung des zweiten Kolbens (11) mit vor der wenigstens einen Strömungsbehindernden Engstelle angestautem Druck mittelbar zur Verfügung steht, wobei dem ersten Kolben (10) ein an seiner der ersten Druckkammer (17) zugewandten Stirnseite ein Drosselelement (147) in Form einer gelochten Scheibe als strömungsbehindernde Engstelle zugeordnet ist und die gelochte Scheibe Bestandteil eines Rückschlagventils (143) ist, wobei das Rückschlagventil (143) in Richtung vom Vorratsbehälter (3a) zum zweiten Anschluß (5) des Gehäuses des Hauptbremszylinders (3) öffenbar ist.

## Patentansprüche (Patentansprüche für folgende(n) Vertragsstaat(en): SE)

1. Hydraulische Fahrzeugbremsanlage (2) zum Bremsen per Bremspedalbetätigung und zum automatischen Bremsen, mit einem Hauptbremszylinder (3), der ein Gehäuse, in diesem eine Bohrung und in der Bohrung einen ersten verschiebbaren Kolben (10), der in Abhängigkeit vom Niedertreten eines Bremspedals (23) verschiebbar ist, einen zweiten Kolben (11) auf der zum Bremspedal (23) entgegengesetzten Seite des ersten Kolbens (10), zwischen dem ersten (10) und dem zweiten (11) Kolben eine erste Druckkammer (17), die mit einem am Gehäuse ausgebildeten ersten Anschluß (4) oben sowie einem zweiten Anschluß (5) unten in Verbindung ist, und an den zweiten Kolben (11) angrenzend an seiner zur ersten Druckkammer (17) entgegengesetzten Seite eine zweite Druckkammer (18) mit einem an dem Gehäuse ausgebildeten dritten Anschluß (6) oben und einem vierten Anschluß (7) unten hat, wobei bei getretenem Bremspedal (23) zwischen dem ersten (4) und dem zweiten (5) Anschluß sowie zwischen dem dritten (6) und dem vierten (7) Anschluß keine hydraulische Verbindung besteht, mit einem Vorratsbehälter (3a) für Druckmittel, wobei der Vorratsbehälter (3a) dem ersten (4) und dem dritten (6) Anschluß des Hauptbremszylinders (3)zugeordnet ist, mit einer als Niederdruckpumpe (76, 76a) ausgebildeten Pumpeinrichtung (75), die einen mit dem Vorratsbehälter (3a) verbundenen Sauganschluß und einen mit einem Bremskreis (I) ständig verbundenen Druckanschluß besitzt zum Ansaugen von Druckmittel aus dem Vorratsbehälter (3) und zum Fördern in den einen Bremskreis (I), mit einer Mehrzahl von Radbremszylindern (12, 13, 14, 15) für zugeordnete Räder, die in eine erste Gruppe und eine zweite Gruppe unterteilt sind, mit ersten Bremsdruckmodulationsventilanordnungen (42, 43), die zwischen dem zweiten Anschluß (5) des Hauptbremszylinders (3) sowie der ersten Gruppe von Radbremszylindern (12, 13) angeordnet sind, mit zweiten Bremsdruckmodulationsventilanordnungen (44, 45), die zwischen dem vierte Anschluß (7) des Hauptbremßzylinders (3) sowie der zweiten Gruppe von Radbremszylindern (14, 15) angeordnet sind, und mit einem Steuergerät (57) zur Durchführung von automatischem Bremsbetrieb mit Einschalten der Pumpeinrichtung (75) und mit je Bremskreis (I, II) einem von dem Steuergerät (57) steuerbaren Umschaltventil (64, 65) zwischen dem Hauptbremszylinder (3) und den Bemsdruckmodulationsventilanordnungen (42, 43, 44, 45) zum automatischen Bremsen, wobei den ersten und den zweiten Bremdruckmodulationsventilanordnungen (42, 43, 44, 45) für den Blockierschutzbetrieb einschaltbare Rückförderpumpen (40, 41) zugeordnet sind, wobei die Rückförderpumpen (40, 41) mit ihren Saugseiten durch Wegeventile (6B, 69) hindurch an den zweiten Anschluß (5) und den vierten Anschluß (7) des Hauptbremszylinders (3) anschließbar sind, dadurch gekennzeichnet, daß der Druckanachluß der Pumpeinrichtung (75), die nur eine einzige Niederdruckpumpe (76, 76a) aufweist, zwischen dem zweiten Anschluß (S) des Hauptbremszylinders (3) und dem diesen zugeordneten Umschaltventil (64) mit dem dem zweiten Anschluß (5) zugeordneten Bremskreis (I) stetig verbunden ist, daß bei nicht betätigtem Bremspedal (23) im automatischen Bremsbetrieb zwischen dem Vorratsbehälter (3a) und dem zweiten Anschluß (5) des Hauptbremszylinders (3) wenigstens eine strömungsbehinderte Engstelle (25; 33, 34; 36, 37, 136, 139; 174) wirksam ist, derart, daß bei eingeschalteter Pumpeinrichtung (75) der Rückförderpume (40) des stetig mit der einzigen Niederdruckpumpe (76, 76a) verbundenen Bremskreises (I) Ladedruck zur Verfügung steht, und daß zusätzlich der Rückförderpumpe (41) des dem vierten Anschluß des Hauptbremszylinders zugeordneten Bremskreises (II) Ladedruck durch Beaufschlagung des zweiten Kolbens (11) mit vor der wenigstens einen strömungsbehindernden Engstelle angestautem Druck mittelbar zur Verfügung steht.

2. Fahrzeugbremsanlage nach Anspruch 1, dadurch gekennzeichnet, daß die wenigstens eine strömungsbehindernde Engstelle gebildet ist von einer als Drossel wirkenden Schnüffelbohrung (25), die sich zwischen der Bohrung (9) des Gehäuses (8) und dem ersten Anschluß (4) befindet.

3. Fahrzeugbremsanlage nach Anspruch 1, dadurch gekennzeichnet, daß die wenigstens eine strömungsbehindernde Engstelle gebildet wird von einer Sitzfläche (33) und einem Schließkörper (34) eines Zentralventils (32) des ersten Kolbens.

4. Fahrzeugbremsanlage nach Anspruch 1, dadurch gekennzeichnet, daß die wenigstens eine strömungsbehindernde Engstelle gebildet ist zwischen einer Längsbohrung (37) und einem durch diese verschiebbaren Steuerstößel (36) eines Zentralventils (32), das eine an die Längsbohrung (37) angrenzende Sitzfläche (33) und einen von dem Steuerstößel (36) getragenen Schließkörper (35) aufweist und dem ersten Kolben zugeordnet ist.

5. Fahrzeugbremsanlage nach einem der Ansprüche 1 bis 4, dadurch gekennzeichnet, daß die als Niederdruckpumpe ausgebildete Pumpe (76a) ein Gehäuse (102), einen Gehäusedeckel (103), einen Eingang (90) und einen Ausgang (91) besitzt, daß innerhalb des Gehäuses (102, 103) wenigstens ein den Ausgang (91) mit dem Eingang (90) verbindender Rückströmungskanal (92) vorhanden ist, dessen Querschnitt zur Funktion als eine Drossel (84a) so bemessen ist, daß bei verhindertem Ausfluß von Druckmittel aus der als Niederdruckpumpe ausgebildeten Pumpe (76a) durch deren Ausgang (91) und bei vorgegebener Viskosität des Druckmittels sowie einer vorgegebenen Antriebsdrehzahl für die als Niederdruckpumpe ausgebildete Pumpe (76a) per Rückströmung von Druckmittel durch die Drossel (84a) eine Druckbegrenzung auf einen gewollten Wert stattfindet, und daß zwischen dem Ausgang (91) der als Niederdruckpumpe ausgebildeten Pumpe (76a) und dem zweiten Anschluß (5) des Hauptbremszylinders (3) ein in Richtung zu diesem durchströmbares Ventil (78, 94) angeordnet ist.

6. Fahrzeugbremsanlage nach Anspruch 5, dadurch gekennzeichnet, daß die Pumpe (76a) drehbare Pumpenelemente (100, 101) mit Zähnen (129) und Zahnlücken (130) aufweist, daß stirnseitig zu den Pumpenelementen (100, 101) eine im Gehäuse (102) befindliche Fläche (112) ausgerichtet ist mit einer mit dem Eingang (90) verbundenen ersten saugseitigen Ausnehmung (115) und einer mit dem Ausgang (91) verbundenen druckseitigen Ausnehmung (116), und daß der wenigstens eine Rückströmkanal (92) ausgeht von der zweiten druckseitigen Ausnehmung (116) hin zur ersten saugseitigen Ausnehmung (115), wobei der wenigstens eine Rückströmkanal (92) eine Drossel (84a) bildet durch Auswahl der Größe des Axialspieles (131) zwischen der Fläche (112) und wenigstens einem der drehbaren Pumpenelemente (100, 101).

7. Fahrzeugbremsanlage nach Anspruch 6, dadurch gekennzeichnet, daß ein erstes der drehbaren Pumpenelemente als ein Zahnrad (100) ausgebildet ist, und daß ein zweites der drehbaren Pumpenelemente als ein Innenzahnring (101) ausgebildet ist mit einer Anzahl von Zahnlücken (130), die um den Wert 1 größer ist als die Anzahl der Zähne (129) des Zahnrades (100), wobei der wenigstens eine Ruckströmkanal (92) wenigstens entlang einem der beiden drehbaren Pumpenelemente (100, 101) verläuft.

8. Fahrzeugbremsanlage nach Anspruch 5, dadurch gekennzeichnet, daß das durchströmbare Ventil (78) als ein Rückschlagventil mit einer Schließfeder (93) ausgebildet ist.

9. Fahrzeugbremsanlage nach Anspruch 5, dadurch gekennzeichnet, daß das durchströmbare Ventil (94) als ein in einer Richtung öffenbares Differenzdruckregelventil ausgebildet ist.

10. Fahrzeugbremsanlage nach Anspruch 5, dadurch gekennzeichnet, daß der als Niederdruckpumpe ausgebildeten Pumpe (76a) ein Motor (77) zugeordnet ist, und daß zum Vereinigen der als Niederdruckpumpe ausgebildeten Pumpe (76a) mit dem Motor (77) zu einer Baueinheit der Gehäusedeckel (103) einen gegen den Motor (77) gerichteten Fortsatz (119) hat.

11. Fahrzeugbremsanlage nach Anspruch 1, dadurch gekennzeichnet, daß der Hauptbremszylinder (3) ein in seinen ersten Anschluß (4) eingesetztes Drosselelement (136, 139) als strömungsbehindernde Engstelle aufweist.

12. Fahrzeugbremsanlage nach Anspruch 1, dadurch gekennzeichnet, daß der erste Kolben (10) ein an seiner der ersten Druckkammer (17) zugewandten Stirnseite angebrachtes Drosselelement (147) als strömungsbehindernde Engstelle aufweist.

13. Fahrzeugbremsanlage nach einem der vorhergehenden Ansprüche, dadurch gekennzeichnet, daß der strömungsbehindernden Engstelle (139) ein Rückschlagventil (143) parallel geschaltet ist, das in Richtung vom Vorratsbehälter (3a) zur ersten Druckkammer (17) durchströmbar ist.

## Claims (Claims for the following Contracting State(s): DE, FR, GB)

1. Hydraulic vehicle braking system (2) for braking by brake-pedal actuation and for automatic braking, having a main brake cylinder (3) which has a housing, a bore in the housing and in the bore a first displaceable piston (10), which can be displaced as a function of a brake pedal (23) being depressed, a second piston (11) on that side of the first piston (10) which is opposite the brake pedal (23), between the first piston (10) and the second piston (11) a first pressure chamber (17), which is connected at the top to a first connection (4) formed on the housing and is connected at the bottom to a second connection (5), and, adjacent to the second piston (11) on its side which is opposite the first pressure chamber (17), a second pressure chamber (18) having at the top a third connection (6) formed on the housing and at the bottom a fourth connection (7), there being no hydraulic connection between the first connection (4) and the second connection (5) and also between the third connection (6) and the fourth connection (7) when the brake pedal (23) is pressed, having a storage container (3a) for fluid, the storage container (3a) being assigned to the first connection (4) and the third connection (6) of the main brake cylinder (3), having a pump device (75) which is designed as a low-pressure pump (76, 76a) and has a suction connection connected to the storage container (3a) and a delivery connection connected continuously to a brake circuit (I) for sucking fluid out of the storage container (3a) and for conveying it into the one brake circuit (I), having a plurality of wheel-brake cylinders (12, 13, 14, 15) for assigned wheels, which are subdivided into a first group and a second group, having first brake-pressure modulation valve arrangements (42, 43) which are arranged between the second connection (5) of the main brake cylinder (3) and the first group of wheel-brake cylinders (12, 13), having second brake-pressure modulation valve arrangements (44, 45) which are arranged between the fourth connection (7) of the main brake cylinder (3) and the second group of wheel-brake cylinders (14, 15), and having a control unit (57) for carrying out an automatic braking operation by switching on the pump device (75), and having, per brake circuit (I, II), a switchover valve (64, 65), which can be controlled by the control unit (57), between the main brake cylinder (3) and the brake-pressure modulation valve arrangements (42, 43, 44, 45) for the automatic braking, return pumps (40, 41) which can be switched on for antilock operation being assigned to the first and the second brake-pressure modulation valve arrangements (42, 43, 44, 45), the return pumps (40, 41) being connectable by their suction sides through directional-control valves (68, 69) to the second connection (5) and the fourth connection (7) of the main brake cylinder (3), characterized in that the delivery connection of the pump device (75), which has only a single low-pressure pump (76, 76a), is continuously connected between the second connection (5) of the main brake cylinder (3) and the switchover valve (64) assigned thereto to the brake circuit (I) assigned to the second connection (5), in that in the automatic braking operation, when the brake pedal (23) is not actuated, at least one flow-obstructed narrow point (25; 33, 34; 36, 37, 136, 139; 174) is active between the storage container (3a) and the second connection (5) of the main brake cylinder (3) in such a manner that when the pump device (75) is switched on, charging pressure is available to the return pump (40) of the brake circuit (I) continuously connected to the single low-pressure pump (76, 76a), and in that, in addition, by subjecting the second piston (11) to pressure built up in front of the at least one flow-obstructing narrow point, charging pressure is indirectly available to the return pump (41) of the brake circuit (II) assigned to the fourth connection of the main brake cylinder, the at least one flow-obstructing narrow point being formed by a snifting bore (25) which connects that bore (17) of the housing (8) which accommodates the first displaceable piston (10) to the first connection (4), and the snifting bore (25) being of such narrow dimensions that the charging pressure is built up.

2. Hydraulic vehicle braking system (2) for braking by brake-pedal actuation and for automatic braking, having a main brake cylinder (3) which has a housing, a bore in the housing and in the bore a first displaceable piston (10), which can be displaced as a function of a brake pedal (23) being depressed, a second piston (11) on that side of the first piston (10) which is opposite the brake pedal (23), between the first piston (10) and the second piston (11) a first pressure chamber (17), which is connected at the top to a first connection (4) formed on the housing and is connected at the bottom to a second connection (5), and, adjacent to the second piston (11) on its side which is opposite the first pressure chamber (17), a second pressure chamber (18) having at the top a third connection (6) formed on the housing and at the bottom a fourth connection (7), there being no hydraulic connection between the first connection (4) and the second connection (5) and also between the third connection (6) and the fourth connection (7) when the brake pedal (23) is pressed, having a storage container (3a) for fluid, the storage container (3a) being assigned to the first connection (4) and the third connection (6) of the main brake cylinder (3), having a pump device (75) which is designed as a low-pressure pump (76, 76a) and has a suction connection connected to the storage container (3a) and a delivery connection connected continuously to a brake circuit (I) for sucking fluid out of the storage container (3a) and for conveying it into the one brake circuit (I), having a plurality of wheel-brake cylinders (12, 13, 14, 15) for assigned wheels, which are subdivided into a first group and a second group, having first brake-pressure modulation valve arrangements (42, 43) which are arranged between the second connection (5) of the main brake cylinder (3) and the first group of wheel-brake cylinders (12, 13), having second brake-pressure modulation valve arrangements (44, 45) which are arranged between the fourth connection (7) of the main brake cylinder (3) and the second group of wheel-brake cylinders (14, 15), and having a control unit (57) for carrying out an automatic braking operation by switching on the pump device (75), and having, per brake circuit (I, II), a switchover valve (64, 65), which can be controlled by the control unit (57), between the main brake cylinder (3) and the brake-pressure modulation valve arrangements (42, 43, 44, 45) for the automatic braking, return pumps (40, 41) which can be switched on for antilock operation being assigned to the first and the second brake-pressure modulation valve arrangements (42, 43, 44, 45), the return pumps (40, 41) being connectable by their suction sides through directional-control valves (68, 69) to the second connection (5) and the fourth connection (7) of the main brake cylinder (3), characterized in that the delivery connection of the pump device (75), which has only a single low-pressure pump (76, 76a), is continuously connected between the second connection (5) of the main brake cylinder (3) and the switchover valve (64) assigned thereto to the brake circuit (I) assigned to the second connection (5), in that in the automatic braking operation, when the brake pedal (23) is not actuated, at least one flow-obstructed narrow point (25; 33, 34; 36, 37, 136, 139; 174) is active between the storage container (3a) and the second connection (5) of the main brake cylinder (3) in such a manner that when the pump device (75) is switched on, charging pressure is available to the return pump (40) of the brake circuit (I) continuously connected to the single low-pressure pump (76, 76a), and in that, in addition, by subjecting the second piston (11) to pressure built up in front of the at least one flow-obstructing narrow point, charging pressure is indirectly available to the return pump (41) of the brake circuit (II) assigned to the fourth connection of the main brake cylinder, the at least one flow-obstructing narrow point being formed by a seat surface (33) and a closing body (34) of a central valve (132) of the first piston (10), a spacing between the seat surface (33) and the closing body (34) being of such a narrow setting that when the pump device (75) is switched on the charging pressure is made available.

3. Hydraulic vehicle braking system (2) for braking by brake-pedal actuation and for automatic braking, having a main brake cylinder (3) which has a housing, a bore in the housing and in the bore a first displaceable piston (10), which can be displaced as a function of a brake pedal (23) being depressed, a second piston (11) on that side of the first piston (10) which is opposite the brake pedal (23), between the first piston (10) and the second piston (11) a first pressure chamber (17), which is connected at the top to a first connection (4) formed on the housing and is connected at the bottom to a second connection (5), and, adjacent to the second piston (11) on its side which is opposite the first pressure chamber (17), a second pressure chamber (18) having at the top a third connection (6) formed on the housing and at the bottom a fourth connection (7), there being no hydraulic connection between the first connection (4) and the second connection (5) and also between the third connection (6) and the fourth connection (7) when the brake pedal (23) is pressed, having a storage container (3a) for fluid, the storage container (3a) being assigned to the first connection (4) and the third connection (6) of the main brake cylinder (3), having a pump device (75) which is designed as a low-pressure pump (76, 76a) and has a suction connection connected to the storage container (3a) and a delivery connection connected continuously to a brake circuit (I) for sucking fluid out of the storage container (3a) and for conveying it into the one brake circuit (I), having a plurality of wheel-brake cylinders (12, 13, 14, 15) for assigned wheels, which are subdivided into a first group and a second group, having first brake-pressure modulation valve arrangements (42, 43) which are arranged between the second connection (5) of the main brake cylinder (3) and the first group of wheel-brake cylinders (12, 13), having second brake-pressure modulation valve arrangements (44, 45) which are arranged between the fourth connection (7) of the main brake cylinder (3) and the second group of wheel-brake cylinders (14, 15), and having a control unit (57) for carrying out an automatic braking operation by switching on the pump device (75), and having, per brake circuit (I, II), a switchover valve (64, 65), which can be controlled by the control unit (57), between the main brake cylinder (3) and the brake-pressure modulation valve arrangements (42, 43, 44, 45) for the automatic braking, return pumps (40, 41) which can be switched on for antilock operation being assigned to the first and the second brake-pressure modulation valve arrangements (42, 43, 44, 45), the return pumps (40, 41) being connectable by their suction sides through directional-control valves (68, 69) to the second connection (5) and the fourth connection (7) of the main brake cylinder (3), characterized in that the delivery connection of the pump device (75), which has only a single low-pressure pump (76, 76a), is continuously connected between the second connection (5) of the main brake cylinder (3) and the switchover valve (64) assigned thereto to the brake circuit (I) assigned to the second connection (5), in that in the automatic braking operation, when the brake pedal (23) is not actuated, at least one flow-obstructed narrow point (25; 33, 34; 36, 37, 136, 139; 174) is active between the storage container (3a) and the second connection (5) of the main brake cylinder (3) in such a manner that when the pump device (75) is switched on, charging pressure is available to the return pump (40) of the brake circuit (I) continuously connected to the single low-pressure pump (76, 76a), and in that, in addition, by subjecting the second piston (11) to pressure built up in front of the at least one flow-obstructing narrow point, charging pressure is indirectly available to the return pump (41) of the brake circuit (II) assigned to the fourth connection of the main brake cylinder, the flow-obstructing narrow point being formed between a longitudinal bore (37) and a control tappet (36), which can be displaced through the latter, of a central valve (32) which has a seat surface (33) adjacent to the longitudinal bore (37) and a closing body (35) carried by the control tappet, and is assigned to the first piston (10).

4. Vehicle braking system according to one of Claims 1 to 3, characterized in that the pump (76a) which is designed as a low-pressure pump has a housing (102), a housing cover (103), an inlet (90) and an outlet (91), in that within the housing (102, 103) there is at least one backflow channel (92) which connects the outlet (91) to the inlet (90) and whose cross section, in order to function as a restrictor (84a), is dimensioned in such a manner that when fluid is prevented from flowing out of the pump (76a) designed as a low-pressure pump through its outlet (91) and at a predetermined viscosity of the fluid and a predetermined driving speed for the pump (76a) designed as a low-pressure pump, pressure is limited to a desired value per backflow of fluid through the restrictor (84a), and in that a valve (78, 94), through which the flow can pass in the direction of the main brake cylinder (3), is arranged between the outlet (91) of the pump (76a) designed as a low-pressure pump and the second connection (5) of the said main brake cylinder (3).

5. Vehicle braking system according to Claim 4, characterized in that the pump (76a) has rotatable pump elements (100, 101) having teeth (129) and tooth spaces (130), in that a surface (112) located in the housing (102) is orientated with its front side facing the pump elements (100, 101) and has a first, suction-side recess (115) connected to the inlet (90) and a delivery-side recess (116) connected to the outlet (91), and in that the at least one backflow channel (92) proceeds from the second, delivery-side recess (116) towards the first, suction-side recess (115), the at least one backflow channel (92) forming a restrictor (84a) through the selection of the magnitude of the axial backlash (131) between the surface (112) and at least one of the rotatable pump elements (100, 101).

6. Vehicle braking system according to Claim 5, characterized in that a first of the rotatable pump elements is designed as a toothed wheel (100), and in that a second of the rotatable pump elements is designed as an internal toothed ring (101) having a number of tooth spaces (130) which is greater by 1 than the number of teeth (129) of the toothed wheel (100), the at least one backflow channel (92) running at least along one of the two pump elements (100, 101).

7. Vehicle braking system according to Claim 4, characterized in that the valve (78) through which the flow can pass is designed as a nonreturn valve having a closing spring (93).

8. Vehicle braking system according to Claim 4, characterized in that the valve (94) through which the flow can pass is designed as a differential-pressure regulating valve which can be opened in one direction.

9. Vehicle braking system according to Claim 4, characterized in that a motor (77) is assigned to the pump (76a) designed as a low-pressure pump, and in that in order to combine the pump (76a) which is designed as a low-pressure pump with the motor (77) to form a constructional unit, the housing cover (103) has an extension (119) directed towards the motor (77).

10. Hydraulic vehicle braking system (2) for braking by brake-pedal actuation and for automatic braking, having a main brake cylinder (3) which has a housing, a bore in the housing and in the bore a first displaceable piston (10), which can be displaced as a function of a brake pedal (23) being depressed, a second piston (11) on that side of the first piston (10) which is opposite the brake pedal (23), between the first piston (10) and the second piston (11) a first pressure chamber (17), which is connected at the top to a first connection (4) formed on the housing and is connected at the bottom to a second connection (5), and, adjacent to the second piston (11) on its side which is opposite the first pressure chamber (17), a second pressure chamber (18) having at the top a third connection (6) formed on the housing and at the bottom a fourth connection (7), there being no hydraulic connection between the first connection (4) and the second connection (5) and also between the third connection (6) and the fourth connection (7) when the brake pedal (23) is pressed, having a storage container (3a) for fluid, the storage container (3a) being assigned to the first connection (4) and the third connection (6) of the main brake cylinder (3), having a pump device (75) which is designed as a low-pressure pump (76, 76a) and has a suction connection connected to the storage container (3a) and a delivery connection connected continuously to a brake circuit (I) for sucking fluid out of the storage container (3a) and for conveying it into the one brake circuit (I), having a plurality of wheel-brake cylinders (12, 13, 14, 15) for assigned wheels, which are subdivided into a first group and a second group, having first brake-pressure modulation valve arrangements (42, 43) which are arranged between the second connection (5) of the main brake cylinder (3) and the first group of wheel-brake cylinders (12, 13), having second brake-pressure modulation valve arrangements (44, 45) which are arranged between the fourth connection (7) of the main brake cylinder (3) and the second group of wheel-brake cylinders (14, 15), and having a control unit (57) for carrying out an automatic braking operation by switching on the pump device (75), and having, per brake circuit (I, II), a switchover valve (64, 65), which can be controlled by the control unit (57), between the main brake cylinder (3) and the brake-pressure modulation valve arrangements (42, 43, 44, 45) for the automatic braking, return pumps (40, 41) which can be switched on for antilock operation being assigned to the first and the second brake-pressure modulation valve arrangements (42, 43, 44, 45), the return pumps (40, 41) being connectable by their suction sides through directional-control valves (68, 69) to the second connection (5) and the fourth connection (7) of the main brake cylinder (3), characterized in that the delivery connection of the pump device (75), which has only a single low-pressure pump (76, 76a), is continuously connected between the second connection (5) of the main brake cylinder (3) and the switchover valve (64) assigned thereto to the brake circuit (I) assigned to the second connection (5), in that in the automatic braking operation, when the brake pedal (23) is not actuated, at least one flow-obstructed narrow point (25; 33, 34; 36, 37, 136, 139; 174) is active between the storage container (3a) and the second connection (5) of the main brake cylinder (3) in such a manner that when the pump device (75) is switched on, charging pressure is available to the return pump (40) of the brake circuit (I) continuously connected to the single low-pressure pump (76, 76a), and in that, in addition, by subjecting the second piston (11) to pressure built up in front of the at least one flow-obstructing narrow point, charging pressure is indirectly available to the return pump (41) of the brake circuit (II) assigned to the fourth connection of the main brake cylinder, a restricting element (136) of cup-shaped design forming the at least one flow-obstructing narrow point merging by means of a free circumferential edge integrally into a radial flange (137), the radial flange (137) and a base (138) of the cup-shaped restricting element (136) facing the storage container (3a), and the restricting element (136) being fitted into the first connection (4) of the main brake cylinder (3) and being sealed by means of an 0-ring (140) inserted below the radial flange (137) of the restricting element (136), and the restricting element (136) being held down on its radial flange (137) by a connecting branch (141) of the storage container (3a).

11. Hydraulic vehicle braking system (2) for braking by brake-pedal actuation and for automatic braking, having a main brake cylinder (3) which has a housing, a bore in the housing and in the bore a first displaceable piston (10), which can be displaced as a function of a brake pedal (23) being depressed, a second piston (11) on that side of the first piston (10) which is opposite the brake pedal (23), between the first piston (10) and the second piston (11) a first pressure chamber (17), which is connected at the top to a first connection (4) formed on the housing and is connected at the bottom to a second connection (5), and, adjacent to the second piston (11) on its side which is opposite the first pressure chamber (17), a second pressure chamber (18) having at the top a third connection (6) formed on the housing and at the bottom a fourth connection (7), there being no hydraulic connection between the first connection (4) and the second connection (5) and also between the third connection (6) and the fourth connection (7) when the brake pedal (23) is pressed, having a storage container (3a) for fluid, the storage container (3a) being assigned to the first connection (4) and the third connection (6) of the main brake cylinder (3), having a pump device (75) which is designed as a low-pressure pump (76, 76a) and has a suction connection connected to the storage container (3a) and a delivery connection connected continuously to a brake circuit (I) for sucking fluid out of the storage container (3a) and for conveying it into the one brake circuit (I), having a plurality of wheel-brake cylinders (12, 13, 14, 15) for assigned wheels, which are subdivided into a first group and a second group, having first brake-pressure modulation valve arrangements (42, 43) which are arranged between the second connection (5) of the main brake cylinder (3) and the first group of wheel-brake cylinders (12, 13), having second brake-pressure modulation valve arrangements (44, 45) which are arranged between the fourth connection (7) of the main brake cylinder (3) and the second group of wheel-brake cylinders (14, 15), and having a control unit (57) for carrying out an automatic braking operation by switching on the pump device (75), and having, per brake circuit (I, II), a switchover valve (64, 65), which can be controlled by the control unit (57), between the main brake cylinder (3) and the brake-pressure modulation valve arrangements (42, 43, 44, 45) for the automatic braking, return pumps (40, 41) which can be switched on for antilock operation being assigned to the first and the second brake-pressure modulation valve arrangements (42, 43, 44, 45), the return pumps (40, 41) being connectable by their suction sides through directional-control valves (68, 69) to the second connection (5) and the fourth connection (7) of the main brake cylinder (3), characterized in that the delivery connection of the pump device (75), which has only a single low-pressure pump (76, 76a), is continuously connected between the second connection (5) of the main brake cylinder (3) and the switchover valve (64) assigned thereto to the brake circuit (I) assigned to the second connection (5), in that in the automatic braking operation, when the brake pedal (23) is not actuated, at least one flow-obstructed narrow point (25; 33, 34; 36, 37, 136, 139; 174) is active between the storage container (3a) and the second connection (5) of the main brake cylinder (3) in such a manner that when the pump device (75) is switched on, charging pressure is available to the return pump (40) of the brake circuit (I) continuously connected to the single low-pressure pump (76, 76a), and in that, in addition, by subjecting the second piston (11) to pressure built up in front of the at least one flow-obstructing narrow point, charging pressure is indirectly available to the return pump (41) of the brake circuit (II) assigned to the fourth connection of the main brake cylinder, the first piston (10), on its end side facing the first pressure chamber (17), being assigned, as the flow-obstructing narrow point, a restricting element (147) in the form of a perforated disc, and the perforated disc being part of a nonreturn valve (143), the nonreturn valve (143) being openable in the direction from the storage container (3a) to the second connection (5) of the housing of the main brake cylinder (3).

## Claims (Claims for the following Contracting State(s): SE)

1. Hydraulic vehicle braking system (2) for braking by brake-pedal actuation and for automatic braking, having a main brake cylinder (3) which has a housing, a bore in the housing and in the bore a first displaceable piston (10), which can be displaced as a function of a brake pedal (23) being depressed, a second piston (11) on that side of the first piston (10) which is opposite the brake pedal (23), between the first piston (10) and the second piston (11) a first pressure chamber (17), which is connected at the top to a first connection (4) formed on the housing and is connected at the bottom to a second connection (5), and, adjacent to the second piston (11) on its side which is opposite the first pressure chamber (17), a second pressure chamber (18) having at the top a third connection (6) formed on the housing and at the bottom a fourth connection (7), there being no hydraulic connection between the first connection (4) and the second connection (5) and also between the third connection (6) and the fourth connection (7) when the brake pedal (23) is pressed, having a storage container (3a) for fluid, the storage container (3a) being assigned to the first connection (4) and the third connection (6) of the main brake cylinder (3), having a pump device (75) which is designed as a low-pressure pump (76, 76a) and has a suction connection connected to the storage container (3a) and a delivery connection connected continuously to a brake circuit (I) for sucking fluid out of the storage container (3a) and for conveying it into the one brake circuit (I), having a plurality of wheel-brake cylinders (12, 13, 14, 15) for assigned wheels, which are subdivided into a first group and a second group, having first brake-pressure modulation valve arrangements (42, 43) which are arranged between the second connection (5) of the main brake cylinder (3) and the first group of wheel-brake cylinders (12, 13), having second brake-pressure modulation valve arrangements (44, 45) which are arranged between the fourth connection (7) of the main brake cylinder (3) and the second group of wheel-brake cylinders (14, 15), and having a control unit (57) for carrying out an automatic braking operation by switching on the pump device (75), and having, per brake circuit (I, II), a switchover valve (64, 65), which can be controlled by the control unit (57), between the main brake cylinder (3) and the brake-pressure modulation valve arrangements (42, 43, 44, 45) for the automatic braking, return pumps (40, 41) which can be switched on for antilock operation being assigned to the first and the second brake-pressure modulation valve arrangements (42, 43, 44, 45), the return pumps (40, 41) being connectable by their suction sides through directional-control valves (68, 69) to the second connection (5) and the fourth connection (7) of the main brake cylinder (3), characterized in that the delivery connection of the pump device (75), which has only a single low-pressure pump (76, 76a), is continuously connected between the second connection (5) of the main brake cylinder (3) and the switchover valve (64) assigned thereto to the brake circuit (I) assigned to the second connection (5), in that in the automatic braking operation, when the brake pedal (23) is not actuated, at least one flow-obstructed narrow point (25; 33, 34; 36, 37, 136, 139; 174) is active between the storage container (3a) and the second connection (5) of the main brake cylinder (3) in such a manner that when the pump device (75) is switched on, charging pressure is available to the return pump (40) of the brake circuit (I) continuously connected to the single low-pressure pump (76, 76a), and in that, in addition, by subjecting the second piston (11) to pressure built up in front of the at least one flow-obstructing narrow point, charging pressure is indirectly available to the return pump (41) of the brake circuit (II) assigned to the fourth connection of the main brake cylinder.

2. Vehicle braking system according to Claim 1, characterized in that the at least one flow-obstructing narrow point is formed by a snifting bore (25) which acts as a restrictor and is located between the bore (9) of the housing (8) and the first connection (4).

3. Vehicle braking system according to Claim 1, characterized in that the at least one flow-obstructing narrow point is formed by a seat surface (33) and a closing body (34) of a central valve (32) of the first piston.

4. Vehicle braking system according to Claim 1, characterized in that the at least one flow-obstructing narrow point is formed between a longitudinal bore (37) and a control tappet (36), which can be displaced through the latter, of a central valve (32) which has a seat surface (33) adjacent to the longitudinal bore (37) and a closing body (35) carried by the control tappet (36), and is assigned to the first piston (10).

5. Vehicle braking system according to one of Claims 1 to 4, characterized in that the pump (76a) which is designed as a low-pressure pump has a housing (102), a housing cover (103), an inlet (90) and an outlet (91), in that within the housing (102, 103) there is at least one backflow channel (92) which connects the outlet (91) to the inlet (90) and whose cross section, in order to function as a restrictor (84a), is dimensioned in such a manner that when fluid is prevented from flowing out of the pump (76a) designed as a low-pressure pump through its outlet (91) and at a predetermined viscosity of the fluid and a predetermined driving speed for the pump (76a) designed as a low-pressure pump, pressure is limited to a desired value per backflow of fluid through the restrictor (84a), and in that a valve (78, 94), through which the flow can pass in the direction of the main brake cylinder (3), is arranged between the outlet (91) of the pump (76a) designed as a low-pressure pump and the second connection (5) of the said main brake cylinder (3).

6. Vehicle braking system according to Claim 5, characterized in that the pump (76a) has rotatable pump elements (100, 101) having teeth (129) and tooth spaces (130), in that a surface (112) located in the housing (102) is orientated with its front side facing the pump elements (100, 101) and has a first, suction-side recess (115) connected to the inlet (90) and a delivery-side recess (116) connected to the outlet (91), and in that the at least one backflow channel (92) proceeds from the second, delivery-side recess (116) towards the first, suction-side recess (115), the at least one backflow channel (92) forming a restrictor (84a) through the selection of the magnitude of the axial backlash (131) between the surface (112) and at least one of the rotatable pump elements (100, 101).

7. Vehicle braking system according to Claim 6, characterized in that a first of the rotatable pump elements is designed as a toothed wheel (100), and in that a second of the rotatable pump elements is designed as an internal toothed ring (101) having a number of tooth spaces (130) which is greater by 1 than the number of teeth (129) of the toothed wheel (100), the at least one backflow channel (92) running at least along one of the two rotatable pump elements (100, 101).

8. Vehicle braking system according to Claim 5, characterized in that the valve (78) through which the flow can pass is designed as a nonreturn valve having a closing spring (93).

9. Vehicle braking system according to Claim 5, characterized in that the valve (94) through which the flow can pass is designed as a differential-pressure regulating valve which can be opened in one direction.

10. Vehicle braking system according to Claim 5, characterized in that a motor (77) is assigned to the pump (76a) designed as a low-pressure pump, and in that in order to combine the pump (76a) which is designed as a low-pressure pump with the motor (77) to form a constructional unit, the housing cover (103) has an extension (119) directed towards the motor (77).

11. Vehicle braking system according to Claim 1, characterized in that the main brake cylinder (3) has, as the flow-obstructing narrow point, a restricting element (136, 139) which is inserted into its first connection (4).

12. Vehicle braking system according to Claim 1, characterized in that the first piston (10) has, as the flow-obstructing narrow point, a restricting element (147) which is attached to its end side facing the first pressure chamber (17).

13. Vehicle braking system according to one of the preceding claims, characterized in that the flow-obstructing narrow point is connected in parallel to a nonreturn valve (143) through which the flow can pass in the direction from the storage container (3a) to the first pressure chamber (17).

## Revendications (Revendications pour l'(les) Etat(s) contractant(s) suivant(s): DE, FR, GB)

1. Installation hydraulique de freinage de véhicule (2) pour freiner par actionnement d'une pédale et de manière automatique, comprenant
- un maître cylindre (3) composé d'un boîtier muni d'un alésage recevant un premier piston coulissant (10) qui est déplacé en fonction de l'enfoncement d'une pédale de frein (23) et un second piston (11) sur le côté du premier piston (10) opposé à la pédale de frein (23), une première chambre de pression (17) entre le premier piston (10) et le second piston (11), cette première chambre communiquant avec un premier branchement (4) réalisé sur le boîtier, en partie haute et avec un second branchement (5) réalisé en partie basse, et de façon adjacente au second piston (11) du côté opposé à la première chambre de pression (17), il y a une seconde chambre de pression (18) avec un troisième branchement (6) réalisé en partie haute du boîtier et un quatrième branchement (7) réalisé en partie basse, et lorsque la pédale de frein (23) est enfoncée, il n'y a pas de liaison hydraulique entre le premier (4) et second (5) branchement ni entre le troisième (6) et le quatrième (7) branchement,
- un réservoir (3a) de liquide hydraulique, associé au premier (4) et au troisième (6) branchement du maître cylindre (3),
- une installation de pompe (75) en forme de pompe basse pression (76, 76a) ayant un branchement d'aspiration relié au réservoir (3a) et un branchement de pression relié en permanence à un circuit de frein (I), pour aspirer le liquide du réservoir (3a) et le fournir au circuit de frein (I),
- plusieurs cylindres de frein de roue (12, 13, 14, 15) associés aux roues, ces cylindres étant répartis en un premier groupe et un second groupe,
- des premiers dispositifs de soupape de modulation de pression de frein (42, 43) entre le second branchement (5) du maître cylindre (3) et le premier groupe de cylindres de frein de roue (12, 13),
- des seconds dispositifs de soupape de modulation de pression de frein (44, 45) montés entre le quatrième branchement (7) du maître cylindre (3) et le second groupe de cylindres de frein de roue (14, 15), et
- un appareil de commande (57) pour exécuter un mode de freinage automatique avec mise en oeuvre de l'installation de pompe (75),
- pour chaque circuit de frein (I, II), une soupape de commutation (64, 65) commandée par l'appareil de commande (57), entre le maître cylindre (3) et les dispositifs de soupape de modulation de pression de frein (42, 43, 44, 45) pour freiner automatiquement,
- des pompes de refoulement (40, 41) susceptibles d'être mises en oeuvre pour le mode anti-blocage, associées aux premier et second dispositifs de soupape de modulation de pression de frein (42, 43, 44, 45), le côté aspiration des pompes de refoulement (40, 41) pouvant être relié par des distributeurs à tiroir (68, 69) avec le second branchement (5) et le quatrième branchement (7) du maître cylindre (3),
caractérisée en ce que
- le branchement de pression de l'installation de pompe (75), composée d'une seule pompe basse pression (76, 76a), entre le second branchement (5) du maître cylindre (3) et la soupape de commutation (64) associée à celui-ci, est relié en permanence au circuit de frein (I) associé au second branchement (5),
- lorsque la pédale de frein (23) n'est pas actionnée, en mode de freinage automatique, entre le réservoir (3a) et le second branchement (5) du maître cylindre (3), il y a au moins un point d'étranglement (25 ; 33, 34 ; 36, 37, 136, 139 ; 174) gênant l'écoulement, de façon que lorsque l'installation de pompe (75) est mise en oeuvre, la pompe de refoulement (40) du circuit de frein (I) relié en permanence à l'unique pompe basse pression (76, 76a) dispose de la pression d'alimentation,
- et en plus la pompe de refoulement (41) du circuit de frein (II) associé au quatrième branchement du maître cylindre, dispose indirectement de la pression d'alimentation par sollicitation du second piston (11), au niveau de la pression réhaussée par au moins l'unique point d'étranglement réduisant l'écoulement,
- ce point d'étranglement gênant l'écoulement étant formé par un perçage de reniflard (25) reliant l'alésage (17) du boîtier (8) recevant le premier piston coulissant (10) avec le premier branchement (4), et
- le perçage de reniflard (25) étant suffisamment étroit pour réhausser la pression d'alimentation.

2. Installation hydraulique de freinage de véhicule (2) pour freiner par actionnement d'une pédale et de manière automatique, comprenant
- un maître cylindre (3) composé d'un boîtier muni d'un alésage recevant un premier piston coulissant (10) qui est déplacé en fonction de l'enfoncement d'une pédale de frein (23) et un second piston (11) sur le côté du premier piston (10) opposé à la pédale de frein (23), une première chambre de pression (17) entre le premier piston (10) et le second piston (11), cette première chambre communiquant avec un premier branchement (4) réalisé sur le boîtier, en partie haute et avec un second branchement (5) réalisé en partie basse, et de façon adjacente au second piston (11) du côté opposé à la première chambre de pression (17), il y a une seconde chambre de pression (18) avec un troisième branchement (6) réalisé en partie haute du boîtier et un quatrième branchement (7) réalisé en partie basse, et lorsque la pédale de frein (23) est enfoncée, il n'y a pas de liaison hydraulique entre le premier (4) et second (5) branchement ni entre le troisième (6) et le quatrième (7) branchement,
- un réservoir (3a) de liquide hydraulique, associé au premier (4) et au troisième (6) branchement du maître cylindre (3),
- une installation de pompe (75) en forme de pompe basse pression (76, 76a) ayant un branchement d'aspiration relié au réservoir (3a) et un branchement de pression relié en permanence à un circuit de frein (I), pour aspirer le liquide du réservoir (3a) et le fournir au circuit de frein (I),
- plusieurs cylindres de frein de roue (12, 13, 14, 15) associés aux roues, ces cylindres étant répartis en un premier groupe et un second groupe,
- des premiers dispositifs de soupape de modulation de pression de frein (42, 43) entre le second branchement (5) du maître cylindre (3) et le premier groupe de cylindres de frein de roue (12, 13),
- des seconds dispositifs de soupape de modulation de pression de frein (44, 45) montés entre le quatrième branchement (7) du maître cylindre (3) et le second groupe de cylindres de frein de roue (14, 15), et
- un appareil de commande (57) pour exécuter un mode de freinage automatique avec mise en oeuvre de l'installation de pompe (75),
- pour chaque circuit de frein (I, II), une soupape de commutation (64, 65) commandée par l'appareil de commande (57), entre le maître cylindre (3) et les dispositifs de soupape de modulation de pression de frein (42, 43, 44, 45) pour freiner automatiquement,
- des pompes de refoulement (40, 41) susceptibles d'être mises en oeuvre pour le mode anti-blocage, associées aux premier et second dispositifs de soupape de modulation de pression de frein (42, 43, 44, 45), le côté aspiration des pompes de refoulement (40, 41) pouvant être relié par des distributeurs à tiroir (68, 69) avec le second branchement (5) et le quatrième branchement (7) du maître cylindre (3),
caractérisée en ce que
- le branchement de pression de l'installation de pompe (75), composée d'une seule pompe basse pression (76, 76a), entre le second branchement (5) du maître cylindre (3) et la soupape de commutation (64) associée à celui-ci, est relié en permanence au circuit de frein (I) associé au second branchement (5),
- lorsque la pédale de frein (23) n'est pas actionnée, en mode de freinage automatique, entre le réservoir (3a) et le second branchement (5) du maître cylindre (3), il y a au moins un point d'étranglement (25 ; 33, 34 ; 36, 37, 136, 139 ; 174) gênant l'écoulement, de façon que lorsque l'installation de pompe (75) est mise en oeuvre, la pompe de refoulement (40) du circuit de frein (I) relié en permanence à l'unique pompe basse pression (76, 76a) dispose de la pression d'alimentation,
- et en plus la pompe de refoulement (41) du circuit de frein (II) associé au quatrième branchement du maître cylindre, dispose indirectement de la pression d'alimentation par sollicitation du second piston (11), au niveau de la pression réhaussée par au moins l'unique point d'étranglement réduisant l'écoulement,
- ce point d'étranglement gênant l'écoulement étant formé par une surface de siège (33) et un organe d'obturation (34) d'un clapet central (132) du premier piston (10),
- la distance entre la surface formant siège (33) et l'organe d'obturation (34) étant réglée suffisamment étroitement pour que lorsque l'installation de pompe (75) est mise en oeuvre, on dispose de la pression d'alimentation.

3. Installation hydraulique de freinage de véhicule (2) pour freiner par actionnement d'une pédale et de manière automatique, comprenant
- un maître cylindre (3) composé d'un boîtier muni d'un alésage recevant un premier piston coulissant (10) qui est déplacé en fonction de l'enfoncement d'une pédale de frein (23) et un second piston (11) sur le côté du premier piston (10) opposé à la pédale de frein (23), une première chambre de pression (17) entre le premier piston (10) et le second piston (11), cette première chambre communiquant avec un premier branchement (4) réalisé sur le boîtier, en partie haute et un second branchement (5) réalisé en partie basse,
et de façon adjacente au second piston (11) du côté opposé à la première chambre de pression (17), il y a une seconde chambre de pression (18) avec un troisième branchement (6) réalisé en partie haute du boîtier et un quatrième branchement (7) réalisé en partie basse, et lorsque la pédale de frein (23) est enfoncée, il n'y a pas de liaison hydraulique entre le premier (4) et le second (5) branchement ni entre le troisième (6) et le quatrième (7) branchement,
- un réservoir (3a) de liquide hydraulique, associé au premier (4) et au troisième (6) branchement du maître cylindre (3),
- une installation de pompe (75) en forme de pompe basse pression (76, 76a) ayant un branchement d'aspiration relié au réservoir (3a) et un branchement de pression relié en permanence à un circuit de frein (I), pour aspirer le liquide du réservoir (3a) et le fournir au circuit de frein (I),
- plusieurs cylindres de frein de roue (12, 13, 14, 15) associés aux roues, ces cylindres étant répartis en un premier groupe et un second groupe,
- des premiers dispositifs de soupape de modulation de pression de frein (42, 43) entre le second branchement (5) du maître cylindre (3) et le premier groupe de cylindres de frein de roue (12, 13),
- des seconds dispositifs de soupape de modulation de pression de frein (44, 45) montés entre le quatrième branchement (7) du maître cylindre (3) et le second groupe de cylindres de frein de roue (14, 15), et
- un appareil de commande (57) pour exécuter un mode de freinage automatique avec mise en oeuvre de l'installation de pompe (75) et
- pour chaque circuit de frein (I, II), une soupape de commutation (64, 65) commandée par l'appareil de commande (57), entre le maître cylindre (3) et les dispositifs de soupape de modulation de pression de frein (42, 43, 44, 45) pour freiner automatiquement,
- des pompes de refoulement (40, 41) susceptibles d'être mises en oeuvre pour le mode anti-blocage étant associées aux premier et second dispositifs de soupape de modulation de pression de frein (42, 43, 44, 45),
- le côté aspiration des pompes de refoulement (40, 41) pouvant être relié par des distributeurs à tiroir (68, 69) avec le second branchement (5) et le quatrième branchement (7) du maître cylindre (3),
caractérisée en ce que
- le branchement de pression de l'installation de pompe (75) composée d'une seule pompe basse pression (76, 76a), entre le second branchement (5) du maître cylindre (3) et la soupape de commutation (64) associée à celui-ci, est relié en permanence au circuit de frein (I) associé au second branchement (5),
- lorsque la pédale de frein (23) n'est pas actionnée, en mode de freinage automatique, entre le réservoir (3a) et le second branchement (5) du maître cylindre (3), il y a au moins un point d'étranglement (25 ; 33, 34 ; 36, 37, 136, 139 ; 174) gênants l'écoulement, de façon que lorsque l'installation de pompe (75) est mise en oeuvre, la pompe de refoulement (40) du circuit de frein (I) relié en permanence à l'unique pompe basse pression (76, 76a) dispose de la pression d'alimentation,
- et en plus la pompe de refoulement (41) du circuit de frein (II) associé au quatrième branchement du maître cylindre, dispose indirectement de la pression d'alimentation par sollicitation du second piston (11), au niveau de la pression réhaussée par au moins l'unique point d'étranglement réduisant l'écoulement,
- ce point d'étranglement gênant l'écoulement étant formé entre un perçage longitudinal (37) et un poussoir de commande (36) coulissant dans celui-ci, appartenant à un clapet central (132) associé au premier piston (10), avec une surface de siège (31) adjacente au perçage longitudinal (37) et un organe d'obturation (35) porté par le poussoir de commande.

4. Installation de freinage de véhicule selon l'une quelconque des revendications 1 à 3,
caractérisée en ce que
- la pompe (76a) en forme de pompe basse pression comprend un boîtier (102), un couvercle de boîtier (103), une entrée (90) et une sortie (91),
- à l'intérieur du boîtier (102, 103), il y a au moins un canal de retour (92) reliant la sortie (91) à l'entrée (90), canal dont la section est dimensionnée pour fonctionner comme organe d'étranglement (84a), qui par re-circulation du liquide de frein à travers l'organe d'étranglement (84a), limite la pression à une valeur voulue, en réduisant le débit de liquide hydraulique, à la sortie (91) de la pompe (76a) réalisée comme pompe basse pression, et pour une viscosité donnée du liquide hydraulique ainsi que pour une vitesse de rotation d'entraînement prédéterminée de la pompe (76a) réalisée comme pompe basse pression, et
- entre la sortie (91) de la pompe (76a) réalisée comme pompe basse pression et le second branchement (5) du maître cylindre (3), il y a un clapet (78, 94) traversé par le fluide en direction du second branchement.

5. Installation de freinage de véhicule selon la revendication 4,
caractérisée en ce que
- la pompe (76a) comporte des éléments de pompe rotatifs (100, 101) ayant des dents (129) et des intervalles de dents (130),
- sur la face frontale des éléments de pompe (100, 101), une certaine surface (112) du boîtier (102) est formée avec une première cavité (115) du côté de l'aspiration reliée à l'entrée (90) et une seconde cavité (116) reliée à la sortie (91), et
- le canal de retour (92) au moins unique part de la seconde cavité (116) du côté de la pression en direction de la première cavité (115) du côté de l'aspiration, ce canal de retour (92) formant un organe d'étranglement (84a) par le choix du jeu axial (131) entre la surface (112) et au moins un élément de pompe rotatif (100, 101).

6. Installation de freinage de véhicule selon la revendication 5,
caractérisée par
un premier élément de pompe rotatif en forme de pignon denté (100) et un second élément de pompe rotatif en forme de couronne dentée intérieure (101), avec un certain nombre d'intervalles de dents (130) supérieur de 1 au nombre de dents (129) du pignon denté (100), au moins un canal de retour (92) passant le long de l'un des deux éléments de pompe (100, 101).

7. Installation de freinage de véhicule selon la revendication 4,
caractérisée en ce que
le clapet (78), susceptible d'être traversé par le liquide, est réalisé comme clapet anti-retour comportant un ressort obturateur (93).

8. Installation de frein de véhicule selon la revendication 4,
caractérisée en ce que
le clapet (94), traversé par le liquide, est réalisé sous la forme d'une soupape de régulation à pression différentielle s'ouvrant dans une direction.

9. Installation de frein de véhicule selon la revendication 4,
caractérisée en ce que
la pompe (76a) réalisée comme pompe basse pression comporte un moteur (77) et pour réunir la pompe (76a) réalisée comme pompe basse pression et le moteur (77) sous la forme d'un seul ensemble, le couvercle (103) du boîtier comporte un prolongement (119) tourné vers le moteur (77).

10. Installation, hydraulique de freinage de véhicule (2) pour freiner par actionnement d'une pédale et de manière automatique, comprenant
- un maître cylindre (3) composé d'un boîtier muni d'un alésage recevant un premier piston coulissant (10) qui est déplacé en fonction de l'enfoncement d'une pédale de frein (23) et un second piston (11) sur le côté du premier piston (10) opposé à la pédale de frein (23), une première chambre de pression (17) entre le premier piston (10) et le second piston (11), cette première chambre communiquant avec un premier branchement (4) réalisé sur le boîtier, en partie haute et avec un second branchement (5) réalisé en partie basse, et de façon adjacente au second piston (11) du côté opposé à la première chambre de pression (17), il y a une seconde chambre de pression (18) avec un troisième branchement (6) réalisé en partie haute du boîtier et un quatrième branchement (7) réalisé en partie basse, et lorsque la pédale de frein (23) est enfoncée, il n'y a pas de liaison hydraulique entre le premier (4) et le second (5) branchement ni entre le troisième (6) et le quatrième (7) branchement,
- un réservoir (3a) de liquide hydraulique, associé au premier (4) et au troisième (6) branchement du maître cylindre (3),
- une installation de pompe (75) en forme de pompe basse pression (76, 76a) ayant un branchement d'aspiration relié au réservoir (3a) et un branchement de pression relié en permanence à un circuit de frein (I), pour aspirer le liquide du réservoir (3a) et le fournir au circuit de frein (I),
- plusieurs cylindres de frein de roue (12, 13, 14, 15) associés aux roues, ces cylindres étant répartis en un premier groupe et un second groupe,
- des premiers dispositifs de soupape de modulation de pression de frein (42, 43) entre le second branchement (5) du maître cylindre (3) et le premier groupe de cylindres de frein de roue (12, 13),
- des seconds dispositifs de soupape de modulation de pression de frein (44, 45) montés entre le quatrième branchement (7) du maître cylindre (3) et le second groupe de cylindres de frein de roue (14, 15), et
- un appareil de commande (57) pour exécuter un mode de freinage automatique avec mise en oeuvre de l'installation de pompe (75),
- pour chaque circuit de frein (I, II), une soupape de commutation (64, 65) commandée par l'appareil de commande (57), entre le maître cylindre (3) et les dispositifs de soupape de modulation de pression de frein (42, 43, 44, 45) pour freiner automatiquement,
- des pompes de refoulement (40, 41) susceptibles d'être mises en oeuvre pour le mode anti-blocage, associées aux premier et second dispositifs de soupape de modulation de pression de frein (42, 43, 44, 45), le côté aspiration des pompes de refoulement (40, 41) pouvant être relié par des distributeurs à tiroir (68, 69) avec le second branchement (5) et le quatrième branchement (7) du maître cylindre (3),
caractérisée en ce que
- le branchement de pression de l'installation de pompe (75), composée d'une seule pompe basse pression (76, 76a), entre le second branchement (5) du maître cylindre (3) et la soupape de commutation (64) associée à celui-ci, est relié en permanence au circuit de frein (I) associé au second branchement (5),
- lorsque la pédale de frein (23) n'est pas actionnée, en mode de freinage automatique, entre le réservoir (3a) et le second branchement (5) du maître cylindre (3), il y a au moins un point d'étranglement (25 ; 33, 34 ; 36, 37, 136, 139 ; 174) gênant l'écoulement, de façon que lorsque l'installation de pompe (75) est mise en oeuvre, la pompe de refoulement (40) du circuit de frein (I) relié en permanence à l'unique pompe basse pression (76, 76a) dispose de la pression d'alimentation,
- et en plus la pompe de refoulement (41) du circuit de frein (II) associé au quatrième branchement du maître cylindre, dispose indirectement de la pression d'alimentation par sollicitation du second piston (11), au niveau de la pression réhaussée par au moins l'unique point d'étranglement réduisant l'écoulement,
- le point d'étranglement (136) qui forme le point étroit gênant l'écoulement est en forme de cuvette faisant corps avec un bord périphérique libre rejoignant une bride radiale (137),
cette bride radiale (137) et le fond (138) de l'élément d'étranglement (136) en forme de cuvette étant tournés vers le réservoir (3a) et
l'élément d'étranglement (136) est monté dans le premier branchement (4) du maître cylindre (3) et est fermé de manière étanche avec un joint torique (140) placé sous la bride radiale (137) de l'élément d'étranglement (136), l'élément d'étranglement (136) étant maintenu enfoncé au niveau de sa bride radiale (137) par un ajutage de branchement (141) du réservoir (3a).

11. Installation, hydraulique de freinage de véhicule (2) pour freiner par actionnement d'une pédale et de manière automatique, comprenant
- un maître cylindre (3) composé d'un boîtier muni d'un alésage recevant un premier piston coulissant (10) qui est déplacé en fonction de l'enfoncement d'une pédale de frein (23) et un second piston (11) sur le côté du premier piston (10) opposé à la pédale de frein (23), une première chambre de pression (17) entre le premier piston (10) et le second piston (11), cette première chambre communiquant avec un premier branchement (4) réalisé sur le boîtier, en partie haute et avec un second branchement (5) réalisé en partie basse, et de façon adjacente au second piston (11) du côté opposé à la première chambre de pression (17), il y a une seconde chambre de pression (18) avec un troisième branchement (6) réalisé en partie haute du boîtier et un quatrième branchement (7) réalisé en partie basse, et lorsque la pédale de frein (23) est enfoncée, il n'y a pas de liaison hydraulique entre le premier (4) et le second (5) branchement ni entre le troisième (6) et le quatrième (7) branchement,
- un réservoir (3a) de liquide hydraulique, associé au premier (4) et au troisième (6) branchement du maître cylindre (3),
- une installation de pompe (75) en forme de pompe basse pression (76, 76a) ayant un branchement d'aspiration relié au réservoir (3a) et un branchement de pression relié en permanence à un circuit de frein (I), pour aspirer le liquide du réservoir (3a) et le fournir au circuit de frein (I),
- plusieurs cylindres de frein de roue (12, 13, 14, 15) associés aux roues, ces cylindres étant répartis en un premier groupe et un second groupe,
- des premiers dispositifs de soupape de modulation de pression de frein (42, 43) entre le second branchement (5) du maître cylindre (3) et le premier groupe de cylindres de frein de roue (12, 13),
- des seconds dispositifs de soupape de modulation de pression de frein (44, 45) montés entre le quatrième branchement (7) du maître cylindre (3) et le second groupe de cylindres de frein de roue (14, 15), et
- un appareil de commande (57) pour exécuter un mode de freinage automatique avec mise en oeuvre de l'installation de pompe (75),
- pour chaque circuit de frein (I, II), une soupape de commutation (64, 65) commandée par l'appareil de commande (57), entre le maître cylindre (3) et les dispositifs de soupape de modulation de pression de frein (42, 43, 44, 45) pour freiner automatiquement,
- des pompes de refoulement (40, 41) susceptibles d'être mises en oeuvre pour le mode anti-blocage, associées aux premier et second dispositifs de soupape de modulation de pression de frein (42, 43, 44, 45), le côté aspiration des pompes de refoulement (40, 41) pouvant être relié par des distributeurs à tiroir (68, 69) avec le second branchement (5) et le quatrième branchement (7) du maître cylindre (3),
caractérisée en ce que
- le branchement de pression de l'installation de pompe (75), composée d'une seule pompe basse pression (76, 76a), entre le second branchement (5) du maître cylindre (3) et la soupape de commutation (64) associée à celui-ci, est relié en permanence au circuit de frein (I) associé au second branchement (5),
- lorsque la pédale de frein (23) n'est pas actionnée, en mode de freinage automatique, entre le réservoir (3a) et le second branchement (5) du maître cylindre (3), il y a au moins un point d'étranglement (25 ; 33, 34 ; 36, 37, 136, 139 ; 174) gênant l'écoulement, de façon que lorsque l'installation de pompe (75) est mise en oeuvre, la pompe de refoulement (40) du circuit de frein (I) relié en permanence à l'unique pompe basse pression (76, 76a) dispose de la pression d'alimentation,
- et en plus la pompe de refoulement (41) du circuit de frein (II) associé au quatrième branchement du maître cylindre, dispose indirectement de la pression d'alimentation par sollicitation du second piston (11), au niveau de la pression réhaussée par au moins l'unique point d'étranglement réduisant l'écoulement,
- la face frontale du premier piston (10) tournée vers la première chambre de pression (17) comporte un organe d'étranglement (147) sous la forme d'un disque percé constituant le point d'étranglement gênant l'écoulement et le disque percé fait partie d'un clapet anti-retour (143),
le clapet anti-retour (143) s'ouvrant dans la direction allant du réservoir (3a) vers le second branchement (5) du boîtier du maître cylindre (3).

## Revendications (Revendications pour l'(les) Etat(s) contractant(s) suivant(s): SE)

1. Installation hydraulique de freinage de véhicule (2) pour freiner par actionnement d'une pédale et de manière² automatique, comprenant
- un maître cylindre (3) composé d'un boîtier muni d'un alésage recevant un premier piston coulissant (10) qui est déplacé en fonction de l'enfoncement d'une pédale de frein (23) et un second piston (11) sur le côté du premier piston (10) opposé à la pédale de frein (23), une première chambre de pression (17) entre le premier piston (10) et le second piston (11), cette première chambre communiquant avec un premier branchement (4) réalisé sur le boîtier, en partie haute et avec un second branchement (5) réalisé en partie basse, et de façon adjacente au second piston (11) du côté opposé à la première chambre de pression (17), il y a une seconde chambre de pression (18) avec un troisième branchement (6) réalisé en partie haute du boîtier et un quatrième branchement (7) réalisé en partie basse,
- et lorsque la pédale de frein (23) est enfoncée, il n'y a pas de liaison hydraulique entre le premier (4) et second (5) branchement ni entre le troisième (6) et le quatrième (7) branchement,
- un réservoir (3a) de liquide hydraulique, associé au premier (4) et au troisième (6) branchement du maître cylindre (3),
- une installation de pompe (75) en forme de pompe basse pression (76, 76a) ayant un branchement d'aspiration relié au réservoir (3a) et un branchement de pression relié en permanence à un circuit de frein (I), pour aspirer le liquide du réservoir (3a) et le fournir au circuit de frein (I),
- plusieurs cylindres de frein de roue (12, 13, 14, 15) associés aux roues, ces cylindres étant répartis en un premier groupe et un second groupe,
- des premiers dispositifs de soupape de modulation de pression de frein (42, 43) entre le second branchement (5) du maître cylindre (3) et le premier groupe de cylindres de frein de roue (12, 13),
- des seconds dispositifs de soupape de modulation de pression de frein (44, 45) montés entre le quatrième branchement (7) du maître cylindre (3) et le second groupe de cylindres de frein de roue (14, 15), et
- un appareil de commande (57) pour exécuter un mode de freinage automatique avec mise en oeuvre de l'installation de pompe (75),
- pour chaque circuit de frein (I, II), une soupape de commutation (64, 65) commandée par l'appareil de commande (57), entre le maître cylindre (3) et les dispositifs de soupape de modulation de pression de frein (42, 43, 44, 45) pour freiner automatiquement,
- des pompes de refoulement (40, 41) susceptibles d'être mises en oeuvre pour le mode anti-blocage, associées aux premier et second dispositifs de soupape de modulation de pression de frein (42, 43, 44, 45), le côté aspiration des pompes de refoulement (40, 41) pouvant être relié par des distributeurs à tiroir (68, 69) avec le second branchement (5) et le quatrième branchement (7) du maître cylindre (3),
caractérisée en ce que
- le branchement de pression de l'installation de pompe (75), composée d'une seule pompe basse pression (76, 76a), entre le second branchement (5) du maître cylindre (3) et la soupape de commutation (64) associée à celui-ci, est relié en permanence au circuit de frein (I) associé au second branchement (5),
- lorsque la pédale de frein (23) n'est pas actionnée, en mode de freinage automatique, entre le réservoir (3a) et le second branchement (5) du maître cylindre (3), il y a au moins un point d'étranglement (25 ; 33, 34 ; 36, 37, 136, 139 ; 174) gênant l'écoulement, de façon que lorsque l'installation de pompe (75) est mise en oeuvre, la pompe de refoulement (40) du circuit de frein (I) relié en permanence à l'unique pompe basse pression (76, 76a) dispose de la pression d'alimentation,
- et en plus la pompe de refoulement (41) du circuit de frein (II) associé au quatrième branchement du maître cylindre, dispose indirectement de la pression d'alimentation par sollicitation du second piston (11), au niveau de la pression réhaussée par au moins l'unique point d'étranglement réduisant l'écoulement.

2. Installation de frein de véhicule selon la revendication 1,
caractérisée en ce qu'
au moins un point d'étranglement gênant l'écoulement est formé par un perçage de reniflard (25), fonctionnant comme organe d'étranglement qui se trouve entre le perçage (9) du boîtier (8) et le premier branchement (4).

3. Installation de frein de véhicule selon la revendication 1,
caractérisée en ce que
le point d'étranglement gênant l'écoulement est formé par une surface de siège (33) et un organe d'obturation (34) d'un clapet central (32) du premier piston.

4. Installation de frein de véhicule selon la revendication 1,
caractérisée en ce que
le point d'étranglement gênant l'écoulement est formé entre un perçage longitudinal (37) et un poussoir de commande (36) coulissant dans celui-ci et appartenant à un clapet central (32) ayant une surface de siège (33) adjacente au perçage longitudinal (37) et un organe d'obturation (35) porté par le poussoir de commande (36) en étant associé au premier piston.

5. Installation de frein de véhicule selon l'une quelconque des revendications 1 à 5,
caractérisée en ce que
la pompe (76a) réalisée sous la forme d'une pompe basse pression comprend un boîtier (102), un couvercle de boîtier (103), une entrée (90) et une sortie (91),
à l'intérieur du boîtier (102, 103), il y a au moins un canal de retour (92) reliant la sortie (91) à l'entrée (90), la section de ce canal étant dimensionnée pour fonctionner comme un organe d'étranglement (84a), de telle sorte que l'écoulement du liquide sous pression est gêné ou ne peut sortir de la pompe (76a) en forme de pompe basse pression par sa sortie (91), et que pour une viscosité donnée du liquide sous pression ainsi que pour une vitesse de rotation et d'entraînement prédéterminée de la pompe (76a) réalisée comme pompe basse pression, le retour de liquide sous pression à travers l'organe d'étranglement (84a), limite la pression à une valeur prévue, et
entre la sortie (91) de la pompe (76a) réalisée comme pompe basse pression et le second branchement (5) du maître cylindre (3), il y un clapet (78, 94) pouvant être traversé dans cette direction.

6. Installation de frein de véhicule selon la revendication 5,
caractérisée en ce que
la pompe (76a) comporte des éléments de pompe rotatifs (100, 101) ayant des dents (129) et des intervalles de dents (130),
sur la face frontale des éléments de pompe (100, 101), une certaine surface (112) du boîtier (102) est formée avec une première cavité (115) du côté de l'aspiration reliée à l'entrée (90) et une seconde cavité (116) reliée à la sortie (91), et
le canal de retour (92) au moins unique part de la seconde cavité (116) du côté de la pression en direction de la première cavité (115) du côté de l'aspiration, ce canal de retour (92) formant un organe d'étranglement (84a) par le choix du jeu axial (131) entre la surface (112) et au moins un élément de pompe rotatif (100, 101).

7. Installation de frein de véhicule selon la revendication 6,
caractérisée en ce que
un premier élément de pompe rotatif en forme de pignon denté (100) et un second élément de pompe rotatif en forme de couronne dentée intérieure (101), avec un certain nombre d'intervalles de dents (130) supérieur de 1 au nombre de dents (129) du pignon denté (100), au moins un canal de retour (92) passant le long de l'un des deux éléments de pompe (100, 101).

8. Installation de frein de véhicule selon la revendication 5,
caractérisée en ce que
le clapet (78), susceptible d'être traversé par le liquide, est réalisé comme clapet anti-retour comportant un ressort obturateur (93).

9. Installation de frein de véhicule selon la revendication 5,
caractérisée en ce que
le clapet (94), traversé par le liquide, est réalisé sous la forme d'une soupape de régulation à pression différentielle s'ouvrant dans une direction.

10. Installation de frein de véhicule selon la revendication 5,
caractérisée en ce que
la pompe (76a) réalisée comme pompe basse pression comporte un moteur (77) et pour réunir la pompe (76a) réalisée comme pompe basse pression et le moteur (77) sous la forme d'un seul ensemble, le couvercle (103) du boîtier comporte un prolongement (119) tourné vers le moteur (77).

11. Installation de frein de véhicule selon la revendication 1,
caractérisée en ce que
le maître cylindre (3) comporte un point d'étranglement gênant l'écoulement, en forme d'élément d'étranglement (136, 139) placé dans son premier branchement (4).

12. Installation de frein de véhicule selon la revendication 1,
caractérisée en ce que
le premier piston (10) comporte comme point d'étranglement gênant l'écoulement, un élément d'étranglement (147) prévu dans sa face frontale tournée vers la première chambre de pression (17).

13. Installation de frein de véhicule selon l'une quelconque des revendications précédentes,
caractérisée en ce que
un clapet anti-retour (143) est branché en parallèle du point d'étranglement gênant l'écoulement (139) et peut être traversé par le liquide dans le sens allant du réservoir (3a) vers la première chambre de pression (17).
